# EUROPÄISCHE PATENTSCHRIFT

(11) **EP 3 988 818 B1**
(45) Veröffentlichungstag und Bekanntmachung des Hinweises auf die Patenterteilung: **05.03.2025**
(21) Anmeldenummer: 21020522.5
(22) Anmeldetag: 22.10.2021
(51) Int. Cl.: F16H 55/30, B62M 9/10

(54) **STÄRKER VERSCHLEISSFESTE FAHRRADRITZELPAARUNG UND RITZELKASSETTE MIT EINER SOLCHEN**
HEAVY WEAR RESISTANT PINION PAIRING AND PINION CARTRIDGE INCLUDING THE SAME
ACCOUPLEMENT DE PIGNONS POUR BICYCLETTE À RÉSISTANCE ÉLEVÉE À L'USURE ET ENSEMBLE DE JEU DE PIGNONS DOTÉ D'UN TEL ACCOUPLEMENT

(30) Priorität: 26.10.2020 DE 102020128138; 20.11.2020 DE 102020130825; 21.01.2021 DE 102021101223
(43) Veröffentlichungstag der Anmeldung: 27.04.2022
(73) Patentinhaber: SRAM Deutschland GmbH, 97424 Schweinfurt (DE)
(72) Erfinder: Braedt, Henrik, 97456 Dittelbrunn/OT Hambach (DE); Heyna, Sebastian, 97456 Dittelbrunn/OT Hambach (DE)

(56) Entgegenhaltungen:
- DE-A1- 102018 133 324
- US-A1- 2019 359 284

## Beschreibung

Die vorliegende Erfindung betrifft eine Fahrrad-Hinterradritzelpaarung zum kämmenden kraftübertragenden Formschlusseingriff mit einer Fahrrad-Rollenkette. Die Hinterradritzelpaarung ist um eine Ritzelachse drehbar, wobei die Ritzelachse eine längs der Ritzelachse verlaufende axiale Richtung, eine orthogonal zur Ritzelachse verlaufende radiale Richtung und eine um die Ritzelachse umlaufende Umfangsrichtung definiert, wobei die Hinterradritzelpaarung ein größeres Ritzel und ein mit diesem zur gemeinsamen schlupffreien Rotation um die die Ritzelachse verbundenes, koaxiales, dem größeren Ritzel axial unmittelbar benachbartes kleineres Ritzel umfasst.

Aus der EP 1 188 658 B1 ist eine Hinterradritzelkassette bekannt, welche sieben Ritzel umfasst. Die Zähneabstufung der Ritzel vom kleinsten, äußersten Ritzel bis zum größten, innersten Ritzel beträgt 11 - 13 - 15 - 17 - 21 - 25 - 29 - 33. Die bekannte Ritzelkassette weist also nur Ritzel mit ungeradzahligen Zähnezahlen auf. Das äußerste Ritzel ist dabei das am weitesten von der zur Ritzelachse orthogonalen Fahrradlängsmittelebene eines die Ritzelkassette tragenden Fahrrads entfernte Ritzel. Das innerste Ritzel ist dementsprechend das der Fahrradlängsmittelebene nächstgelegene Ritzel.

Am Hinterradritzel in kämmendem Eingriff umlaufende Fahrrad-Rollenketten mit einer Mehrzahl von in Kettenlängsrichtung mit einem vorbestimmten Ketten-Teilungsabstand voneinander entfernt angeordneten Kettenrollen und mit die Kettenrollen verbindenden Kettenlaschen sind ebenfalls bekannt. Die Kettenglieder der bekannten und üblichen Fahrrad-Rollenketten werden durch Laschenpaare gebildet, wobei in Kettenlängsrichtung, die wegen der geschlossen umlaufenden Ausbildung einer Fahrrad-Rollenkette auch eine Kettenumlaufrichtung ist, Innenlaschenpaare und Außenlaschenpaare alternierend aufeinanderfolgen. Endbereiche von Außenlaschenpaaren überlappen dabei in an sich bekannter Weise Endbereiche von Innenlaschenpaaren, sodass zwischen einem Endbereich eines Außenlaschenpaars und der zwischen diesem Endbereich gehaltenen Kettenrolle die Endbereiche eines Innenlaschenpaars angeordnet sind, und zwar an jeder der beiden Stirnseiten der Kettenrolle je ein Innenlaschen-Endbereich. Die in Kettenbreitenrichtung, also parallel zu den Rollenachsen der Kettenrollen, zu messende lichte Weite ist daher zwischen zwei Innenlaschen eines Innenlaschenpaars kleiner als die lichte Weite zwischen zwei Außenlaschen eines Außenlaschenpaars. Die lichte Weite eines Laschenpaares definiert den für den Eingriff eines Zahns eines Ritzels mit der Rollenkette zur Verfügung stehenden Eingriffsraum. An der Rollenkette folgen folglich als Kettengliederarten durch Innenlaschenpaare definierte schmale und durch Außenlaschenpaare definierte breite Kettenglieder alternierend aufeinander. Aufgrund der in Kettenumlaufrichtung alternierend abwechselnden Innen- und Außenlaschen-Kettenglieder, hat eine Fahrrad-Rollenkette stets eine gerade Anzahl an Kettengliedern. Die Fahrrad-Rollenkette ist nachfolgend auch nur vereinfacht als "Fahrradkette" oder "Kette" bezeichnet.

Der Einfachheit halber sind nachfolgend Ritzel mit ungeradzahligen Zähnezahlen auch als "ungeradzahlige Ritzel" und dementsprechend Ritzel mit geradzahligen Zähnezahlen als "geradzahlige Ritzel" bezeichnet.

Nachteilig an ungeradzahligen Ritzeln ist, dass das sich mit jedem Umlauf der Fahrradkette die Eingriffszuordnung ein und desselben Zahns zu einer Kettengliederart ändert. Ein und derselbe Zahn gelangt daher in aufeinanderfolgenden Umläufen der Fahrradkette abwechselnd in Eingriff mit einem schmalen Innenlaschen-Kettenglied und mit einem breiten Außenlaschen-Kettenglied. Jeder Zahn eines ungeradzahligen Ritzels muss daher so ausgebildet sein, dass er in ein schmales Kettenglied eingreifen kann.

Eine körperliche Schwächung des Ritzels kann sich aus den Schaltbedingungen ergeben, die einzuhalten sind, um die Fahrradkette von dem Ritzel zum nächst kleineren Ritzel umzulegen. Dieses Umlegen geschieht, wie weithin bekannt, an der Hinterradkassette durch einen Umwerfer, dessen die Fahrradkette umlenkend führende Kettenführungsrolle vom Fahrer eines Fahrrads durch entsprechende Kraftübertragungsmechanismen, wie beispielsweise mechanisch durch einen Seilzug oder elektromotorisch durch ein "Shift-by-Wire"-System, komplanar mit dem die Kette nach dem Schaltvorgang übernehmenden Ritzel angeordnet wird. Die Kette wird so von dem aktuell kettenführenden Ritzel auf das künftig kettenführende Ritzel umgelegt.

An den Ritzeln sind auf der zum jeweils nächstkleineren Ritzel weisenden Stirnseite Vertiefungsformationen in Gestalt von flächigen Vertiefungen der Stirnseite ausgebildet, in welche Laschen, in der Regel Außenlaschen, der Fahrradkette wenigstens abschnittsweise eintauchen können, um die Kette axial nah an das größere Ritzel heranführen zu können und so den Schaltvorgang zu unterstützen. Dabei gibt es Hochschalt-Vertiefungsformationen, welche für einen Hochschaltvorgang das Umlegen der Kette vom größeren Ritzel auf das nächstkleinere Ritzel unterstützen, und es gibt Herunterschalt-Vertiefungsformationen, welche für einen Herunterschaltvorgang das Umlegen der Kette vom benachbarten kleinen Ritzel auf das größere Ritzel unterstützen. Die Vertiefungsformationen folgen in ihrer Gestalt oder/und ihrer radial inneren Berandung - bei axialer Betrachtung einer Ritzelpaarung aus einem größeren und einem benachbarten kleineren Ritzel von außen, also mit näher bei dem Betrachter gelegenem kleineren Ritzel - dem Verlauf der Fahrradkette im Übergangsbereich zwischen dem kleineren und dem größeren Ritzel während des zugeordneten Schaltvorgangs. Dies bedeutet, die Hochschalt-Vertiefungsformation oder/und ein radial innerer Rand derselben nähert sich grob von einem radial weiter außen liegenden Ort am größeren Ritzel mit Fortschreiten im Gegenuhrzeigersinn radial dem kleineren Ritzel an und die Herunterschalt-Vertiefungsformation oder/und ein radial innerer Rand derselben nähert sich grob von einem radial weiter außen liegenden Ort am größeren Ritzel mit Fortschreiten im Uhrzeigersinn radial dem kleineren Ritzel an.

Üblicherweise sind an Ritzeln Zähne als Abgabezähne ausgebildet, welche beim Hochschalten auf das nächst kleinere Ritzel als letztes zwischen Laschenpaare eines Kettengliedes eingreifen, bevor die Kette das größere Ritzel zum kleineren Ritzel hin verlässt. Bei den üblichen Antriebsdrehrichtungen von Hinterradritzeln, also bei einer Bezugsbetrachtung längs der Ritzelachse von außen im Uhrzeigersinn, ist ein Abgabezahn in der Regel seiner zugeordneten Hochschalt-Vertiefungsformation im Uhrzeigersinn benachbart, sodass sich die Kette im Eingriff mit dem Abgabezahn seitlich an den im Gegenuhrzeigersinn auf den Abgabezahn folgenden Zähnen unter Ausnutzung der Hochschalt-Vertiefungsformation als Bewegungsraum nach radial innen vorbeibewegen kann.

Ebenso sind für Herunterschaltvorgänge Fangzähne am größeren Ritzel ausgebildet, welche als erste Zähne mit der auf das größere Ritzel umzulegenden Fahrradkette in Eingriff gelangen sollen. Hier wird die Fahrradkette unter Ausnutzung der Herunterschalt-Vertiefungsformation als Bewegungsraum dem größeren Ritzel axial angenähert, sodass sich die Kette zunächst an den im Uhrzeigersinn dem Fangzahn vorausgehenden Zähnen seitlich unter Ausnutzung der Hochschalt-Vertiefungsformation als Bewegungsraum nach radial außen vorbeibewegen und schließlich der Fangzahn als erster Zahn des Ritzels in den Eingriffsraum zwischen zwei Kettenlaschen eingreifen kann. Ein Fangzahn ist daher der ihm zugeordneten Herunterschalt-Vertiefungsformation im Gegenuhrzeigersinn benachbart.

Ein Abgabezahn und ein Fangzahn sind körperlich abweichend von anderen Zähnen des Ritzels ausgebildet, um ihre jeweilige Eingriffsaufgabe beim zugeordneten Schaltvorgang zu erfüllen. Sie können mit von den übrigen Ritzelzähnen abweichender in radialer Richtung zu messender Zahnhöhe oder/und abweichender in Umfangsrichtung zu messender Zahnbreite oder/und abweichender in axialer Richtung zu messender Zahndicke oder/und abweichender Zahnkopfform oder/und abweichender Gestalt wenigstens einer Zahnflanke oder/und abweichender Lage einer oder beider Zahnseitenflächen relativ zu der ihr nächstgelegenen Ritzel-Stirnfläche oder/und abweichender Zahnneigung um eine zur radialen Auskragrichtung des Zahns orthogonalen Neigeachse oder/und abweichender Zahnneigung um eine zur radialen Auskragrichtung des Zahns parallelen Neigeachse ausgebildet sein, um beim Hochschalten als letzter eingreifender Zahn bzw. beim Herunterschalten als erster eingreifender Zahn zu agieren.

Das Fangen einer Kette am größeren Ritzel einer Ritzelpaarung erfolgt in der Regel wegen des größeren Eingriffsraums an einem Außenlaschenpaar. Außerdem lassen sich Außenlaschen und damit Außenlaschenpaare systembedingt axial einem Ritzel stärker annähern als Innenlaschenpaare, da die einem größeren Ritzel zugewandten Außenlaschen einer auf einem kleineren Ritzel umlaufenden Kette stets axial näher bei dem größeren Ritzel liegen als die dem größeren Ritzel zugewandten Innenlaschen.

Da sich bei ungeradzahligen Ritzeln, wie oben beschrieben, die Zuordnung eines Zahns zu der mit ihm kämmenden Kettengliederart pro Umdrehung des Ritzels alternierend ändert, hängt es bei der bekannten Ritzelkassette von der Anzahl an Umdrehungen ab, die das kettenführende kleinere Ritzel bis zum Schaltvorgang ausgeführt hat, wie die Kette auf das größere Ritzel übergeben wird. Um die Kette ohne unerwünschte Latenz, das ist der zeitliche Abstand zwischen Einleitung eines Schaltvorgangs durch den Fahrer und tatsächlicher Ausführung des Schaltvorgangs am Ritzel, sicher zu fangen, sind am größeren Ritzel daher zwei Fangzähne unmittelbar in Umfangsrichtung hintereinander vorgesehen, sodass wenigstens einer beim Herunterschalten mit einem Außenlaschenpaar in Eingriff kommt und dadurch die Kette fangen wird.

Für die Abgabezähne beim Hochschalten gilt mutatis mutandis das gleiche.

Fangzähne und Abgabezähne sind häufig zur Erleichterung des Eingriffs mit der noch nicht vollständig bzw. nicht mehr vollständig auf dem größeren Ritzel umlaufenden Kette dünner ausgebildet als andere Zähne, die die Aufgaben der Fangzähne und Abgabezähne nicht erfüllen müssen. Dies schwächt die Fangzähne und Abgabezähne sowie das Ritzel insgesamt strukturell weiter.

Gerade bei modernen elektromotorisch unterstützten Fahrradantrieben können, verglichen mit dem aus der EP 1 188 658 B1 bekannten Kettentrieb, dauerhaft betragsmäßig höhere Drehmomente übertragen werden. Darüber hinaus hat durch die elektromotorische Unterstützung von Fahrradantrieben die Gangspreizung zugenommen, also die Differenz der Zähnezahlen des größten und des kleinsten Ritzels einer Kassette, geteilt durch die Zähnezahl des kleinsten Ritzels. Überdies hat sich das Fahrverhalten und das Schaltverhalten an den elektromotorisch unterstützten Fahrrädern verändert, verglichen mit nur mit Muskelkraft angetriebenen Fahrrädern.

Durch die verglichen mit früher höhere Gangspreizung müssen Hinterradritzelkassetten mit hoher Ritzelzahl realisiert werden, um dem Wunsch der Fahrradfahrer nach geringen Gangsprüngen zwischen einzelnen benachbarten Ritzeln Rechnung zu tragen. Geringe Gangsprünge, also die Differenz der Zähnezahlen einer Ritzelpaarung, bezogen auf die Zähnezahl des kleineren Ritzels, sind dabei immer dann gefragt, wenn das Fahrrad nur mit Muskelkraft ohne elektromotorische Unterstützung angetrieben wird. Die Tendenzen zu voluminöser werdender Bereifung und kürzeren Kettenstreben führen häufig zum Einsatz eines verhältnismäßig kleinen Kettenblattes an der Tretkurbel. Dadurch verlagert sich der Geschwindigkeitsbereich, in welchem nach den Bestimmungen der meisten Straßenverkehrsordnungen eine elektromotorische Unterstützung der Antriebskraft des Fahrradfahrers zulässig ist, zunehmend zu kleineren Hinterradritzeln hin. In Deutschland ist beispielsweise eine elektromotorische Unterstützung bis zu einer Geschwindigkeit von 25 km/h erlaubt, in anderen Ländern bis 20 km/h oder bis 30 km/h. Daher droht insbesondere den kleineren Ritzeln einer Ritzelkassette erhöhter Verschleiß.

US 2019/359284 A1 offenbart nach Auffassung der Prüfungsabteilung des europäischen Patentamts eine Fahrrad-Hinterradritzelpaarung zum kraftübertragenden Eingriff mit einer Fahrrad-Rollenkette, wobei die Hinterradritzelpaarung um eine Ritzelachse drehbar ist, wobei die Ritzelachse eine längs der Ritzelachse verlaufende axiale Richtung, eine orthogonal zur Ritzelachse verlaufende radiale Richtung und eine um die Ritzelachse umlaufende Umfangsrichtung definiert, wobei die Hinterradritzelpaarung ein größeres Ritzel und ein mit diesem zur gemeinsamen schlupffreien Rotation um die die Ritzelachse verbundenes, koaxiales, dem größeren Ritzel axial unmittelbar benachbartes kleineres Ritzel umfasst, wobei das größere Ritzel eine gerade Zähnezahl gleich oder kleiner als 22 Zähne aufweist und wobei der Zähnezahlunterschied zwischen dem größeren und dem kleineren Ritzel genau zwei Zähne beträgt, wobei i) das größere Ritzel in seiner zum kleineren Ritzel hinweisenden Stirnseite, längs eines Abschnitts seines Umfangs einen Hochschaltbereich mit einer Hochschalt-Vertiefungsformation aufweist, wobei der Hochschaltbereich dazu ausgebildet und angeordnet ist, an der im Uhrzeigersinn - bei axialer Betrachtung der Hinterradritzelpaarung in einem Bezugszustand, in welchem das kleinere Ritzel dem Betrachter näher gelegen ist als das größere Ritzel - um die Ritzelachse rotierenden Hinterradritzelpaarung einen Eingriffswechsel der Fahrrad-Rollenkette vom größeren zum kleineren Ritzel zu gestatten, wobei am größeren Ritzel der Hochschalt-Vertiefungsformation nur genau ein Abgabezahn zugeordnet ist, welcher durch seine Gestalt und Orientierung dazu ausgebildet ist, im Zusammenwirken mit der stirnseitigen Hochschalt-Vertiefungsformation während eines Hochschaltvorgangs vom größeren Ritzel auf das kleinere Ritzel der letzte Zahn zu sein, der zwischen ein Laschenpaar eines Kettengliedes der Fahrrad-Rollenkette eingreift, und ii) das größere Ritzel in seiner zum kleineren Ritzel hinweisenden Stirnseite, längs seines Umfangs einen Herunterschaltbereich mit einer Herunterschalt-Vertiefungsformation aufweist, wobei der Herunterschaltbereich dazu ausgebildet ist, an der im Uhrzeigersinn - bei axialer Betrachtung der Hinterradritzelpaarung im Bezugszustand - um die Ritzelachse rotierenden Hinterradritzelpaarung einen Eingriffswechsel der Fahrrad-Rollenkette vom kleineren zum größeren Ritzel zu gestatten, wobei am größeren Ritzel der Herunterschalt-Vertiefungsformation nur genau ein Fangzahn zugeordnet ist, welcher durch seine Gestalt und Orientierung dazu ausgebildet ist, im Zusammenwirken mit der stirnseitigen Herunterschalt-Vertiefungsformation während eines Herunterschaltvorgangs vom kleineren Ritzel auf das größere Ritzel der erste Zahn zu sein, der zwischen Laschen eines Kettengliedes der Fahrrad-Rollenkette eingreift, wobei der Fangzahn aufgrund seiner Ausgestaltung und Orientierung nur dann in die auf das größere Ritzel umzulegende Fahrrad-Rollenkette eingreift, wenn sich an der Umfangsposition des Fangzahns ein Außenlaschen-Kettenglied befindet, welches einen größeren Eingriffsraum bereitstellt als ein Innenlaschen-Kettenglied, und die Fahrrad-Rollenkette abgewiesen wird, wenn sich an der Umfangsposition des Fangzahns ein Innenlaschen-Kettenglied befindet.

Es ist daher Aufgabe der vorliegenden Erfindung, eine eingangs genannte Fahrrad-Hinterradritzelpaarung derart weiterzubilden, dass sie ohne Erhöhung der Bauraumbeanspruchung stabiler ausgebildet und so für den mechanisch höher belasteten Betrieb genutzt werden kann.

Diese Aufgabe löst die vorliegende Erfindung dadurch, dass das größere Ritzel der eingangs genannten Fahrrad-Hinterradritzelpaarung eine gerade Zähnezahl gleich oder kleiner als 22 Zähne aufweist, wobei der Zähnezahlunterschied zwischen dem größeren und dem kleineren Ritzel genau zwei Zähne beträgt. Somit sind beide Ritzel der Ritzelpaarung geradzahlige Ritzel, sodass sich die Zuordnung der einzelnen Ritzelzähne zu der Kettengliederart, mit der sie in Eingriff sind, für die Dauer des Eingriffs des Ritzels mit der Fahrradkette nicht ändert. Greift also ein Zahn in einem Umlauf kämmend in ein Außenlaschen-Kettenglied ein, greift dieser Zahn bei jedem Umlauf des Ritzels in ein Außenlaschen-Kettenglied ein.

Das größere Ritzel weist in seiner zum kleineren Ritzel hinweisenden Stirnseite, längs eines Abschnitts seines Umfangs einen Hochschaltbereich mit einer Hochschalt-Vertiefungsformation auf. Der Hochschaltbereich ist, wie oben beschrieben, dazu ausgebildet und angeordnet, an der im Uhrzeigersinn um die Ritzelachse rotierenden Hinterradritzelpaarung einen Eingriffswechsel der Fahrrad-Rollenkette vom größeren zum kleineren Ritzel zu gestatten.

Nur der Hochschaltbereich gestattet in der Regel ein Hochschalten der Kette zum nächstkleineren Ritzel. Ebenso gestattet nur ein Herunterschaltbereich in der Regel ein Herunterschalten der Kette vom nächstkleineren Ritzel auf das größere Ritzel.

Wenn in der vorliegenden Anmeldung als Richtungsangaben an der Ritzelpaarung der Uhrzeigersinn und der Gegenuhrzeigersinn verwendet werden, so bezieht sich dies stets auf eine Bezugsbetrachtung der Ritzelpaarung oder einer die Ritzelpaarung enthaltenden Ritzelkassette in axialer Richtung, wobei sich bei dieser Betrachtung das kleinere Ritzel der Ritzelpaarung näher beim Betrachter befindet als das größere Ritzel. Da sich das kleinere Ritzel am Hinterrad des die Ritzelpaarung tragenden Fahrrads weiter von der zur Ritzelachse orthogonalen Fahrradlängsmittelebene entfernt und damit "weiter außen" befindet als das größere Ritzel, wird die axiale Bezugsbetrachtung nachfolgend auch als axiale Betrachtung "von außen" bezeichnet.

Am größeren Ritzel ist der Hochschalt-Vertiefungsformation erfindungsgemäß nur genau ein Abgabezahn zugeordnet, welcher durch seine Gestalt und Orientierung dazu ausgebildet ist, im Zusammenwirken mit der stirnseitigen Hochschalt-Vertiefungsformation während eines Hochschaltvorgangs vom größeren Ritzel auf das kleinere Ritzel der letzte Zahn zu sein, der zwischen ein Laschenpaar eines Kettengliedes der Fahrrad-Rollenkette eingreift. In der Regel ist nur dieser eigens ausgebildete Abgabezahn und kein anderer Zahn beim Hochschalten als letzter Zahn des größeren Ritzels mit der Kette in Eingriff.

Das Vorsehen nur eines Abgabezahns pro Hochschaltbereich hat zwei Vorteile: erstens wird die Kette bezüglich ihrer Kettengliederabfolge definiert ausgerichtet an das kleinere Rad übergeben, denn es gibt, anders als im oben genannten Stand der Technik, keine zwei in Umfangsrichtung aufeinander folgende Zähne mehr, von welchen jeder durch Gestalt und Orientierung als letzter Eingriffszahn wirken kann. Der Abgabezahn greift üblicherweise in ein Außenlaschen-Kettenglied ein, da das gemäß Bezugsbetrachtung im Gegenuhrzeigersinn nachfolgende Innenlaschen-Kettenglied aufgrund seiner schmaleren Abmessung erheblich einfacher an dem im Gegenuhrzeigersinn auf den Abgabezahn folgenden Zahn vorbei auf der dem kleineren Ritzel zugewandten Stirnseite des größeren Ritzels nach radial innen abgleiten kann. Zweitens ist es ausreichend, nur diesen einen Abgabezahn als solchen auszubilden. Wie oben beschrieben wurde, ist ein Abgabezahn in der Regel axial dünner als ein herkömmlicher Zahn, der nicht Abgabezahn ist, um der Fahrradkette eine axiale Beweglichkeit zum kleineren Ritzel hin zu ermöglichen. Somit kann die Anzahl an durch Dickenreduktion strukturell geschwächten Zähnen am größeren Ritzel reduziert werden.

Zusätzlich oder alternativ weist das größere Ritzel in seiner zum kleineren Ritzel hinweisenden Stirnseite längs seines Umfangs einen Herunterschaltbereich mit einer Herunterschalt-Vertiefungsformation auf. Wie oben geschildert, ist der Herunterschaltbereich dazu ausgebildet, an der im Uhrzeigersinn um die Ritzelachse rotierenden Hinterradritzelpaarung einen Eingriffswechsel der Fahrrad-Rollenkette vom kleineren zum größeren Ritzel zu gestatten.

Zusätzlich oder alternativ ist der Herunterschalt-Vertiefungsformation am größeren Ritzel nur genau ein Fangzahn zugeordnet, welcher durch seine Gestalt und Orientierung dazu ausgebildet ist, im Zusammenwirken mit der stirnseitigen Herunterschalt-Vertiefungsformation während eines Herunterschaltvorgangs vom kleineren Ritzel auf das größere Ritzel der erste Zahn zu sein, der zwischen Laschen eines Kettengliedes der Fahrrad-Rollenkette eingreift. In der Regel ist nur der Fangzahn dazu ausgebildet, beim Herunterschalten auf das größere Ritzel als erster Zahn in ein Kettenglied der Kette einzugreifen.

Durch die beschriebene Ausgestaltung der Herunterschalt-Vertiefungsformation mit nur genau einem zugeordneten Fangzahn wird die Kette beim Herunterschalten vom kleineren auf das größere Ritzel bezüglich ihrer Kettengliederabfolge definiert vom größeren Ritzel übernommen. Der Fangzahn weist erfindungsgemäß eine derartige Ausgestaltung und Orientierung auf, so dass er nur dann in die auf das größere Ritzel umzulegende Kette ein, wenn sich an der Umfangsposition des Fangzahns ein Außenlaschen-Kettenglied befindet, welches einen größeren Eingriffsraum bereitstellt als ein Innenlaschen-Kettenglied. Befindet sich, aus welchem Grund auch immer, ein Innenlaschen-Kettenglied an der Stelle des Fangzahns, wird die Kette abgewiesen. Außerdem gilt auch hier, dass die Ausbildung nur eines Fangzahns pro Herunterschalt-Vertiefungsformation die Anzahl an strukturell zur Realisierung der Fangfunktion geschwächten Zähnen reduziert.

Das größere Ritzel der erfindungsgemäßen Ritzelpaarung kann nur das auf den Hochschaltvorgang bezogene Merkmal der Hochschalt-Vertiefungsformation mit nur genau einem zugeordneten Abgabezahn, nur das auf den Herunterschaltvorgang bezogene Merkmal der Herunterschalt-Vertiefungsformation mit nur genau einem zugeordneten Fangzahn oder, besonders vorteilhaft, beide Merkmale aufweisen, um die Fahrradkette eindeutig gerichtet sowohl vom kleineren Ritzel der Paarung zu übernehmen als auch an dieses zu übergeben.

Die grundsätzlich funktionelle Zuordnung des Abgabezahns zu der Hochschalt-Vertiefungsformation, mit welcher er zusammenwirkt, ist in der Regel eine räumliche Zuordnung, denn die Fahrradkette winkelt beim Hochschalten in der Regel an der im Gegenuhrzeigersinn auf den kämmenden Abgabezahn folgenden Kettenrolle zum kleineren Ritzel hin ab, wobei wenigstens eines der Kettenglieder, welche im Gegenuhrzeigersinn auf das mit dem Abgabezahn in Eingriff befindliche Kettenglied folgen, axial in die Hochschalt-Vertiefungsformation eintaucht. Die Hochschalt-Vertiefungsformation ist eine Ausnehmung auf der zum kleineren Ritzel hinweisenden Stirnseite, die axialen Bewegungsraum für die Kette schafft. Daher folgt bevorzugt der Abgabezahn im Uhrzeigersinn unmittelbar auf die Hochschalt-Vertiefungsformation. Bevorzugt befindet sich daher im Uhrzeigersinn zwischen der Hochschalt-Vertiefungsformation und dem Abgabezahn kein weiterer Zahn.

Bei den vorstehend genannten Ritzeln mit Zähnezahlen nicht größer als 22 hat es sich als ausreichend erwiesen, dass das größere Ritzel längs seines gesamten Umfangs nur genau einen Hochschaltbereich mit nur einer Hochschalt-Vertiefungsformation und folglich nur genau einen Abgabezahn aufweist. Bei Einleitung eines Hochschaltvorgangs erfolgt dieser innerhalb einer Ritzelumdrehung. Dies ist eine Latenz, die von Fahrradfahrern ohne weiteres akzeptiert wird. Durch die Ausbildung nur einer Hochschalt-Vertiefungsformation und nur eines Abgabezahns erfolgt eine geringstmögliche durch einen Hochschaltvorgang bedingte Schwächung des Ritzels.

Für den Fangzahn gilt das oben zum Abgabezahn Gesagte mutatis mutandis entsprechend. Zunächst wird die Kette axial unter Ausnutzung der als axiale Ausnehmung in der Stirnseite ausgebildeten Herunterschalt-Vertiefungsformation an das die Kette übernehmende größere Ritzel angenähert und dann vom Fangzahn durch Formschlusseingriff mit einem Kettenglied gefangen und auf das größere Ritzel geleitet. Daher ist auch die funktionelle Zuordnung des Fangzahns zu seiner Herunterschalt-Vertiefungsformation eine räumliche Zuordnung. Der Fangzahn folgt bevorzugt im Gegenuhrzeigersinn unmittelbar auf die Herunterschalt-Vertiefungsformation. Bevorzugt befindet sich daher im Gegenuhrzeigersinn zwischen der Herunterschalt-Vertiefungsformation und dem Fangzahn kein weiterer Zahn.

Mit einer maximalen Schaltlatenz von einer Ritzelumdrehung kann bei minimaler durch einen Herunterschaltvorgang bedingter Schwächung des größeren Ritzels das größere Ritzel längs seines gesamten Umfangs nur genau einen Herunterschaltbereich und folglich nur genau einen Fangzahn aufweisen.

Versuche haben gezeigt, dass es einen positiven Einfluss auf das Verschleißbild des größeren Ritzels und damit auf dessen Gesamtlebensdauer hat, wenn der Fangzahn, ausgehend vom Abgabezahn, im Uhrzeigersinn einen größtmöglichen Abstand vom Abgabezahn hat. Auch zur Erzielung dieses größtmöglichen Abstands im Uhrzeigersinn ist die Ausbildung nur eines Abgabezahns und nur eines Fangzahns vorteilhaft. Ein großer Abstand im Uhrzeigersinn bei gleichzeitiger Einhaltung der für ein Schalten zwischen dem größeren und dem kleineren Ritzel notwendigen Randbedingungen kann dadurch erhalten werden, dass ausgehend vom Abgabezahn im Uhrzeigersinn zwischen dem Abgabezahn und dem Fangzahn eine Anzahl k Zähne gelegen sind, wobei k = T - d gilt, wobei T die Zähnezahl des größeren Ritzels ist und wobei d gleich 5 oder gleich 7 ist. Der Abgabezahn und der Fangzahn sind nicht mitzuzählen. Es gelten nur die zwischen Abgabezahn und Fangzahn im Uhrzeigersinn gelegenen Zähne. Dabei ist bevorzugt dann, wenn die Zähnezahl T des größeren Ritzels ohne Rest ganzzahlig durch 6 teilbar ist, d gleich 5. Dann, wenn die Zähnezahl T des größeren Ritzels nicht ohne Rest ganzzahlig durch 6 teilbar ist, ist d bevorzugt gleich 7. Es sei jedoch darauf hingewiesen, dass grundsätzlich d auch dann gleich 7 sein kann, wenn Zähnezahl T des größeren Ritzels ganzzahlig ohne Rest durch sechs teilbar ist.

Mit der gleichen Zielsetzung eines möglichst großen Abstands des Fangzahns im Uhrzeigersinn vom Abgabezahn des größeren Ritzels kann das größere Ritzel derart ausgebildet sein, dass, ausgehend vom Fangzahn, im Uhrzeigersinn zwischen dem Fangzahn und dem Abgabezahn 3 oder 5 Zähne gelegen ist, wobei der Fangzahn und der Abgabezahn nicht mitzuzählen sind.

Gemäß einer vorteilhaften, jedoch nicht zwingenden Weiterbildung sind dann, wenn die Zähnezahl des größeren Ritzels ohne Rest ganzzahlig durch 6 teilbar ist, bevorzugt 3 Zähne, und dann, wenn die Zähnezahl des größeren Ritzels nicht ohne Rest ganzzahlig durch 6 teilbar ist, bevorzugt 5 Zähne im Uhrzeigersinn zwischen dem Fangzahn und dem Abgabezahn gelegen.

Um der Fahrradkette auch bei kleinem axialem Abstand zwischen dem kleineren und dem größeren Ritzel ausreichend axiale Bewegungsmöglichkeit zu geben, kann der im Uhrzeigersinn auf den Abgabezahn folgenden Zahn als Hochschalt-Mobilisierungszahn ausgebildet sein, dessen vom kleineren Ritzel wegweisende Zahnfläche näher beim kleineren Ritzel gelegen ist als die vom kleineren Ritzel wegweisende Zahnfläche des auf den Mobilisierungszahn im Uhrzeigersinn folgenden übernächsten Zahns. Dieser Mobilisierungszahn, dessen zum kleineren Ritzel hinweisende Zahnfläche in der Regel verglichen mit dem ihm im Uhrzeigersinn folgenden übernächsten Zahn nicht axial versetzt ist und der daher dünner als der im Uhrzeigersinn übernächste Zahn ist, ist in der Regel im Eingriff mit einem Innenlaschen-Kettenglied und räumt diesem im Eingriff axiales Bewegungsspiel zum kleineren Ritzel hin ein.

Zusätzlich oder alternativ kann zur besseren axialen Beweglichkeit der Kette der im Gegenuhrzeigersinn auf den Fangzahn folgende Zahn als Herunterschalt-Mobilisierungszahn ausgebildet sein, dessen vom kleineren Ritzel wegweisende Zahnfläche näher beim kleineren Ritzel gelegen ist als die vom kleineren Ritzel wegweisende Zahnfläche des auf den Mobilisierungszahn im Gegenuhrzeigersinn folgenden übernächsten Zahns. Dieser Mobilisierungszahn, dessen zum kleineren Ritzel hinweisende Zahnfläche in der Regel verglichen mit dem ihm im Gegenuhrzeigersinn folgenden übernächsten Zahn nicht axial versetzt ist und der daher dünner als der im Gegenuhrzeigersinn übernächste Zahn ist, ist in der Regel im Eingriff mit einem Innenlaschen-Kettenglied und räumt diesem im Eingriff axiales Bewegungsspiel zum kleineren Ritzel hin ein.

Durch die mit der vorliegenden Ritzelpaarung erhaltene Möglichkeit, die Kette hinsichtlich der Abfolge ihrer Kettengliederarten definiert vom kleineren Ritzel auf das größere Ritzel oder/und vom größeren Ritzel auf das kleinere Ritzel umzulegen, kann gewährleistet werden, dass ein und derselbe Zahn wenigstens eines Ritzels, vorzugsweise beider Ritzel der Ritzelpaarung nicht nur während der Ritzelumläufe einer Eingriffsphase, sondern während aller Eingriffsphasen des wenigstens einen Ritzels mit der Fahrradkette mit ein und derselben Kettengliederart in kämmenden Eingriff gelangt.

Grundsätzlich können alle Zähne des größeren oder/und des kleineren Ritzels der Ritzelpaarung zu deren vereinfachten Fertigung mit gleicher axialer Dicke ausgebildet sein. Zur möglichst exakten Positionierung der Fahrradkette auf der Ritzelpaarung hinsichtlich der Kettengliederabfolge relativ zu den Ritzelzähnen kann das größere Ritzel oder/und das kleinere Ritzel wenigstens längs eines Umfangsabschnitts in Umfangsrichtung aufeinander folgend alternierend je einen axial dünneren und einen axial dickeren Zahn aufweisen. Die Dicke der dickeren Zähne ist dabei vorteilhaft derart bemessen, dass die dicken Zähne zwar in den Eingriffsraum eines Außenlaschen-Kettenglieds passen, nicht jedoch in den Eingriffsraum eines Innenlaschen-Kettenglieds. Die Dicke der dünneren Zähne ist vorteilhaft derart bemessen, dass sie in den Eingriffsraum eines Innenlaschen-Kettenglieds passen. Dadurch kann dann, wenn die Kette ordnungsgemäß mit dem Ritzel mit alternierend dickeren und dünneren Zähnen kämmendem Eingriff steht, die Kette mit sehr geringem axialem Bewegungsspiel auf dem Ritzel geführt sein.

Die vorliegende Anmeldung betrifft überdies eine Fahrrad-Hinterradritzelkassette mit einer Mehrzahl von zur gemeinsamen schlupffreien Drehung um die Ritzelachse verbundenen Ritzeln jeweils unterschiedlicher Zähnezahl, wobei die Fahrrad-Hinterradritzelkassette wenigstens eine Fahrrad-Hinterradritzelpaarung nach einem der vorhergehenden Ansprüche enthält. Um die Vorteile der oben beschriebenen Fahrrad-Hinterradritzelpaarung möglichst umfangreich an der Ritzelkassette nutzen zu können, weist die Fahrrad-Hinterradritzelkassette bevorzugt wenigstens drei Ritzel jeweils unterschiedlicher Zähnezahl auf, welche zwei gemäß obiger Beschreibung ausgebildete Fahrrad-Hinterradritzelpaarungen bilden, wobei das Ritzel mit der mittleren Zähnezahl das größere Ritzel der einen Hinterradritzelpaarung und das kleinere Ritzel der anderen Hinterradritzelpaarung ist.

In diesem Sinne sind besonders bevorzugt alle Ritzel der Hinterradritzelkassette, welche Zähnezahlen von 22 oder kleiner aufweisen, als Fahrrad-Hinterradritzelpaarungen gemäß obiger Beschreibung ausgebildet. Dabei ist jedes Ritzel, das nicht axial endseitiges Ritzel der Ritzelgruppe mit Zähnezahlen von 22 oder kleiner ist, dass kleinere Ritzel eine Ritzelpaarung und gleichzeitig das größere Ritzel einer anderen Ritzelpaarung. Das kleinste Ritzel der Ritzelgruppe kann definitionsgemäß nur kleineres Ritzel einer Ritzelpaarung sein.

Da bei konstantem Zähnezahlunterschieden die Gangsprünge mit größer werdenden, also weiter innen liegenden Ritzeln immer geringer werden, ist es zur Erzielung von über die gesamte Ritzelkassette hinweg einigermaßen gleichmäßigen Gangsprüngen hilfreich, wenn sich mit zunehmender Zähnezahl der Zähnezahlunterschied zwischen benachbarten Ritzeln erhöht. Dabei sind unvermeidlich betragsmäßige Unterschiede in den Gangsprüngen zwischen benachbarten Ritzeln hinzunehmen, da Ritzel nur ganzzahlige Zähnezahlen aufweisen und Zähnezahlenunterschiede zwischen benachbarten Zähnen ebenfalls ganzzahlig sind.

Da ein Umlegen der Kette zwischen zwei benachbarten Ritzel vor allem dann besonders vorteilhaft ausgeführt werden kann, wenn die Zähnezahlen der benachbarten Ritzel wenigstens einen gemeinsamen Teiler aufweisen, kann die Hinterradritzelkassette eine Übergangs-Ritzelgruppe aufweisen, umfassend ein nachfolgend als "21-T-Ritzel" bezeichnetes Ritzel mit 21 Zähnen und ein diesem unmittelbar benachbartes kleineres 18-T-Ritzel mit 18 Zähnen.

Bevorzugt weist die Hinterradritzelkassette nur genau ein ungeradzahliges Ritzel auf. Dieses ist bevorzugt das zuvor genannte 21-T-Ritzel.

Ein Ritzel mit einer Anzahl z an Zähnen ist nachfolgend kurz als "z-T-Ritzel" bezeichnet.

Da die nachfolgend erläuterte Fahrrad-Hinterradritzelkassette mit der oben genannten Übergangs-Ritzelgruppe auch ohne die zuvor beschriebene Fahrrad-Hinterradritzelpaarung eine äußerst vorteilhaft wirkende Fahrrad-Hinterradritzelkassette ist, betrifft die vorliegende Anmeldung auch eine Fahrrad-Hinterradritzelkassette mit einer Mehrzahl von zur gemeinsamen schlupffreien Drehung um die Ritzelachse verbundenen Ritzeln jeweils unterschiedlicher Zähnezahl, wobei die Ritzelachse eine längs der Ritzelachse verlaufende axiale Richtung, eine orthogonal zur Ritzelachse verlaufende radiale Richtung und eine um die Ritzelachse umlaufende Umfangsrichtung definiert, und wobei die Hinterradritzelkassette eine Übergangs-Ritzelgruppe aufweist, umfassend ein 21-T-Ritzel und ein dem 21-T-Ritzel unmittelbar benachbartes kleineres 18-T-Ritzel. Auch diese Ritzelkassette kann wie nachfolgend erläutert weitergebildet sein.

Das Problem hier ist, dass sich auf dem ungeradzahligen 21-T-Ritzel während eines Eingriffs mit der Fahrradkette die Zuordnung eines Ritzelzahns zu der von ihm in Eingriff genommenen Kettengliederart von Umlauf zu Umlauf alternierend ändert. Dadurch kann es ohne weitere Maßnahmen geschehen, dass die Kette, abhängig von der Anzahl an Umläufen während des Ketteneingriffs, in jeder der beiden hinsichtlich der Abfolge der Kettengliederarten unterscheidbaren Relativlagen in Kettenlängsrichtung vom 21-T-Ritzel auf das 18-T-Ritzel übergeben wird. Dagegen kann es vorteilhaft sein, die Kette nur in einer definierten Ausrichtung bezüglich der Abfolge von Kettengliederarten an das 18-T-Ritzel zu übergeben, sodass am 18-T-Ritzel eine definierte Zuordnung von einer Gruppe von Zähnen zu Außenlaschen-Kettengliedern und von der anderen Gruppe von übrigen Zähnen zu Innenlaschen-Kettengliedern besteht. Dann nämlich, wenn das 18-T-Ritzel beispielsweise größeres Ritzel einer wie oben beschrieben ausgestalteten Ritzelpaarung ist, ist die richtige Orientierung der Kette am 18-T-Ritzel entscheidend für die korrekte Orientierung der Kette auch am unmittelbar benachbarten 16-T-Ritzel. Dies kann sich zu kleineren Ritzeln hin immer weiter fortsetzen.

Eine definierte Übergabe der Kette vom 21-T-Ritzel auf das 18-T-Ritzel in einer gewünschten Zuordnung von Außenlaschen-Kettengliedern zu Zähnen am 18-T-Ritzel, die für einen Eingriff nur mit Außenlaschen-Kettengliedern vorbestimmt oder/und ausgebildet sind, kann dadurch erreicht werden, dass das 21-T-Ritzel in seiner zum 18-T-Ritzel hinweisenden Stirnseite längs eines Abschnitts seines Umfangs wenigstens zwei Hochschaltbereiche mit je einer Hochschalt-Vertiefungsformation aufweist. Wiederum ist jeder Hochschaltbereich dazu ausgebildet und angeordnet, an der im Uhrzeigersinn - bei axialer Bezugsbetrachtung der Übergangs-Ritzelgruppe in einem Bezugszustand, in welchem das 18-T-Ritzel dem Betrachter näher gelegen ist als das 21-T-Ritzel - um die Ritzelachse rotierenden Übergangs-Ritzelgruppe einen Eingriffswechsel der Fahrrad-Rollenkette vom 21-T-Ritzel zum 18-T-Ritzel zu gestatten. Am 21-T-Ritzel ist jeder der wenigstens zwei Hochschalt-Vertiefungsformationen jeweils nur genau ein Abgabezahn zugeordnet, welcher durch seine Gestalt und Orientierung dazu ausgebildet ist, im Zusammenwirken mit der ihm zugeordneten stirnseitigen Hochschalt-Vertiefungsformation während eines Hochschaltvorgangs vom 21-T-Ritzel auf das 18-T-Ritzel der letzte Zahn zu sein, der zwischen ein Laschenpaar eines Kettengliedes der Fahrrad-Rollenkette eingreift. Zwischen den Abgabezähnen von in Umfangsrichtung benachbarten Hochschalt-Vertiefungsformationen ist eine gerade Anzahl an Zähnen, vorzugsweise sechs Zähne, gelegen, wobei die Abgabezähne der benachbarten Hochschalt-Vertiefungsformationen nicht mitzuzählen sind.

Der Abgabezahn, im Zusammenwirken mit der ihm zugeordneten Hochschalt-Vertiefungsformation, gestattet üblicherweise nur dann eine für ein Umlegen der Kette vom 21-T-Ritzel für das 18-T-Ritzel ausreichende axiale Beweglichkeit der Kette, wenn der Abgabezahn nach einer Einleitung eines Schaltvorgangs durch den Fahrradfahrer, etwa durch Verlagern der Kettenführungsrolle eines hinteren Umwerfers, mit einem Außenlaschen-Kettenglied in Eingriff ist. Dies ist beim 21-T-Ritzel für ein und denselben Abgabezahn nur in jedem zweiten Umlauf des Ritzels der Fall.

Durch Vorsehen wenigstens eines zweiten Abgabezahns mit einer zwischen den beiden Abgabezähnen in Umfangsrichtung angeordneten geraden Anzahl an Zwischenzähnen ist in ein und demselben Umlauf des Ritzels einer der beiden Abgabezähne mit einem Außenlaschen-Kettenglied in Eingriff, was zu vorteilhaft kurzen Latenzen führt.

Weiterhin gilt auch hier, dass durch Ausbilden lediglich eines Abgabezahns pro Hochschalt-Vertiefungsformation, was üblicherweise im Vergleich zu übrigen Zähnen, die nicht Abgabezahn sind, eine strukturelle Schwächung der Festigkeit des Abgabezahns im Vergleich zu sonstigen Zähnen darstellt, die Schwächung des 21-T-Ritzels auf ein mindestmögliches Maß beschränkt werden kann.

Zusätzlich oder alternativ kann das 21-Ritzel in seiner zum 18-T-Ritzel hinweisenden Stirnseite, längs seines Umfangs wenigstens zwei Herunterschaltbereiche mit je einer Herunterschalt-Vertiefungsformation aufweisen. Wiederum ist jeder Herunterschaltbereich dazu ausgebildet, an der im Uhrzeigersinn - bei axialer Betrachtung der Übergangs-Ritzelgruppe im Bezugszustand - um die Ritzelachse rotierenden Übergangs-Ritzelgruppe einen Eingriffswechsel der Fahrrad-Rollenkette vom 18-T-Ritzel zum 21-T-Ritzel zu gestatten. Vorteilhaft ist am 21-T-Ritzel jeder Herunterschalt-Vertiefungsformation jeweils nur genau ein Fangzahn zugeordnet, welcher durch seine Gestalt und Orientierung dazu ausgebildet ist, im Zusammenwirken mit der ihm zugeordneten stirnseitigen Herunterschalt-Vertiefungsformation während eines Herunterschaltvorgangs vom 18-T-Ritzel auf das 21-T-Ritzel der erste Zahn zu sein, der zwischen Laschen eines Kettengliedes der Fahrrad-Rollenkette eingreift. Somit kann eine Fahrradkette, welche in definierter Zuordnung ihrer unterschiedlichen Kettengliederarten zu den Zähnen am geradzahligen 18-T-Ritzel mit dem 18-T-Ritzel im Eingriff ist, unter Berücksichtigung der definierten Zuordnung vom 18-T-Ritzel auf das 21-T-Ritzel umgelegt werden. Zur Erzielung kurzer Latenzen ist zwischen den Fangzähnen von in Umfangsrichtung benachbarten Herunterschalt-Vertiefungsformationen eine gerade Anzahl an Zähnen gelegen, wobei die Fangzähne der benachbarten Herunterschalt-Vertiefungsformationen nicht mitzuzählen sind.

Auch hier gilt, dass ein Fangzahn am 21-T-Ritzel nur dann im Zusammenwirken mit der ihm zugeordneten Herunterschalt-Vertiefungsformation eine für ein Fangen ausreichend axial dem 21-T-Ritzel angenäherte Fahrradkette in Eingriff nehmen kann, wenn der Fangzahn in ein Außenlaschen-Kettenglied eingreifen kann. Dies ist aufgrund der oben beschriebenen Anordnung für einen der beiden Fangzähne stets der Fall.

Dadurch, dass, wie zuvor beim Abgabezahn, jeder Herunterschalt-Vertiefungsformation nur ein Fangzahn zugeordnet ist, wird das Ritzel lokal im Bereich der Herunterschalt-Vertiefungsformation nur soweit geschwächt, als es notwendig ist. Durch den vom ersten Fangzahn bzw. Abgabezahn entfernt angeordneten weiteren Fangzahn bzw. Abgabezahn wird zwar die Latenz erhöht, jedoch die Schwächung des Ritzels durch Ausbildung des Fangzahns bzw. Abgabezahns lokal begrenzt und auf mit Abstand voneinander angeordnete Umfangsstellen verteilt. Damit wird die Verschleißfestigkeit des gesamten Ritzels erhöht. Im Gesamtergebnis ist die geringfügig erhöhte Schaltlatenz durch die erhöhte Verschleißfestigkeit überkompensiert.

Noch kürzere Schaltlatenzen können erhalten werden, wenn das 21-T-Ritzel
i) genau drei Hochschaltbereiche mit je einer Hochschalt-Vertiefungsformation und je genau einem Abgabezahn aufweist, wobei zwischen den Abgabezähnen von in Umfangsrichtung benachbarten Hochschalt-Vertiefungsformationen jeweils eine gerade Anzahl an Zähnen, vorzugsweise sechs Zähne, gelegen sind, wobei die Abgabezähne der benachbarten Hochschalt-Vertiefungsformationen nicht mitzuzählen sind,
   oder/und
ii) genau drei Herunterschaltbereiche mit je einer Herunterschalt-Vertiefungsformation und je genau einem Fangzahn aufweist, wobei zwischen den Fangzähnen von in Umfangsrichtung benachbarten Herunterschalt-Vertiefungsformationen jeweils eine gerade Anzahl an Zähnen, vorzugsweise sechs Zähne, gelegen sind, wobei die Fangzähne der benachbarten Herunterschalt-Vertiefungsformationen nicht mitzuzählen sind.

Bevorzugt sind zur Erhöhung der Verschleißfestigkeit die Fangzähne äquidistant am Umfang des 21-T-Ritzels verteilt oder/und sind die Abgabezähne äquidistant am Umfang des 21-T-Ritzels verteilt.

Einen besonders vorteilhaften synergistischen Effekt erhält man durch Anordnung eines Fangzahns als unmittelbaren Nachbarzahn eines Abgabezahns. Bevorzugt ist der Fangzahn dem Abgabezahn im Uhrzeigersinn benachbart. Da immer nur genau ein Fangzahn bei einem Ritzelumlauf die Kette tatsächlich fangen kann, gilt jeder Zahn als Fangzahn, der in seiner körperlichen Ausgestaltung dem tatsächlich fangenden Zahn entspricht. Der Fangzahn ist, wie oben bereits beschrieben, nicht nur dünner als ein regulärer Zahn ausgebildet, sondern seine vom kleineren Ritzel abgewandte Zahnfläche ist, verglichen mit regulären Zähnen des 21-T-Ritzels, dem kleineren Ritzel angenähert. Somit kann ein solcher Fangzahn im Uhrzeigersinn dem Abgabezahn benachbart als ein oben beschriebener Hochschalt-Mobilisierungszahn dienen, welcher der Kette axialen Bewegungsraum bietet und so ein Umlegen auf das 18-T-Ritzel erleichtert.

Ebenso kann der folglich im Gegenuhrzeigersinn dem Fangzahn benachbarte Abgabezahn, welcher aufgrund seiner Funktion ebenfalls dünner als ein regulärer Zahn des 21-T-Ritzels ist und dessen vom kleineren Ritzel abgewandte Zahnfläche, verglichen mit einem regulären Zahn des einer 21-T-Ritzels dem kleineren Ritzel angenähert ist, dem Fangzahn als Herunterschalt-Mobilitätszahn dienen, welcher dem Innenlaschen-Kettenglied, das dem vom Fangzahn in Eingriff genommenen Außenlaschen-Kettenglieder im Gegenuhrzeigersinn folgt, zum einen eine räumliche Nähe zum kleineren 18-T-Ritzel gestattet und zum anderen in den kleineren Eingriffsraum des Innenlaschen-Kettenglieds kämmend eingreifen kann.

Eine solche Anordnung eines Paars aus einem Abgabezahn und einem dem Abgabezahn unmittelbar im Uhrzeigersinn benachbarten Fangzahn stellt ein besonders definiertes Schaltverhalten sowohl vom 18-T-Ritzel auf das 21-T-Ritzel als auch im entgegengesetzten Schaltsinn sicher. Vorzugsweise ist mehr als ein Paar aus einem solchen Abgabezahn und einem dem Abgabezahn im Uhrzeigersinn benachbarten Fangzahn am 21-T-Ritzel angeordnet. Beispielsweise können zwei oder drei solcher Paare am 21-T-Ritzel angeordnet sein.

Bevorzugt sind sowohl der Abgabezahn als auch der im Uhrzeigersinn unmittelbar benachbarte Fangzahn, welche einander gegenseitig als Mobilisierungszähne ausgebildet sind, auf ihrer vom 18-T-Ritzel abgewandten Seite mit einer Rampe versehen, auf welche sich eine Kettenlasche durch radialen Anlageeingriff abstützen kann. Die Rampe weist eine nach radial außen weisende Rampenfläche auf, welche bevorzugt durch eine gestufte Ausbildung des Abgabezahns und des Fangzahns gebildet ist. Ein radial weiter außen liegender Abschnitt von Abgabezahn und Fangzahn kann zur Erzielung der gestuften Ausbildung dünner ausgebildet sein als ein radial weiter innen liegender Abschnitt von Abgabezahn bzw. Fangzahn. Die Rampenfläche, deren axiale Abmessung bevorzugt wenigstens 50 % der Dicke einer Außenlasche der mit dem Ritzel bzw. der Ritzelkassette zusammenwirkenden Fahrradkette aufweist, um der Kette ausreichend Stützfläche zu bieten, kann zu dem dem 21-T-Ritzel benachbarten nächst größeren Ritzel hin geneigt sein, wobei die radiale Komponente des Normalenvektors der Rampenfläche betragsmäßig größer ist als seine axiale Komponente. Eine entgegengesetzte Neigung der Rampenfläche zum 18-T-Ritzel ist grundsätzlich möglich, jedoch nicht bevorzugt, da die Rampenfläche dann mit der vom 18-T-Ritzel abgewandten Zahnfläche eine V-Nut bilden könnte, in welcher sich Schmutz ansammelt.

Die Rampenfläche kann eine ebene Fläche sein. Zur Erzielung einer möglichst großen Anlagefläche einer Kettenlasche an der Rampenfläche und damit einer möglichst sicheren Abstützung der Kette radial außen an der Rampe kann die Rampenfläche wenigstens abschnittsweise komplementär zu einem nach radial innen weisenden Rand der Kettenlaschen, insbesondere der Innenlaschen, der umlaufenden Fahrradkette ausgebildet sein.

Zur Bereitstellung von Übertragungsverhältnissen, die am Hinterrad ein hohes Drehmoment ermöglichen, also zur Übertragung der Kettenblattdrehung an der Tretkurbel eher ins Starke als ins Schnelle, ist weist die Übergangs-Ritzelgruppe bevorzugt zusätzlich ein 24-T-Ritzel auf, wobei das 21-T-Ritzel axial zwischen dem 24-T-Ritzel und dem 18-T-Ritzel angeordnet ist.

Für eine vorteilhaft hinsichtlich der Kettengliederabfolge definierte Übernahme der Fahrradkette vom 21-T-Ritzel auf das 24-T-Ritzel, sodass vorbestimmten Zähnen des 24-T-Ritzels sicher Außenlaschen-Kettenglieder zum kämmenden Eingriff übergeben werden, kann das 24-Ritzel in seiner zum 21-T-Ritzel hinweisenden Stirnseite, längs seines Umfangs wenigstens zwei Herunterschaltbereiche mit je einer Herunterschalt-Vertiefungsformation aufweisen.

Am 24-T-Ritzel jeder Herunterschalt-Vertiefungsformation ist jeweils nur genau ein Fangzahn zugeordnet, welcher durch seine Gestalt und Orientierung dazu ausgebildet ist, im Zusammenwirken mit der ihm zugeordneten stirnseitigen Herunterschalt-Vertiefungsformation während eines Herunterschaltvorgangs vom 21-T-Ritzel auf das 24-T-Ritzel der erste Zahn zu sein, der zwischen Laschen eines Kettengliedes der Fahrrad-Rollenkette eingreift. Das Kettenglied der Fahrrad-Rollenkette, welches in Eingriff mit dem Fangzahn gelangt, ist in der Regel ein Außenlaschen-Kettenglied, da dieses im Zusammenwirken mit der Herunterschalt-Vertiefungsformation axial weiter in den Eingriffsbereich des Fangzahns verbracht werden kann als ein Innenlaschen-Kettenglied.

Zwischen den Fangzähnen von in Umfangsrichtung benachbarten Herunterschalt-Vertiefungsformationen ist eine ungerade Anzahl an Zähnen gelegen, wobei die Fangzähne der benachbarten Herunterschalt-Vertiefungsformationen nicht mitzuzählen sind, sodass innerhalb eines Umlaufs des 24-T-Ritzels unabhängig davon, mit welcher Relativausrichtung die Kette vom 21-T-Ritzel abgeht, sicher ein Fangzahn mit einem Außenlaschen-Kettenglied in Eingriff kommt. Dies führt zu vorteilhaft kurzen Schaltlatenzen bei gleichzeitig geringer struktureller Schwächung des 24-T-Ritzels.

Zusätzlich oder alternativ kann das 24-T-Ritzel in seiner zum 21-T-Ritzel hinweisenden Stirnseite, längs eines Abschnitts seines Umfangs wenigstens zwei Hochschaltbereiche mit je einer Hochschalt-Vertiefungsformation aufweisen.

Am 24-T-Ritzel ist zur Erhöhung seiner Verschleißfestigkeit jeder der beiden Hochschalt-Vertiefungsformationen jeweils nur genau ein Abgabezahn zugeordnet, welcher durch seine Gestalt und Orientierung dazu ausgebildet ist, im Zusammenwirken mit der ihm zugeordneten stirnseitigen Hochschalt-Vertiefungsformation während eines Hochschaltvorgangs vom 24-T-Ritzel auf das 21-T-Ritzel der letzte Zahn zu sein, der zwischen ein Laschenpaar eines Kettengliedes der Fahrrad-Rollenkette eingreift.

Zur Erzielung kurzer Schaltlatenzen beim Hochschalten ist am 24-T-Ritzel bevorzugt zwischen den Abgabezähnen von in Umfangsrichtung benachbarten Hochschalt-Vertiefungsformationen eine ungerade Anzahl an Zähnen gelegen. Dabei sind die Abgabezähne der benachbarten Hochschalt-Vertiefungsformationen nicht mitzuzählen.

Noch kürzere Schaltlatenzen können dadurch erhalten werden, dass das 24-T-Ritzel genau drei Hochschaltbereiche mit je einer Hochschalt-Vertiefungsformation und je genau einem Abgabezahn aufweist, wobei zwischen den Abgabezähnen von in Umfangsrichtung benachbarten Hochschalt-Vertiefungsformationen jeweils eine ungerade Anzahl, zur gleichmäßigen Verteilung der Latenzen längs des Ritzelumfangs bevorzugt sieben Zähne gelegen sind, wobei die Abgabezähne der benachbarten Hochschalt-Vertiefungsformationen nicht mitzuzählen sind,
oder/und dass das 24-T-Ritzel genau drei Herunterschaltbereiche mit je einer Herunterschalt-Vertiefungsformation und je genau einem Fangzahn aufweist, wobei zwischen den Fangzähnen von in Umfangsrichtung benachbarten Herunterschalt-Vertiefungsformationen jeweils eine ungerade Anzahl, bevorzugt sieben Zähne gelegen sind, wobei die Fangzähne der benachbarten Herunterschalt-Vertiefungsformationen nicht mitzuzählen sind.

Zur Erzielung einer eindeutigen Zuordnung von Ritzelzähnen zu von diesen in Eingriff genommenen Kettengliederarten an möglichst vielen Ritzeln weist die Fahrrad-Hinterradritzelkassette möglichst viele geradzahlige Ritzel auf. Daher umfasst die Ritzelkassette bevorzugt einen ersten Satz an unmittelbar axial benachbarten, unterschiedlich großen Ritzeln, zwischen welchen der Zähnezahlunterschied jeweils 2 Zähne beträgt. Bevorzugt sind diese Zähne mit Orientierungsformationen ausgebildet, welche einen Eingriff der Ritzel mit der Kette nur in einer vorbestimmten Orientierung der Kettengliederabfolge relativ zu den Ritzeln zulassen. Solche Orientierungsformationen können wenigstens einen oben beschriebenen dickeren Zahn umfassen, welcher in Umfangsrichtung zwischen zwei dünneren Zähnen angeordnet ist und nur einen Eingriff mit einem Außenlaschen-Kettenglied gestattet.

An diesen ersten Satz schließt bevorzugt wenigstens ein Ritzel an, welches von dem größten Ritzel des ersten Satzes einen Zähnezahlunterschied von 3 Zähnen aufweist. Damit die Fahrrad-Hinterradritzelkassette nur eine geringe Anzahl an ungeradzahligen Ritzeln aufweist, umfasst die Kassette bevorzugt einen zweiten Satz von unterschiedlich großen Ritzeln, von welchen axial benachbarte Ritzel jeweils einen Zähnezahlunterschied von 3 Zähnen aufweisen. Dieser zweite Satz enthält bevorzugt eine gerade Anzahl an Ritzeln, vorzugsweise zwei Ritzel. Geradzahlige Ritzel dieses zweiten Satzes sind bevorzugt wiederum mit den oben genannten Orientierungsformationen ausgebildet, welche einen Eingriff der Ritzel mit der Kette nur in einer vorbestimmten Orientierung der Kettengliederabfolge relativ zu den Ritzeln zulassen.

An den zweiten Satz kann sich ein dritter Satz von geradzahligen unterschiedlich großen Ritzeln anschließen, deren kleinstes Ritzel vom zweiten Satz und deren axial benachbarte Ritzel untereinander jeweils einen Zähnezahluntersschied von 4 Zähnen aufweisen. Bevorzugt weist wiederum jedes Ritzel des dritten Satzes oben genannte Orientierungsmittel zur Relativausrichtung der Kette relativ zu den Ritzeln bezüglich ihrer Kettengliederabfolge auf.

Eine den obigen Kriterien entsprechende besonders bevorzugte Fahrrad-Hinterradritzelkassette ist eine Zwölffach-Ritzelkassette mit folgender Zähnezahl-Abstufung: 10 - 12 - 14 - 16 - 18 - 21 - 24 - 28 - 32 - 38 - 44 - 52. Dabei sind aus den oben genannten Gründen bevorzugt alle Ritzelpaarungen mit Zähnezahlen kleiner als 21 als oben beschriebene Hinterradritzelpaarungen ausgebildet.

Die oben im Zusammenhang mit dem 21-T-Ritzel beschriebene Rampenfläche kann auch an den Ritzeln der Ritzelkassette mit größeren Zähnezahlen als 21 ausgebildet sein, etwa an den zwischen der Kettenlinie und der zur Ritzelachse orthogonalen Fahrradlängsmittelebene gelegenen Ritzeln. Die obige Beschreibung der Rampenfläche gilt auch für die bevorzugt an den Ritzeln mit Zähnezahlen größer als 21 ausgebildeten Rampenflächen. Die Rampenfläche erstreckt sich über wenigstens, vorzugsweise genau zwei benachbarte Zähne und bildet eine radiale und axiale Stufe auf der vom nächstkleineren Ritzel abgewandten Seite eines Ritzels. Die beiden benachbarten Zähne, über welche hinweg sich die Rampenfläche erstreckt, sind an den Ritzeln mit Zähnezahlen größer als 21 in der Regel kein Paar aus Abgabezahn und einem diesem unmittelbar benachbarten Fangzahn. Die Ausbildung erfolgt bevorzugt an wenigstens einem Mobilisierungszahn. Der einem mit Rampe versehenem Mobilisierungszahn benachbarte Fangzahn bzw. Abgabezahn kann ebenfalls eine Rampe aufweisen. Bevorzugt liegt die Rampe eines Fangzahns oder/und eines Abgabezahns radial weiter außen als die Rampe eines dem Fangzahn bzw. Abgabezahn unmittelbar benachbarten Mobilisierungszahns. Auch das größte Ritzel kann auf seiner vom nächstkleineren Ritzel abgewandten Seite eine Rampenfläche aufweisen oder mehrere Rampenflächen längs seines Umfangs verteilt aufweisen.

Die Rampenflächen können, wie oben beschrieben, bei größeren Ritzeln die Kette durch Anlageeingriff von Kettenlaschen radial außen an der Rampenfläche abstützen und so ein unerwünschtes Umlegen der Fahrradkette auf das nächstkleinere Ritzel beim Rückwärtstreten unter Ausnutzung des üblichen Freilaufs der Ritzelkassette verhindern. Mit zunehmender Zähnezahl entfernen sich die Ritzel zunehmend von der Kettenlinie, sodass bei Eingriff der Fahrradkette mit größer werdenden Ritzeln eine zunehmende Schrägstellung der Fahrradkette relativ zu der zur Ritzelachse orthogonalen Fahrradlängsmittelebene eintritt. Dieser Kettenschräglauf kann beim Rückwärtstreten an größeren und damit näher bei der Fahrradlängsmittelebene gelegenen Ritzeln zu einer unerwünschten Schaltbewegung der Kette zum nächstkleineren Ritzel und damit zu einem betragsmäßig geringeren Schräglauf hin führen. Die Rampenfläche kann dem entgegenwirken.

An kleineren Ritzeln, mit Zähnezahlen von 22 Zähnen und weniger, können schaltungsunterstützende Rampen auf der jeweils zum nächstkleineren Ritzel hinweisenden Seite an den Zahnflächen ausgebildet sein. Da diese Ritzel in der Regel axial außerhalb der Kettenlinie liegen, können einzelne Kettenglieder durch den Kettenschräglauf bzw. Kettenschrägzug auf den Rampen an der nach außen weisenden Zahnfläche stabil gehalten werden.

Bevorzugt stützen sich radial innere, zur Ritzelachse weisende Ränder von Innenlaschen-Kettengliedern an derartigen Rampen ab. Die Rampen weisen eine nach radial außen weisende Abstützfläche auf. Dabei können im Zusammenspiel mit einem einer Rampe axial mit Abstand benachbarten Zahnkopf eines axial benachbarten kleineren Ritzels beide Innenlaschen ein und desselben Innenlaschen-Kettengliedes beim Schalten der Kette zwischen dem kleineren Ritzel und dem auf der dem kleineren Ritzel zugewandten Seite rampentragenden größeren Ritzel radial innen körperlich abgestützt sein. Die axial weiter innen gelegene Innenlasche kann durch die Rampe und die axial weiter außen gelegene Innenlasche kann durch den Zahnkopf, insbesondere durch eine nach radial außen weisende Fläche des Zahnkopfes, abgestützt sein. Die Abstützung kann sowohl beim Herunterschalten als auch beim Hochschalten erfolgen.

Es ist aber auch denkbar, dass nur die axial weiter innen gelegene Innenlasche an einer Rampe auf der zum kleineren Ritzel weisenden Seite eines Ritzels, insbesondere einer Zahnfläche, bei einem Schaltvorgang abgestützt wird.

Die vorliegende Anmeldung betrifft auch eine Fahrrad-Antriebsbaugruppe, umfassend eine Fahrrad-Hinterradritzelpaarung, wie sie oben beschrieben ist, oder/und eine Fahrrad-Hinterradritzelkassette, wie sie oben beschrieben ist, mit einer zum kämmenden, kraftübertragenden Eingriff mit den Ritzeln der Fahrrad-Hinterradritzelpaarung bzw. der Fahrrad-Hinterradritzelkassette ausgebildeten Fahrrad-Rollenkette, wobei die Fahrrad-Rollenkette eine Mehrzahl von in einem Teilungsabstand aufeinander folgenden Kettenrollen aufweist, welche durch Paare paralleler Laschen miteinander verbunden sind, wobei die Fahrrad-Rollenkette in Kettenumlaufrichtung alternierend Innenlaschenpaare mit kleinerem Laschenabstand und Außenlaschen mit größerem Laschenabstand aufeinander folgend aufweist.

Die Fahrrad-Antriebsbaugruppe kann ein einzelnes Kettenblatt im Bereich der Tretkurbeln aufweisen, sodass jegliche Änderung eines Übertragungsverhältnisses vom vorderen Kettenblatt zur hinteren Ritzelkassette nur durch Änderung des Ketteneingriffs mit einem der Ritzel der Ritzelkassette erfolgt.

Zum Eingriff mit der oben bevorzugten Zwölffach-Ritzelkassette ist eine Fahrradkette bevorzugt, deren Kettenlaschen am radial äußeren Rand einen geradlinigen Randabschnitt zwischen den beiden durch eine Kettenlasche verbundenen Kettenrollenachsen aufweisen und deren Kettenlaschen am radial inneren Rand eine gekrümmte Randlinie derart aufweisen, dass die orthogonal zur Kettenrollenachse und orthogonal zur Kettenumlaufrichtung zu messende Laschenhöhe in einem Bereich zwischen den Kettenrollenachsen geringer ist als im Bereich der Kettenrollenachsen. So wird eine schmale und dennoch ausreichend zugfeste Fahrradkette erhalten.

Zur Erzielung eines schnellen, präzisen Schaltvorgangs mit geringem axialem Bewegungsspiel der Fahrradkette in einem Umlegeabschnitt zwischen dem aktuell kettenführenden Ritzel und dem künftig kettenführenden Ritzel gilt bevorzugt für wenigstens eine Fahrrad-Hinterradritzelpaarung, stärker bevorzugt für mehrere Fahrrad-Hinterradritzelpaarungen, dass bei einem Schaltvorgang, bei welchem die Fahrrad-Rollenkette von einem Ritzel auf ein diesem axial benachbartes Ritzel umgelegt wird, in dem Umlegeabschnitt zwischen dem letzten Kettenglied, das mit dem noch kettenführenden Ritzel in Eingriff ist, und dem ersten Kettenglied, das mit dem zukünftig kettenführenden Ritzel in Eingriff kommt oder ist, sich genau ein Innenlaschen-Kettenglied befindet. Bevorzugt befindet sich nur genau ein Innenlaschen-Kettenglied in dem Umlegeabschnitt. Wenngleich nicht ausgeschlossen sein soll, dass dieser Umlegezustand auch für Ritzelpaarungen mit einem Zähneabstand von mehr als zwei Zähnen zwischen größerem und kleinerem Ritzel gelten kann, gilt der Umlegezustand besonders für Ritzel mit einem Zähnezahlunterschied von zwei Zähnen.

Die vorliegende Erfindung wird nachfolgend anhand der beiliegenden Zeichnungen näher erläutert. Es stellt dar:
- Fig. 1: eine erfindungsgemäße Fahrrad-Hinterradritzelkassette bei Bezugsbetrachtung längs der Ritzelachse, wobei zunehmend größere Ritzel mit zunehmendem Abstand vom Betrachter angeordnet sind,
- Fig. 1A: die Ritzelkassette von Figur 1 mit Blickrichtung orthogonal zur Ritzelachse,
- Fig. 1B: die Ritzelkassette von Figur 1 mit entgegengesetzter Blickrichtung von der Längsmittelebene weg,
- Fig. 2A: eine erste erfindungsgemäße Fahrrad-Hinterradritzelpaarung der Ritzelkassette der Figuren 1 bis 1B mit einem kleineren Ritzel mit 10 Zähnen und einem größeren Ritzel mit 12 Zähnen bei Bezugsbetrachtung,
- Fig. 2B: die Fahrrad-Hinterradritzelpaarung von Figur 2A in entgegengesetzter Richtung betrachtet,
- Fig. 3A: eine zweite erfindungsgemäße Fahrrad-Hinterradritzelpaarung der Ritzelkassette der Figuren 1 bis 1B mit einem kleineren Ritzel mit 12 Zähnen und einem größeren Ritzel mit 14 Zähnen bei Bezugsbetrachtung,
- Fig. 3B: die Fahrrad-Hinterradritzelpaarung von Figur 3A in entgegengesetzter Richtung betrachtet,
- Fig. 4A: eine dritte erfindungsgemäße Fahrrad-Hinterradritzelpaarung der Ritzelkassette der Figuren 1 bis 1B mit einem kleineren Ritzel mit 14 Zähnen und einem größeren Ritzel mit 16 Zähnen bei Bezugsbetrachtung,
- Fig. 4B: die Fahrrad-Hinterradritzelpaarung von Figur 4A in entgegengesetzter Richtung betrachtet,
- Fig. 4C: die dritte erfindungsgemäße Fahrrad-Hinterradritzelpaarung der Ritzelkassette von Fig. 4A beim Herunterschalten einer Fahrradkette vom 14-T-Ritzel auf das 16-T-Ritzel, bei Bezugsbetrachtung,
- Fig. 4D: die Fahrrad-Hinterradritzelpaarung von Figur 4C in entgegengesetzter Richtung betrachtet,
- Fig. 4E: die dritte erfindungsgemäße Fahrrad-Hinterradritzelpaarung der Ritzelkassette von Fig. 4A beim Hochschalten einer Fahrradkette vom 16-T-Ritzel auf das 14-T-Ritzel, bei Bezugsbetrachtung,
- Fig. 4F: die Fahrrad-Hinterradritzelpaarung von Figur 4E in entgegengesetzter Richtung betrachtet,
- Fig. 5A: eine vierte erfindungsgemäße Fahrrad-Hinterradritzelpaarung der Ritzelkassette der Figuren 1 bis 1B mit einem kleineren Ritzel mit 16 Zähnen und einem größeren Ritzel mit 18 Zähnen bei Bezugsbetrachtung,
- Fig. 5B: die Fahrrad-Hinterradritzelpaarung von Figur 5A in entgegengesetzter Richtung betrachtet,
- Fig. 6: eine Fahrrad-Hinterradritzelpaarung der Ritzelkassette der Figuren 1 bis 1B mit einem kleineren Ritzel mit 18 Zähnen und mit einem größeren Ritzel mit 21 Zähnen bei Bezugsbetrachtung, wobei die Hinterradritzelpaarung zu einer Übergangs-Ritzelgruppe mit insgesamt drei Ritzeln gehört,
- Fig. 7: eine Fahrrad-Hinterradritzelpaarung der Ritzelkassette der Figuren 1 bis 1B mit einem kleineren Ritzel mit 21 Zähnen und mit einem größeren Ritzel mit 24 Zähnen bei Bezugsbetrachtung, wobei die Hinterradritzelpaarung zu der Übergangs-Ritzelgruppe mit insgesamt drei Ritzeln gehört,
- Fig. 8: die Fahrrad-Hinterradritzelpaarung von Figur 7 mit einer Fahrradkette, welche mit dem größeren Ritzel im Eingriff ist und herunter auf das kleinere Ritzel geschaltet wird,
- Fig. 9: eine Fahrrad-Hinterradritzelpaarung der Ritzelkassette der Figuren 1 bis 1B mit einem kleineren Ritzel mit 24 Zähnen und einem größeren Ritzel mit 28 Zähnen,
- Fig. 10: das größte Ritzel der Ritzelkassette der Figuren 1 bis 1B bei Bezugsbetrachtung,
- Fig. 10A: das Ritzel von Figur 10 mit einer Betrachtungsrichtung orthogonal zur Ritzelachse,
- Fig. 10B: das Ritzel von Figur 10 bei Betrachtung längs der Ritzelachse mit Blickrichtung von der Längsmittelebene weg, und
- Fig. 11: ein mit der Ritzelkassette der Figuren 1 bis 1B ausgestattetes Fahrrad.

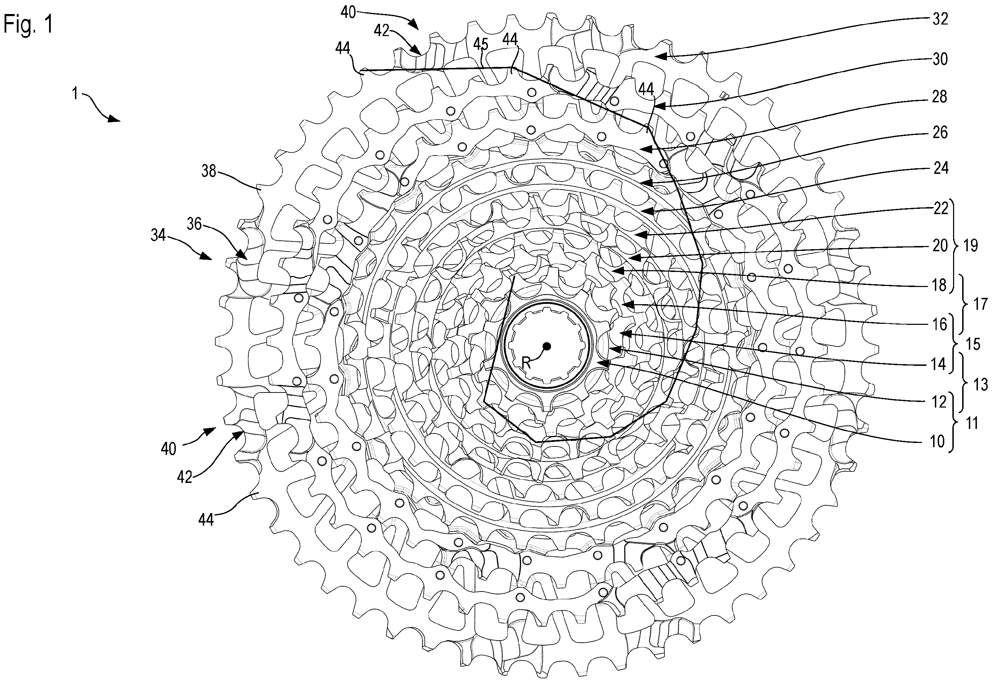

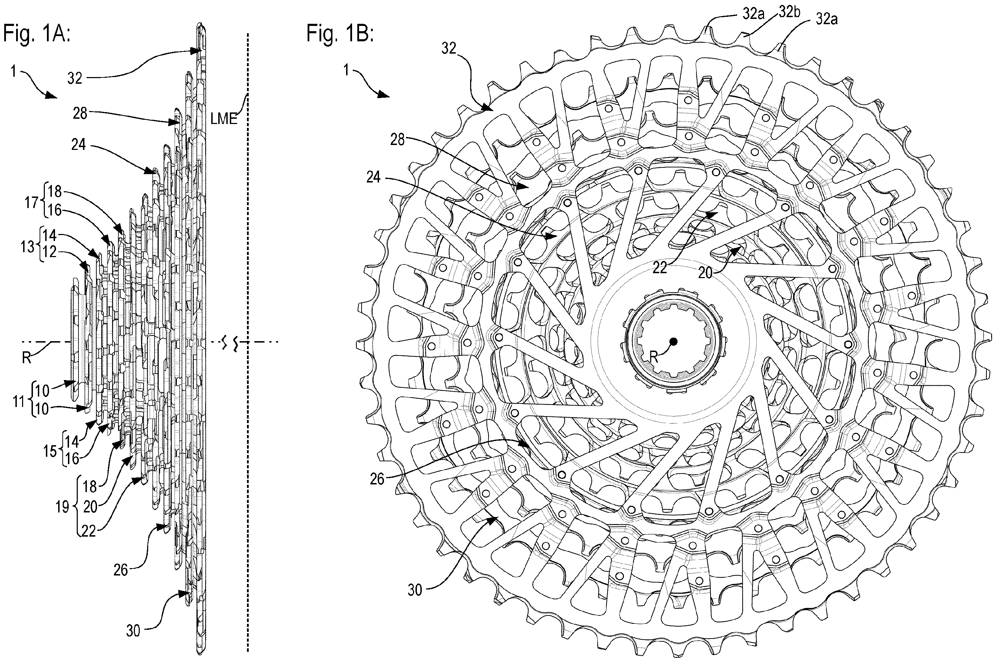

In Figur 1 ist eine bevorzugte erfindungsgemäße Ausführungsform einer Fahrrad-Hinterradritzelkassette mit zwölf koaxialen, schlupffrei zur gemeinsamen Drehung um die zur Zeichenebene von Figur 1 orthogonale Ritzelachse R miteinander verbundenen Ritzeln allgemein mit 1 bezeichnet.

Die Betrachtung der Ritzelkassette 1 in Figur 1 entspricht der zuvor in der Beschreibungseinleitung beschriebenen Bezugsbetrachtung, d. h. mit Blickrichtung längs der Ritzelachse R, wobei das kleinste Ritzel dem Betrachter von Figur 1 am nächsten gelegen ist und das größte Ritzel im Betrachter von Figur 1 am fernsten gelegen ist.

Die Zähnezahl-Abstufung der Ritzelkassette 1 von Figur 1 beträgt: 10 - 12 - 14 - 16 - 18 - 21 - 24 - 28 - 32 - 38 - 44 - 52. Die Ritzelkassette 1 umfasst also ein kleinstes Ritzel 10 mit zehn Zähnen, ein diesem axial benachbartes Ritzel 12 mit 12 Zähnen, ein nächst größeres Ritzel 14 mit 14 Zähnen, ein wiederum nächst größeres Ritzel 16 mit 16 Zähnen, und ein diesem axial benachbartes Ritzel 18 mit 18 Zähnen.

Das dem Ritzel 18 benachbarte nächst größere Ritzel 20 ist ein Übergangsritzel mit 21 Zähnen. Auf dieses folgt ein Ritzel 22 mit 24 Zähnen, ein Ritzel 24 mit 28 Zähnen, in Ritzel 26 mit 32 Zähnen, in Ritzel 28 mit 38 Zähnen, ein Ritzel 30 mit 44 Zähnen und schließlich als größtes Ritzel ein Ritzel 32 mit 52 Zähnen.

Von diesen Ritzeln 10 bis 32 bilden die unmittelbar benachbarten Ritzelpaarungen der Ritzel 10 bis 18 jeweils eine oben beschriebene erfindungsgemäße Fahrrad-Hinterradritzelpaarung.

Dabei sind die Ritzel 12 bis 16 jeweils Ritzel zweier Ritzelpaarungen, einmal als kleineres Ritzel der Ritzelpaarung und einmal als größeres Ritzel der Ritzelpaarung. Zu bilden die Ritzel 10 und 12 eine Fahrrad-Hinterradritzelpaarung 11, die Ritzel 12 und 14 eine Fahrrad-Hinterradritzelpaarung 13, die Ritzel 14 und 16 eine Fahrrad-Hinterradritzelpaarung 15 und die Ritzel 16 und 18 eine Fahrrad-Hinterradritzelpaarung 17.

Die beiden axial dem einzigen ungeradzahligen Übergangsritzel 20 in der Ritzelkassette 1 benachbarten Ritzel 18 und 22 bilden gemeinsam mit dem Übergangsritzel 20 eine Übergangs-Ritzelgruppe 19.

Zur Erleichterung von Schaltvorgängen zwischen axial benachbarten Ritzeln weisen die Ritzel, mit Ausnahme des kleinsten Ritzels 10, jeweils wenigstens einen Hochschaltbereich 34 mit einer Hochschalt-Vertiefungsformation 36 und einem Abgabezahn 38 auf und weisen jeweils wenigstens einen Herunterschaltbereich 40 mit einer Herunterschalt-Vertiefungsformation 42 und einem Fangzahn 44 auf.

Der besseren Übersichtlichkeit wegen ist in Figur 1 nur das größte Ritzel 32 mit 52 Zähnen mit Bezugszeichen für den Hochschaltbereich 34 mit der Hochschalt-Vertiefungsformation 36 und dem Abgabezahn 38 sowie für den Herunterschaltbereich 40 mit der Herunterschalt-Vertiefungsformation 42 und dem Fangzahn 44 versehen.

Die Bereiche: Hochschaltbereich 34 und Herunterschaltbereich 40, beziehen sich stets auf dasjenige Ritzel, an dem die Bereiche ausgebildet sind. Dies bedeutet, der Hochschaltbereich 34 erleichtert ein Umlegen einer Fahrradkette von dem den Hochschaltbereich 34 tragenden Ritzel auf das axial benachbarte nächst kleinere Ritzel und der Herunterschaltbereich 40 erleichtert ein Umlegen der Fahrradkette von dem nächst kleineren Ritzel auf das den Herunterschaltbereich 40 tragende Ritzel.

Die Vertiefungsformationen 36 und 42 gestatten die axiale Annäherung der Fahrradkette an das die jeweiligen Vertiefungsformationen tragende Ritzel, da insbesondere Außenlaschen in die als axiale stirnseitige Ausnehmungen gestalteten Vertiefungsformationen eintauchen können. Ohne Ausbildung von Vertiefungsformationen an den genannten Stellen würden die Außenlaschen der Fahrradkette mit der Stirnseite des Ritzels kollidieren, was die axiale Annäherung der Fahrradkette an die die Vertiefungsformationen aufweisende Stirnseite begrenzen würde.

Die Vertiefungsformationen 36 und 42 können mehrere unterschiedliche Flächenfacetten aufweisen, welche relativ zueinander eine unterschiedliche Position bezüglich der Ritzelachse R oder/und eine unterschiedliche Neigung aufweisen können. Dadurch kann erreicht werden, dass die Fahrradkette nur mit einer vorbestimmten Relativstellung bezüglich ihrer Außenlaschen und Innenlaschen in die Vertiefungsformationen 36 oder 42 eintauchen kann und bei um eine Kettenteilung in Kettenumlaufrichtung versetzter Relativstellung von einer Flächenfacette axial abgewiesen wird. Die Flächenfacette kann derart ausgebildet sein, dass sie in den Zwischenraum zwischen zwei in Kettenumlaufrichtung aufeinanderfolgenden Außenlaschen zu einer zwischen den Außenlaschen gelegenen Innenlasche hin eindringen kann, jedoch eine zwischen zwei Innenlaschen gelegene Außenlasche körperlich axial von dem sie tragenden Ritzel abweist.

Fangzähne 44 der einzelnen Ritzel der Hinterradkassette 1 liegen bei Bezugsbetrachtung der Hinterradkassette 1 auf einer sich im Gegenuhrzeigersinn nach radial außen drehenden Wendel 45.

In Figur 1A ist die Ritzelkassette 1 mit Blickrichtung orthogonal zur Ritzelachse R dargestellt. Zur Erläuterung ist die zuvor bereits erwähnte zur Ritzelachse R orthogonale Längsmittelebene LME des die Ritzelkassette 1 tragenden Fahrrads strichliniert dargestellt. Der tatsächliche Abstand zwischen der Längsmittelebene LME und der Ritzelkassette 1 ist größer als in der verkürzten Darstellung von Figur 1A.

Die Ritzel 10 bis 30 sind bevorzugt einstückig als ein sogenannter Ritzeldom ausgebildet, beispielsweise durch spanendes Bearbeiten aus dem Vollen. Abweichend hiervon können alternativ die beiden kleinsten Ritzel 10 und 12 als einzelne Ritzel ausgebildet sein. Die beiden kleinsten Ritzel 10 und 12 können dann über eine Nutmutter mit dem Ritzeldom der Ritzel 14 bis 30 verbunden sein. Das größte Ritzel 32 ist als einzelnes Ritzel ausgebildet. Der Ritzeldom kann in an sich bekannter Weise mit Stiften oder Nieten oder stoffschlüssig mit den Streben des Ritzels 32 zur Übertragung von Drehmoment verbunden sein.

Der axiale Abstand zwischen den einander unmittelbar benachbarten Ritzeln ist in der Regel kleiner als die Zahnhöhe eines regulär geformten Zahns der Ritzel. Der geringe axiale Abstand zwischen den einzelnen Ritzeln erfordert eine sehr schmale Kette und eine äußerst präzise Gestaltung der verzahnten Umfangsbereiche der einzelnen Ritzel.

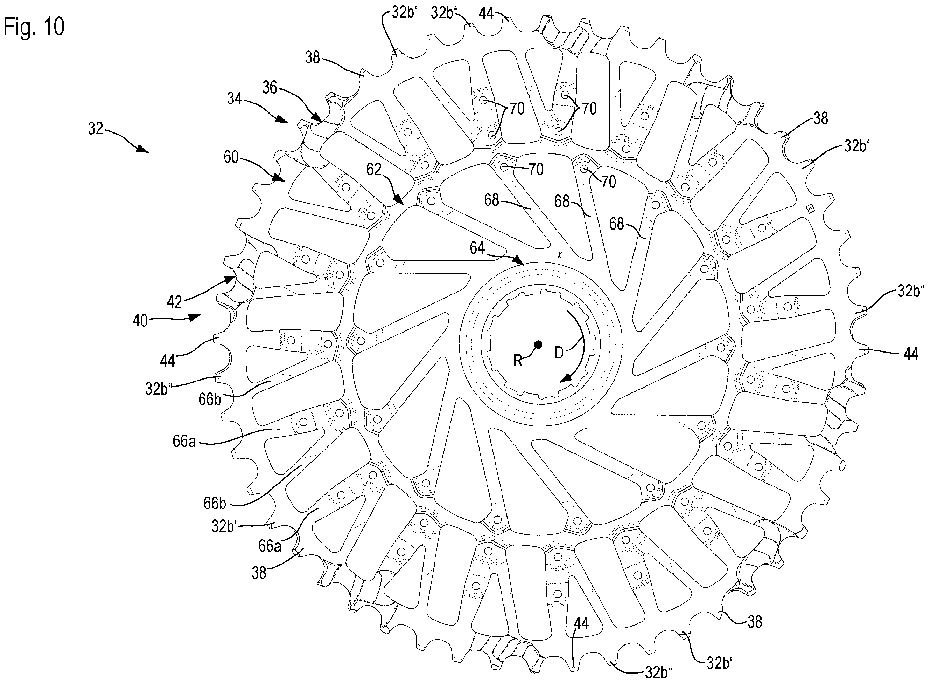

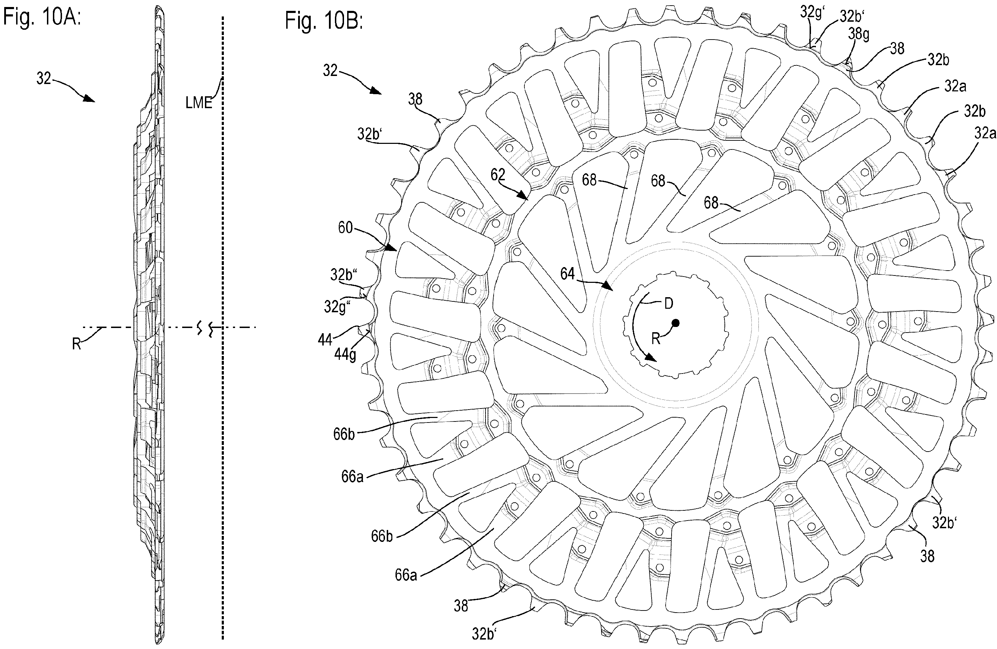

Figur 1B zeigt die Ritzelkassette 1 von innen, also von der Längsmittelebene LME aus längs der Ritzelachse R betrachtet. Soweit die kleineren Ritzel durch die zwischen den Streben des größten Ritzels 32 gebildeten Durchgänge hindurch erkennbar sind, sind sie mit Bezugszeichen bezeichnet. Ansonsten wird zur weiteren Beschreibung des größten Ritzels auf die unten folgende Erläuterung der Figuren 10 bis 10B verwiesen.

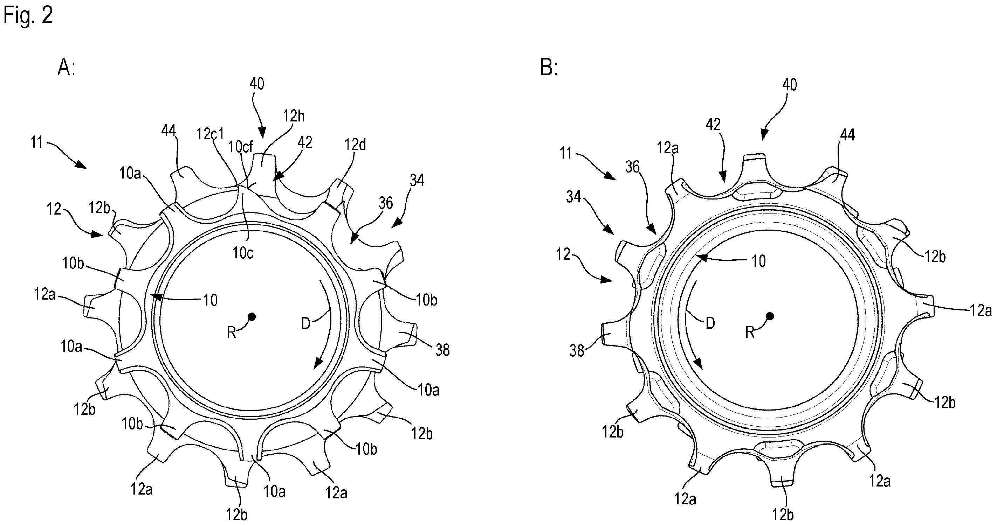

Figur 2A zeigt die kleinste Fahrrad-Hinterradritzelpaarung 11 der Ritzelkassette 1 in Bezugsbetrachtung. Figur 2B zeigt dieselbe Fahrrad-Hinterradritzelpaarung 11 bei axialer Betrachtung, jedoch "von innen", also derart, dass das größere Ritzel 12 dem Betrachter von Figur 2B näher gelegen ist als das kleinere Ritzel 10.

Das kleinere Ritzel 10 ist bevorzugt als Synchronisierungsritzel mit dickeren Zähnen 10a und mit dünneren Zähnen 10b ausgebildet. Die axiale Dicke der der dickeren Zähne 10a ist dabei derart gewählt, dass sie nur in den Eingriffsraum eines Außenlaschen-Kettenglieds passen, jedoch dicker sind als der Abstand zwischen zwei parallelen Innenlaschen eines Innenlaschen-Kettenglieds. Eine Fahrradkette kann daher in Bezug auf Ihre Folge von längs der Kettenumlaufrichtung alternierenden Kettengliederarten nur in genau einer Relativausrichtung mit dem Ritzel 10 kämmen, nämlich dann, wenn den dickeren Zähnen 10a Außenlaschen-Kettenglieder zugeordnet sind. Wegen der geraden Anzahl an Kettengliedern in einem Fahrradkettenumlauf und wegen der geraden Anzahl an Zähnen des Ritzels 10 bleibt eine einmal hergestellte Zuordnung eines Zahns zu einer Kettengliederart während der gesamten Eingriffsdauer des Ritzels 10 mit der Kette über alle Ritzelumläufe hinweg erhalten. Ein Zahn 10c des kleinsten Ritzels 10 weist einen abgerundeten und dadurch radial verkürzten Zahnkopf auf, um ein Umlegen der Fahrradkette vom Ritzel 10 auf das axial benachbarte nächst größere Ritzel 12 zu erleichtern und eine Kollision der Kette mit dem Zahn 10c zu vermeiden.

Am größeren Ritzel 12 der Ritzelpaarung 11 ist genau ein Hochschaltbereich 34 mit genau einer Hochschalt-Vertiefungsformation 36 und genau einem im Uhrzeigersinn der Hochschalt-Vertiefungsformation 36 unmittelbar benachbarten Abgabezahn 38 ausgebildet. Der Abgabezahn 38 ist der erste Zahn im Uhrzeigersinn, welcher nicht an seiner zum kleineren Ritzel 10 hinweisenden Zahnfläche durch die Hochschalt-Vertiefungsformation 36 verändert ist. Der Abgabezahn 38 ist also im Uhrzeigersinn der erste Zahn, zu dem sich die Hochschalt-Vertiefungsformation 36 nicht mehr erstreckt. Am größeren Ritzel 12 ist außerdem genau ein Herunterschaltbereich 40 ausgebildet, welcher im Gegenuhrzeigersinn einen längeren Abstand zum Hochschaltbereich 34 hat als im Uhrzeigersinn. Die einzige Herunterschalt-Vertiefungsausnehmung 42 erstreckt sich im Gegenuhrzeigersinn nicht mehr bis zum einzigen Fangzahn 38, der folglich der erste von der Herunterschalt-Vertiefungsausnehmung 42 nicht mehr in seiner Gestalt veränderte Zahn ist, der im Gegenuhrzeigersinn auf die Herunterschalt-Vertiefungsausnehmung 42 folgt.

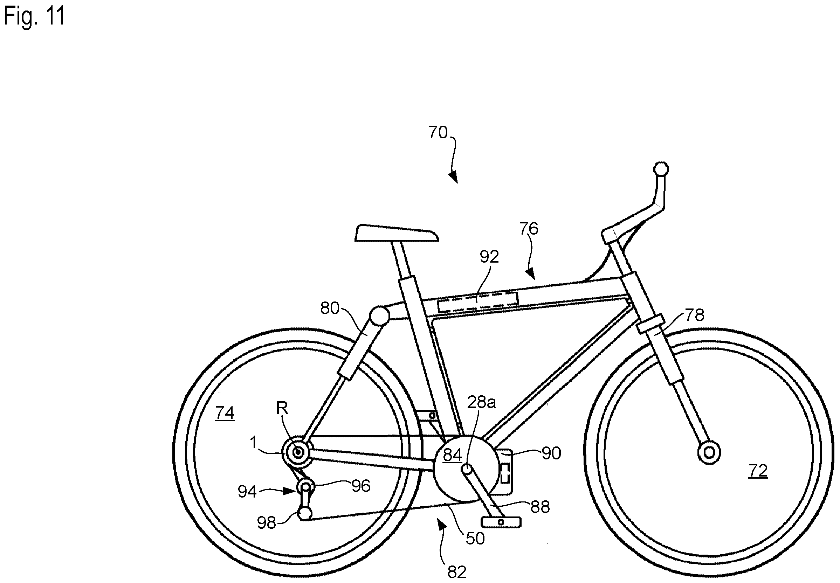

Der in Umfangsrichtung verlaufende Pfeil D zeigt die Antriebsdrehrichtung der Ritzelpaarung 11 im Antriebsbetrieb an dem in Figur 11 gezeigten Fahrrad 70 an.

Wie man auf der Rückansicht des Ritzels 12 von Figur 2B erkennt, weist auch das Ritzel 12 dickere Zähne 12a und dünnere Zähne 12b auf, von welchen die dickeren Zähne 12a aufgrund ihrer Dickenabmessung nur in Außenlaschen-Kettenglieder kämmend eingreifen können. Der Abstand zweier paralleler Innenlaschen eines Innenlaschen-Kettengliedes ist geringer als die Dicke der Zähne 12a. Folglich kann die Fahrradkette auch am größeren Ritzel 12 nur in einer bestimmten Relativlage umlaufen, nämlich dann, wenn den Zähnen 12a jeweils ein Außenlaschen-Kettenglied zugeordnet ist.

Durch die Verwendung nur eines Abgabezahns 38 und nur eines Fangzahns 44 kann eine gerichtete Übergabe der Fahrradkette mit der für einen kämmenden Eingriff mit dem jeweiligen Ritzel 10 bzw. 12 notwendigen Relativlage zwischen den Ritzeln 10 und 12 sicher erfolgen. Dabei ist für jede Schaltrichtung nur genau ein Zahn zu schwächen, was ein insgesamt verschleißfestes größeres Ritzel 12 ergibt.

Die Anordnung des Fangzahns 44 und des Abgabezahns 38 längs des Umfangs des größeren Ritzels 12 in der gezeigten Form hat eine weitere verschleißmindernde Wirkung auf das zweitkleinste Ritzel 12 der Kassette 1, denn der Hochschaltbereich 34 und der Herunterschaltbereich 40 gehen ineinander über, was eine Schwächung einer sehr geringen Anzahl von Zähnen durch die Vertiefungsformationen 36 und 42 bedeutet. Somit können viele Zähne mit möglichst großen Lastflanken ausgebildet werden, was ihnen eine gute Lasttragfähigkeit verleiht. Mit zunehmender Lasttragfähigkeit des Ritzels 12 sinkt dessen Verschleißneigung, verglichen mit einer geringeren Lasttragfähigkeit des Ritzels 12. Ausgehend vom Fangzahn 44 liegen im Uhrzeigersinn zwischen dem Fangzahn 44 und dem Abgabezahn 38 im dargestellten Ausführungsbeispiel drei Zähne des größeren Ritzels 12 der Ritzelpaarung 11.

Ausgehend vom Abgabezahn 38 liegen zwischen dem Abgabezahn 38 und dem Fangzahn 44 sieben Zähne des größeren Ritzels 12, dies entspricht der Zähnezahl des Ritzels 12 minus 5. Es hat sich nämlich gezeigt, dass ausgehend vom Abgabezahn 38 ein möglichst großer Abstand des Fangzahns 44 im Uhrzeigersinn vom Abgabezahn 38 zu einem vorteilhaften Verschleißbild des Ritzels 12 im Betrieb führt, und zwar insbesondere dann, wenn das mit der Ritzelkassette 1 ausgestattete Fahrrad elektromotorisch unterstützt angetrieben ist und somit, verglichen mit Antrieb durch reiner Muskelkraft, dauerhaft ein höheres Drehmoment auf die kleineren Ritzel der Ritzelkassette 1 übertragen wird. Im dargestellten Beispiel sind diese kleineren Ritzel die Ritzel 10 bis 18.

An dem mittleren Zahn der drei im Uhrzeigersinn zwischen dem Fangzahn 44 und dem Abgabezahn 38 gelegenen Zähne ist eine Abweisfläche 12d ausgebildet, welche sowohl Teil der Herunterschalt-Vertiefungsformation 42 als auch Teil der Hochschalt-Vertiefungsformation 36 ist. Die Abweisfläche 12d, die gegenüber der Stirnfläche des Ritzels 12 vertieft, jedoch gegenüber ihren in Umfangsrichtung benachbarten Ausnehmungsabschnitt in erhöht ist und axial vorsteht, ist dazu ausgebildet, in den Zwischenraum zwischen zwei Außenlaschen einzugreifen. Sollte beim Schaltvorgang, aus welchen Gründen auch immer, an der Stelle der Abweisfläche 12d keine Innenlasche sondern eine Außenlasche gelegen sein, wird die Kette körperlich durch Anlage der Außenlasche an der Abweisfläche 12d an einer für ein Umlegen der Kette notwendigen axialen Annäherung an die Stirnfläche des Ritzels 12 gehindert und die Kette somit abgewiesen.

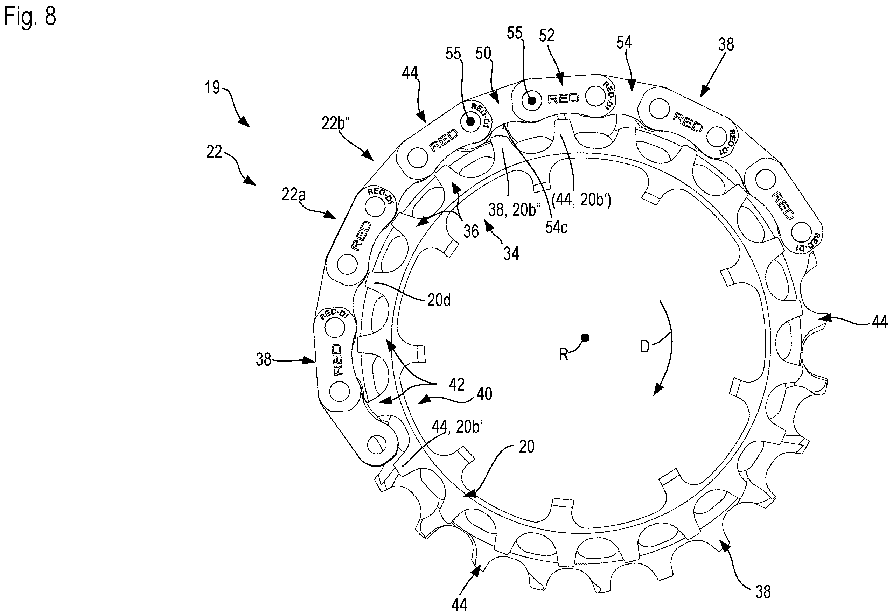

Beim Herunterschalten der Kette vom Ritzel 10 auf das Ritzel 12 kann sich ein nach radial innen weisender innerer Rand 54c (siehe Fig. 8) einer Innenlasche eines Innenlaschen-Kettenglieds 54 (s. Fig. 8) körperlich auf einer nach radial außen weisenden Kopffläche 10cf des Zahns 10c abstützen. Der innere Rand 54c ist zwischen den Kettenrollenachsen 55 (s. Fig. 8) konkav geformt. Für eine möglichst flächige und sichere Abstützung ist daher die Kopffläche 10cf konvex geformt, wobei das in Antriebsdrehrichtung D vorauseilende Ende der Kopffläche 10cf radial weiter innen gelegen ist als das nachlaufende Ende der Kopffläche 10cf. Bevorzugt ist die konvexe Gestalt der Kopffläche 10cf komplementär zum konkaven inneren Rand 54c der Kette 50 ausgebildet.

Die Ritzelpaarung 11 weist hier eine Besonderheit auf: der bei Bezugsbetrachtung hinter dem Zahn 10c liegende Zahn des Ritzels 12 weist an seiner zum kleineren Ritzel 10 hinweisenden Zahnfläche eine Abweisfläche 12h auf, die Teil der Herunterschalt-Vertiefungsausnehmung 42 des Herunterschaltbereichs 40 ist. An dieser Abweisfläche 12h kann ein Innenlaschen-Kettenglied auf der dem kleineren Ritzel 10 zugewandten Seite des Ritzels 12 zum Fangzahn 44 des Ritzels 12 hin vorbeigehen, ein Außenlaschen-Kettenglied jedoch nicht.

Die Abweisfläche 12h endet radial innen an einer Rampe 12c1, welche eine nach radial außen weisende, bevorzugt ebenfalls konvex gekrümmte Abstützfläche aufweist, die gegenüber der Abweisfläche 12h axial vorsteht.

Ein Innenlaschen-Kettenglied kann daher beim Herunterschalten vom Ritzel 10 auf das Ritzel 12 mit seinen beiden Innenlaschen an der Ritzelpaarung abgestützt werden, nämlich mit der axial weiter außen liegenden Innenlasche auf der Kopffläche 10cf und mit der weiter innen liegenden Innenlasche auf der Rampe 12c1. So kann die Kette im Umlegeabschnitt gut geführt werden. Der Kettenschräglauf bei Ketteneingriff mit den axial außerhalb der Kettenlinie liegenden Ritzeln 10 und 12 unterstützt die Anlage der Innenlasche an der Abweisfläche 12h und an der Rampe 12c1, denn an außerhalb der Kettenlinie gelegenen Ritzeln bewirkt der Kettenschräglauf eine Kraft am eingreifenden Ritzel nach axial innen.

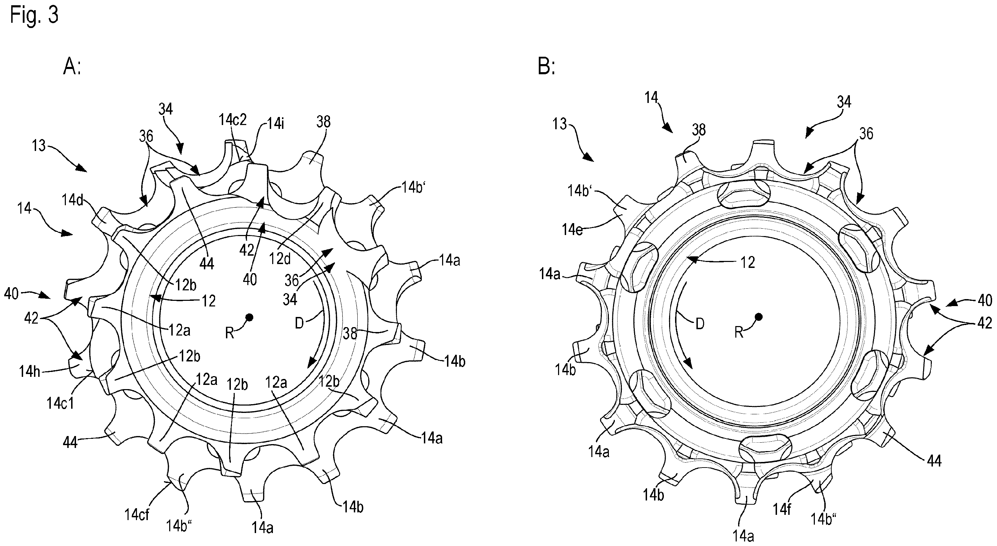

Die Figuren 3A und 3B zeigen die Fahrrad-Hinterradritzelpaarung 13 mit dem bereits aus den Figuren 2A und 2B bekannten Ritzel 12, diesmal als kleineres Ritzel der Paarung 13, und mit dem Ritzel 14 als größeres Ritzel. Figur 3A zeigt die Fahrrad-Hinterradritzelpaarung 13 bei Bezugsbetrachtung von außen, Figur 3B zeigt die Fahrrad-Hinterradritzelpaarung 13 axial in entgegengesetzter Richtung betrachtet, also von innen.

Am größeren Ritzel 14 der Ritzelpaarung 13 sind mit gleichen Kleinbuchstaben gleiche Zähnearten bzw. Zahnflächen bezeichnet wie am Ritzel 12. Auch die Ritzelpaarung 13 weist zur Erhöhung ihrer Verschleißfestigkeit nur genau einen Hochschaltbereich 34 mit genau einer Hochschalt-Vertiefungsformation 36 und genau einem Abgabezahn 38 auf. Die Hochschalt-Vertiefungsformation 36 des Ritzels 14 weist wiederum Flächenfacetten auf, die alle gegenüber der Stirnfläche des Ritzels 14 axial vertieft angeordnet sind, jedoch betragsmäßig unterschiedlich stark vertieft sein können oder/und relativ zueinander geneigt sein können, um beispielsweise eine Neigung der Kette um ihre Kettenlängsrichtung zu gestatten und so eine radial innen an der Kette gelegene Einführöffnung in einen Eingriffsraum eines Außenlaschen-Kettenglieds hinein um die Kettenlängsrichtung zum Zahnkopf des Fangzahns 44 hin zu neigen oder um die noch am Abgabezahn 38 in Eingriff befindliche Kette um die Kettenlängsrichtung am Abgabezahn zum kleineren Ritzel 12 hin neigen zu können.

Ausgehend vom Fangzahn 44 liegen im Uhrzeigersinn zwischen dem Fangzahn 44 und dem Abgabezahn 38 des Ritzels 14 fünf Zähne, von welchem der mittlere auf seiner zum kleineren Ritzel 12 hinweisenden Zahnfläche eine Abweisfläche 14d aufweist. Diese hat die gleiche Funktion wie sie zuvor für die Abweisfläche 12d am kleineren Ritzel 12 beschrieben wurde.

Ausgehend von dem Abgabezahn 38 liegen zwischen dem Abgabezahn 38 und dem Fangzahn 44 des Ritzels 14 sieben Zähne, welche als herkömmliche Zähne 14a und 14b ausgebildet sein können, wobei wiederum die Zähne 14a dicker als die Zähne 14b ausgebildet sein können und zwar vorteilhaft mit einer Dicke, welche die lichte Weite des Eingriffsraums zwischen zwei parallelen Innenlaschen eines Innenlaschen-Kettenglieds übersteigt. Die Anzahl an im Uhrzeigersinn zwischen dem Abgabezahn 38 und dem Fangzahn 44 des Ritzels 14 gelegenen Zähnen entspricht der Zähnezahl des Ritzels 14 minus 7.

In der Rückansicht von innen des Ritzels 14 in Figur 3B erkennt man, dass der in Figur 3A dem Abgabezahn 38 im Uhrzeigersinn folgende dünne Zahn 14b auf seiner vom kleineren Ritzel 12 abgewandten Zahnfläche eine Ausnehmungsfläche 14e aufweist, welche diesen speziellen dünnen Zahn 14b als Mobilisierungszahn 14b' eines Hochschaltvorgangs ausbildet, der einem von ihm in Eingriff genommenen Innenlaschen-Kettenglied einer Fahrradkette mehr axiales Bewegungsspiel lässt als ein gewöhnlicher dünner Zahn 14b.

Ebenso erkennt man in Figur 3B, dass der in Figur 3A dem Fangzahn 44 im Gegenuhrzeigersinn benachbarte dünne Zahn 14b auf seiner vom kleineren Ritzel 12 abgewandten Zahnfläche eine Ausnehmungsfläche 14f aufweist, welche diesen speziellen dünnen Zahn 14b als Mobilisierungszahn 14b" eines Herunterschaltvorgangs ausbildet, der einem von ihm in Eingriff genommenen Innenlaschen-Kettenglied mehr axiales Bewegungsspiel lässt als ein gewöhnlicher dünner Zahn 14b.

Der Hochschalt-Mobilisierungszahn 14b' unterstützt somit durch das von ihm der Fahrradkette eingeräumte Bewegungsspiel einen Hochschaltvorgang. Der Herunterschalt-Mobilisierungszahn 14b" unterstützt einen Herunterschaltvorgang.

Ausgehend vom Abgabezahn 38 liegen zwischen dem Abgabezahn 38 und dem Fangzahn 44 des Ritzels 14 fünf Zähne.

Der im Uhrzeigersinn dem Fangzahn 44 des Ritzels 14 benachbarte Zahn weist wiederum eine Abweisfläche 14h auf, welche nach radial innen durch eine Rampe 14c1 mit nach radial außen weisender Abstützfläche zur körperlichen Abstützung einer Innenlasche eines Innenlaschen-Kettenglieds beim Herunterschalten begrenzt ist.

Der dem Abgabezahn 38 des Ritzels 14 im Gegenuhrzeigersinn weist benachbarte Zahn weist eine Abweisfläche 14i auf, welche nach radial innen durch eine Rampe 14c2 mit nach radial außen weisender Abstützfläche zur körperlichen Abstützung einer Innenlasche eines Innenlaschen-Kettenglieds beim Hochschalten vom Ritzel 12 auf das Ritzel 14 begrenzt ist. Wie die Abweisfläche 14h im Herunterschaltbereich 40 gestattet die Abweisfläche 14i im Hochschaltbereich 34 beim Hochschalten auf das Ritzel 14 einen Vorbeigang eines Innenlaschen-Kettengliedes, nicht jedoch eines Außenlaschen-Kettengliedes der Fahrradkette. Die Rampe 14c2 mit ihrer nach radial außen weisenden Abstützfläche ist bevorzugt entsprechend der konkaven Gestalt einer Innenlasche 54c konvex geformt, um eine möglichst flächige Anlage der Innenlasche zu ermöglichen.

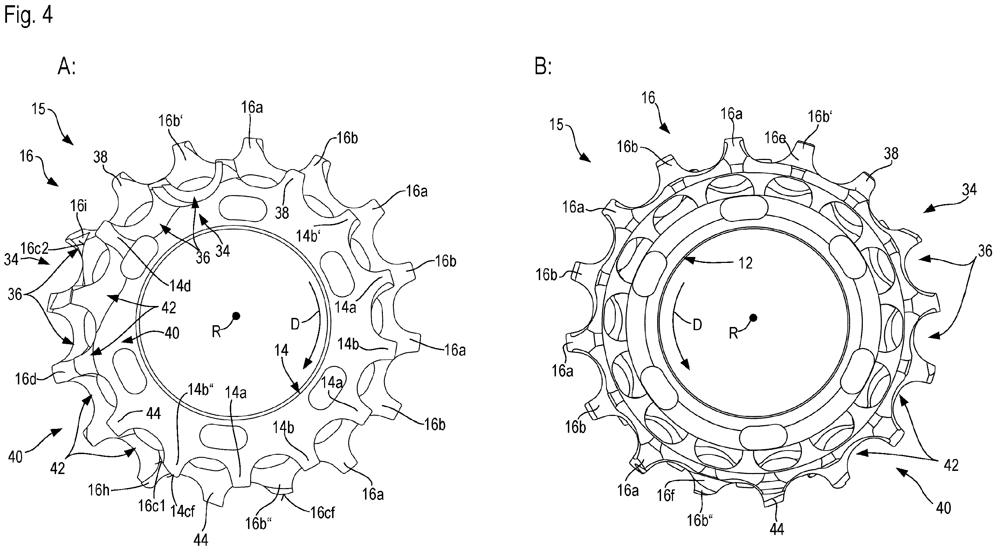

In den Figuren 4A und 4B ist die Fahrrad-Hinterradritzelpaarung 15 mit den Ritzeln 16 und 14 dargestellt, und zwar in Figur 4A in Bezugsbetrachtung und in Figur 4B in entgegengesetzter Richtung betrachtet, also von innen. Das Ritzel 14 der Fahrrad-Hinterradritzelpaarung 15 ist das Ritzel 14 der zuvor diskutierten Hinterradritzelpaarung 13. Gleiche Kleinbuchstaben hinter dem Bezugszeichen 16 des Ritzels 16 bezeichnen funktionsgleiche Bauteile oder Bauteilabschnitte des Ritzels 14 oder des Ritzels 12, die dort mit gleichen Kleinbuchstaben bezeichnet sind.

Wie die beiden Hinterradritzelpaarungen 11 und 13 zuvor, weist auch das größere Ritzel 16 der Hinterradritzelpaarung 15 nur genau einen Hochschaltbereich 34 mit genau einer Hochschalt-Vertiefungsformation 36 und genau einem Abgabezahn 38 auf. Weiter weist das größere Ritzel 16 nur genau einen Herunterschaltbereich 40 mit genau einer Herunterschalt-Vertiefungsformation 42 und genau einem Fangzahn 44 auf.

Ausgehend vom Fangzahn 44 befinden sich zwischen dem Fangzahn 44 und dem Abgabezahn 38 im Uhrzeigersinn fünf Zähne, wobei der mittlere der fünf Zähne eine Abweisfläche 16d aufweist, die bereits im Zusammenhang mit zuvor beschriebenen Ritzeln 12 und 14 erläutert wurde.

Ausgehend vom Abgabezahn 38 befinden sich zwischen dem Abgabezahn 38 und dem Fangzahn 44 im Uhrzeigersinn neun Zähne, welche zur eindeutigen Orientierung der Fahrradkette relativ zum Ritzel 16 in Umfangsrichtung abwechselnd als dicke Zähne 16a und dünne Zähne 16b ausgebildet sind. Der dem Abgabezahn 38 im Uhrzeigersinn benachbarte dünne Zahn 16b' ist ein Mobilisierungszahn für einen Hochschaltvorgang zum kleineren Ritzel 14. Der dem Fangzahn 44 im Gegenuhrzeigersinn benachbarte dünne Zahn 16b" ist ein Mobilisierungszahn für einen Herunterschaltvorgang vom kleineren Ritzel 14 auf das größere Ritzel 16. In Figur 4B sind die entsprechenden Ausnehmungsflächen 16e des Mobilisierungszahns 16b' bzw. 16f des Mobilisierungszahns 16b" dargestellt.

Die Anzahl an Zähnen im Uhrzeigersinn zwischen dem Abgabezahn 38 und dem Fangzahn 44 entspricht der Zähneanzahl des Ritzels 16 minus 7.

Beachtlich ist, dass dem Zahn mit der Abweisfläche 16h und mit der diese Abweisfläche 16h begrenzenden Abstützrampe 16c1 der Mobilisierungszahn 14b" des Ritzels 14 mit einer konvexen Kopffläche 14cf axial benachbart ist, so dass auch Herunterschalten des der Kette vom Ritzel 14 auf das Ritzel 16 ein axial auswärts an der Abweisfläche 16h vorbeigehendes Innenlaschen-Kettenglied 52 mit seinen beiden Innenlaschen körperlich an seinem radial inneren Rand 52c abgestützt werden kann, die axial äußere Innenlasche auf der Kopffläche 14cf du die axial innere Innenlasche auf der Rampe 16c1.

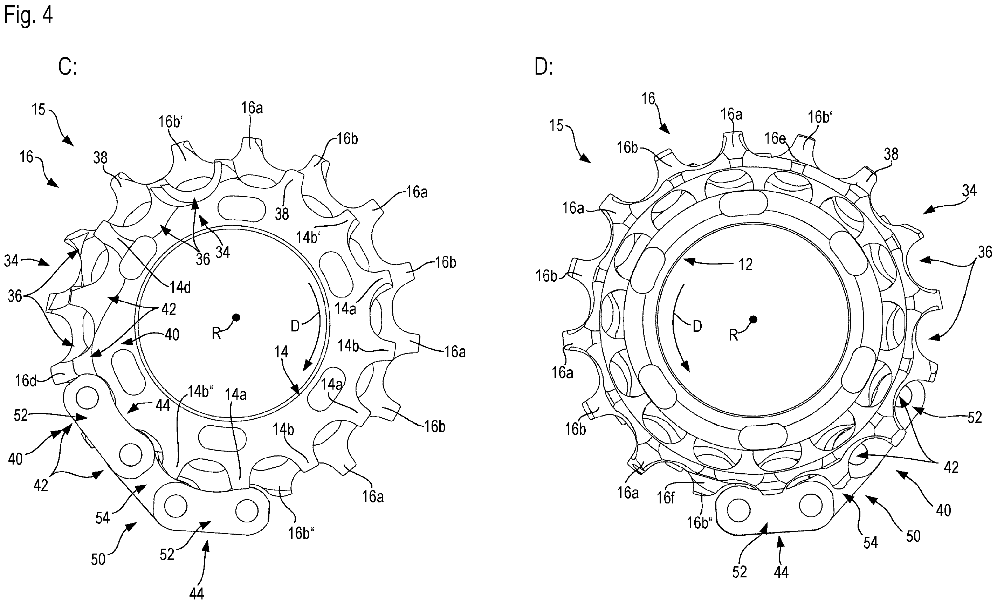

In Figur 4C ist in Bezugsbetrachtung ein Herunterschaltvorgang einer Fahrradkette 50 vom Ritzel 14 auf das größere Ritzel 16 dargestellt. Der Fangzahn 44 des Ritzels 16 hat die Kette 50, genauer ein Außenlaschen-Kettenglied 54 derselben, bereits gefangen. Das in Antriebsdrehrichtung nächste Außenlaschen-Kettenglied 54 ist noch mit dem Ritzel 14 in Eingriff. Im Umlegeweg zwischen den Ritzeln 14 und 16 befindet sich nur genau ein Innenlaschen-Kettenglied 52, welches während des Schaltvorgangs mit keinem der Ritzel 14 und 16 in Eingriff ist.

Figur 4D zeigt den Schaltvorgang von Figur 4C in entgegengesetzter Blickrichtung, also von axial innen.

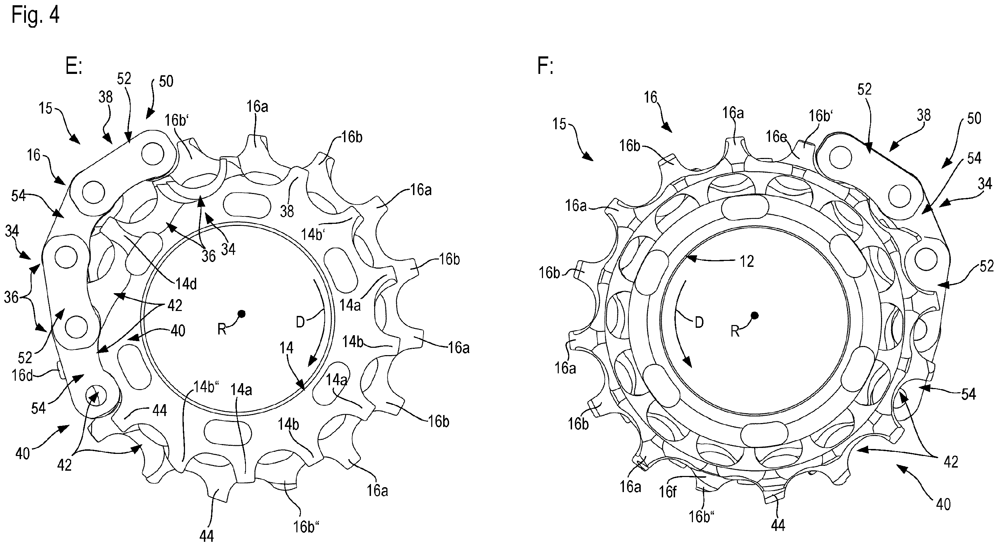

In Figur 4E ist in Bezugsbetrachtung ein Hochschaltvorgang einer Fahrradkette 50 vom Ritzel 16 auf das größere Ritzel 14 dargestellt. Der Abgabezahn 38 des Ritzels 16 ist mit der Kette 50, genauer mit einem Außenlaschen-Kettenglied 54 derselben, noch im Eingriff. Das entgegen der Antriebsdrehrichtung nächste Außenlaschen-Kettenglied 54 wird bereits von einem Zahn des Ritzels 14 in Eingriff genommen. Im Umlegeweg zwischen den Ritzeln 16 und 14 befindet sich nur genau ein Innenlaschen-Kettenglied 52, welches während des Schaltvorgangs mit keinem der Ritzel 14 und 16 in Eingriff ist.

Figur 4F zeigt den Schaltvorgang von Figur 4E in entgegengesetzter Blickrichtung, also von axial innen.

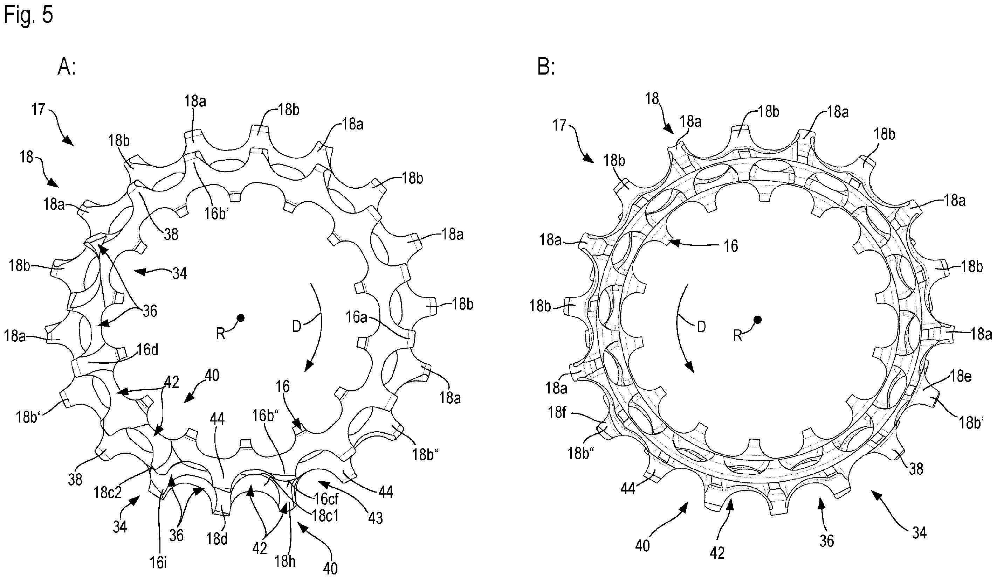

In den Figuren 5A und 5B ist entsprechend den vorhergehenden Figuren 3A und 3B bzw. 4A und 4B die größte und letzte erfindungsgemäße Fahrrad-Hinterradritzelpaarung 17 dargestellt, und zwar in Figur 5A in Bezugsbetrachtung und in Figur 5B in entgegengesetzter axialer Richtung von innen betrachtet.

Gleiche Kleinbuchstaben hinter dem Bezugszeichen 18 des Ritzels 18 bezeichnen funktionsgleiche Bauteile oder Bauteilabschnitte der Ritzel 12, 14 oder 16, die dort mit gleichen Kleinbuchstaben bezeichnet sind.

Wie die zuvor diskutierten Hinterradritzelpaarungen 11, 13 und 15 weist auch die Hinterradritzelpaarung 17 am größeren Ritzel 18 nur genau einen Hochschaltbereich 34 mit genau einer Hochschalt-Vertiefungsformation 36 und mit genau einem Abgabezahn 38 auf. Das größere Ritzel 18 weist außerdem nur genau einen Herunterschaltbereich 40 mit genau einer Herunterschalt-Vertiefungsformation 42 und mit genau einem Fangzahn 44 auf.

Am größeren Ritzel 18 sind besonders vorteilhaft für die Verschleißfestigkeit des Ritzels 18 ausgehend vom Fangzahn 44 im Uhrzeigersinn zwischen dem Fangzahn 44 und dem Abgabezahn 38 nur drei Zähne vorhanden. Ausgehend vom Abgabezahn 38 sind im Uhrzeigersinn zwischen dem Abgabezahn 38 und dem Fangzahn 44 13 Zähne vorhanden, was der Zähnezahl des Ritzels 18 minus 5 entspricht.

Von den 13 im Uhrzeigersinn zwischen dem Abgabezahn 38 und dem Fangzahn 44 gelegenen Zähnen sind die jeweils dem Abgabezahn 38 bzw. dem Fangzahn 44 unmittelbar benachbarten Zähne in der zuvor beschriebenen Weise als Mobilisierungszähne 18b' bzw. 18b" ausgebildet. Die übrigen Zähne sind zur sicheren Führung der Kette am Ritzel 18 während eines kämmenden Eingriffs in der oben beschriebenen Weise als dicke Zähne 18a und dünne Zähne 18b ausgebildet.

Auch beim Herunterschalten vom Ritzel 16 auf das Ritzel 18 kann ein Innenlaschen-Kettenglied mit seinen beiden Innenlaschen einmal auf der Kopffläche 16cf und einmal auf der Rampe 18c1 abgestützt werden. Im Uhrzeigersinn vor dem Fangzahn 44 des Ritzels 18 ist der Zahnzwischenraum 43 nach radial innen vergrößert, um beim Herunterschalten auf das Ritzel 18 der dem Fangzahn 44 unmittelbar vorauseilenden Kettenrolle Bewegungsraum nach radial innen zu geben.

Die zuvor beschriebenen Ritzelpaarungen 11, 13, 15 und 17 können jeweils nur im Hochschaltbereich 36 vom jeweils größeren Ritzel zum jeweils axial benachbarten nächstkleineren Ritzel hochschalten. Dies bedeutet, an jedem größeren Ritzel der genannten Ritzelpaarungen 11, 13, 15 und 17 wird die Kette nur an genau einer Stelle vom größeren Ritzel auf das nächstkleinere umgelegt, und zwar so, dass der jeweilige Abgabezahn 38 der letzte Zahn des größeren Ritzels ist, der mit der Kette noch in Eingriff ist. Wegen der gezeigten Antriebsdrehrichtung D gleiten im Gegenuhrzeigersinn auf den Abgabezahn 38 folgende Kettenglieder seitlich an den dem Abgabezahn 38 im Gegenuhrzeigersinn benachbarten Zähnen vorbei und nutzen dabei die jeweilige Hochschalt-Vertiefungsformation 36 als Bewegungsraum aus.

Ebenso kann an den genannten Ritzelpaarungen 11, 13, 15 und 17 jeweils nur an einer Stelle die Kette vom kleineren zum größeren Ritzel umgelegt werden, und zwar stets nur so, dass der Fangzahn 44 des größeren Ritzels der erste Zahn des größeren Ritzels ist, welcher zwischen zwei Laschen, in der Regel Außenlaschen, eines Kettenglieds eingreift. Die im Uhrzeigersinn dem Fangzahn 44 benachbarten Kettenglieder nähern sich unter Ausnutzung der Herunterschalt-Vertiefungsformation 42 dem jeweils größeren Ritzel an, sodass das dem Fangzahn 44 zugeordnete Außenlaschen-Kettenglied axial in dessen Eingriffsbereich gelangen kann.

Wird der Schaltbefehl durch den Fahrradfahrer so gegeben, dass am im Uhrzeigersinn rotierenden größeren Ritzel der jeweilige relevante Schaltzahn: Abgabezahn 38 oder Fangzahn 44, gerade den Schaltbereich am Hinterrad passiert hat, findet der eingeleitete Schaltvorgang in der nächsten Ritzelumdrehung statt, wenn der Abgabezahn 38 oder der Fangzahn 44 wieder in den für die Ausführung eines Schaltvorgangs relevanten Winkelbereich bzw. Schaltbereich relativ zum Umwerfer gelangt. Die Schaltlatenz sowohl für das Herunterschalten als auch für das Hochschalten an den Ritzelpaarungen 11, 13, 15 und 17 beträgt maximal eine Ritzelumdrehung, was von Fahrradfahrern üblicherweise toleriert wird. Höhere Schaltlatenzen werden erfahrungsgemäß nicht mehr toleriert, sondern als Fehlfunktion wahrgenommen.

Das Ritzel 18 ist kleinstes von drei Ritzeln 18, 20 und 22 einer Übergangs-Ritzelgruppe 19, die mit dem Ritzel 20 das einzige ungeradzahlige Ritzel der Hinterradkassette 1 aufweist.

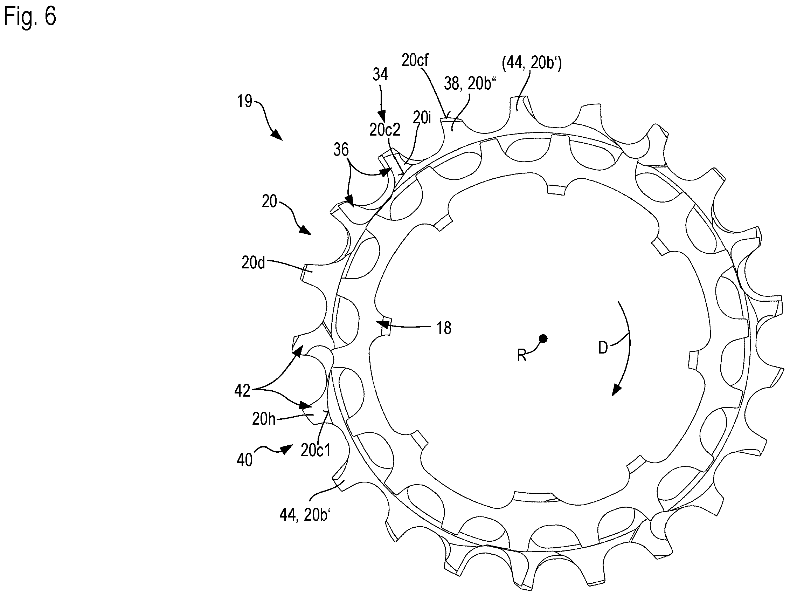

In Figur 6 ist in Bezugsbetrachtung die kleinere Ritzelpaarung der Ritzel 20 und 18 der Übergangs-Ritzelgruppe 19 gezeigt.

Gleiche Kleinbuchstaben hinter dem Bezugszeichen 20 des Ritzels 20 bezeichnen funktionsgleiche Bauteile oder Bauteilabschnitte der Ritzel 12, 14, 16 oder 18, die dort mit gleichen Kleinbuchstaben bezeichnet sind.

Ein Problem liegt dabei darin, dass jedem Zahn des geradzahligen Ritzels 18 für die gesamte Dauer des kämmenden Eingriffs des Ritzels 18 mit der Fahrradkette dieselbe Kettengliederart zum Eingriff zwischen den jeweiligen Laschen des jeweiligen Kettenglieds zugeordnet ist.

Auf dem ungeradzahligen Ritzel 20 mit 21 Zähnen ändert sich jedoch mit jedem Umlauf die einem Zahn zum formschlüssigen Eingriff zugeordnete Kettengliederart. Dennoch soll die Kette vom ungeradzahligen Ritzel 20 hinsichtlich der Relativlage der Kettengliederabfolge sowohl beim Hochschalten definiert an das Ritzel 18 als auch beim Herunterschalten definiert an das Ritzel 22 übergeben werden. An den geradzahligen Ritzeln 20 und 22 soll nicht der Zufall darüber entscheiden, ob ein Zahn mit einem Außenlaschen-Kettenglieder oder einem Innenlaschen-Kettenglied in Eingriff ist, sondern soll durch entsprechende Ausbildung der Übergangs-Ritzelgruppe 19 für ein definiertes Umlegen der Kette gesorgt werden.

Das Übergangsritzel 20 weist hierfür drei identische Umfangsabschnitte mit jeweils sieben Zähnen auf, die aufeinander folgend den gesamten Umfang des Übergangsritzels 20 bilden. Wiederum weist jeder der drei Umfangsabschnitte nur genau einen Abgabezahn 38 und nur genau einen Fangzahn 44 auf. Ebenso weist jeder der drei Umfangsabschnitte nur genau einen Hochschaltbereich 34 mit genau einer Hochschalt-Vertiefungsformation 36 und nur genau einen Herunterschaltbereich 40 mit genau einer Herunterschalt-Vertiefungsformation 36 auf. Durch die Aneinanderreihung der drei Umfangsabschnitte ist die Schaltlatenz des Übergangsritzels 20 sehr kurz. Zwischen dem Fangzahn 44 und dem Abgabezahn 38 befinden sich im Uhrzeigersinn fünf Zähne am Ritzel 20. Zwischen zwei Abgabezähnen 38, bzw. zwischen zwei Fangzähnen 44 befinden sich in Umfangsrichtung des Ritzels 20 sechs Zähne. Somit wird dann, wenn einem Fangzahn 44 des Ritzels 20 bei einem Herunterschaltvorgang vom Ritzel 18, aus welchen Gründen auch immer, unerwünschterweise eine Innenlasche angenähert wird und es daher zu keinem Formschlusseingriff des Fangzahns 44 mit der Fahrradkette kommt, dem im Gegenuhrzeigersinn nächsten Fangzahn 44 des Ritzels 20 eine Außenlasche und somit ein Außenlaschen-Kettenglied unter Ausnutzung des durch die Herunterschalt-Vertiefungsformation 42 bereitgestellten Bewegungsraums angenähert, welches der Fangzahn 44 fangen kann.

Für den Hochschaltvorgang und den Abgabezahn 38 des Ritzels 20 gilt mutatis mutandis das gleiche. Befindet sich unmittelbar nach einem Einleiten des Hochschaltvorgangs durch den Fahrradfahrer ein Innenlaschen-Kettenglied im Formschlusseingriff mit dem Abgabezahn 38, verbleibt die Fahrradkette noch am Ritzel 20 bis im Gegenuhrzeigersinn der nächste Abgabezahn 38 mit einem Außenlaschen-Kettenglied in Eingriff ist und die Fahrradkette dann unter Ausnutzung des von der Hochschalt-Vertiefungsformation 36 eingeräumten Bewegungsraums auf das kleinere Ritzel 18 umgelegt werden kann.

Der Fangzahn 44 und der Abgabezahn 38 sind äußerst vorteilhaft so angeordnet, dass bei Aneinanderreihung der drei identischen Umfangsabschnitte der Abgabezahn 38 und der Fangzahn 44 unmittelbare Nachbarn sind. Da die Zähne 38 und 44 als Abgabezahn bzw. Fangzahn ohnehin besonders ausgebildet sind, und in der Regel eine geringere Dicke und eine starke axiale Annäherung an das benachbarte kleinere Ritzel 18 aufweisen, wirken die Zähne 38 und 44 nicht nur als Abgabezahn 38 bzw. Fangzahn 44, sondern bildet der Abgabezahn 38 für den Fangzahn 44 einen Mobilisierungszahn 20b" und bildet der Fangzahn 44 für den Abgabezahn 38 einen Mobilisierungszahn 20b'.

Durch diese Doppelfunktion von Abgabezahn 38 und Fangzahn 44 jeweils auch als Mobilisierungszahn 20b" bzw. 20b' werden trotz Aneinanderreihung von drei Umfangsabschnitten mit jeweils wenigstens zwei veränderten und dadurch in ihrer Festigkeit geschwächten Zähnen 38 und 44 keine zusätzlichen strukturellen Zahnschwächungen durch Ausbildung gesonderter Mobilisierungszähne erforderlich, was insgesamt zu einem stabilen und verschleißfesten Übergangsritzel 20 führt.

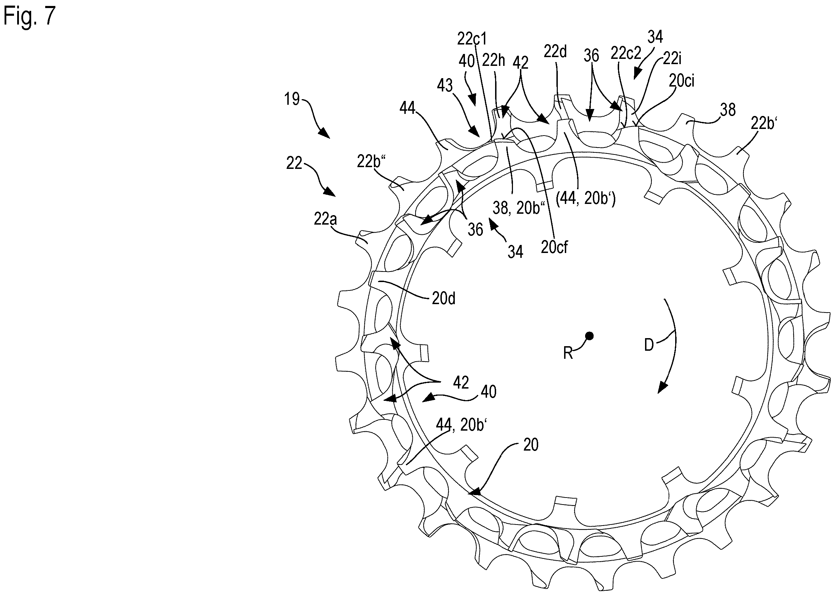

In Figur 7 ist in Bezugsbetrachtung die größere Ritzelpaarung der Übergangs-Ritzelgruppe 19 mit dem 24-T-Ritzel 22 und dem 21-T-Ritzel 20 dargestellt.

Auch hier kommt es darauf an, die Fahrradkette vom ungeradzahligen Ritzel 20 mit eindeutiger Relativanordnung der Kettengliederabfolge auf das größere Ritzel 22 umzulegen.

Gleiche Kleinbuchstaben hinter dem Bezugszeichen 22 des Ritzels 22 bezeichnen funktionsgleiche Bauteile oder Bauteilabschnitte der Ritzel 12, 14, 16, 18 oder 20, die dort mit gleichen Kleinbuchstaben bezeichnet sind.

Das 24-T-Ritzel 22 weist ebenfalls drei identische Umfangsabschnitte auf, welche in Umfangsrichtung aufeinanderfolgend den vollständigen Umfang des Ritzels 22 bilden. Jeder Umfangsabschnitt weist daher acht Zähne auf. In Figur 7 ist der Einfachheit halber nur genau ein Umfangsabschnitt des Ritzels 22 mit Bezugszeichen versehen.

Im Uhrzeigersinn am äußersten Ende des Umfangsabschnitts befindet sich der Mobilisierungszahn 22b' für den im Gegenuhrzeigersinn benachbarten Abgabezahn 38. Weiter im Gegenuhrzeigersinn folgen auf den Abgabezahn 38 drei Zähne, an welchen die Hochschalt-Vertiefungsformation 36 und die Herunterschalt-Vertiefungsformation 42 ausgebildet ist, wobei am mittleren Zahn der drei Zähne eine Abweisfläche 22d ausgebildet ist.

Auf die drei Zähne folgt im Gegenuhrzeigersinn der Fangzahn 44, welchem im Gegenuhrzeigersinn wiederum sein Mobilisierungszahn 22b" benachbart ist. Im Gegenuhrzeigersinn am äußersten Ende des Umfangsabschnitts befindet sich ein regulärer Zahn des Ritzels 22, welcher beispielhaft als dicker Zahn 22a derart ausgebildet ist, dass er nur mit einem Außenlaschen-Kettenglied in Eingriff gelangen kann.

Zwar sind hier Mobilisierungszähne 22b' und 22b" zusätzlich zu einem Abgabezahn 38 und einem Fangzahn 44 ausgebildet, jedoch sind auf einem Raum von nur drei Zähnen beide Vertiefungsformationen 36 und 42 für das Herunterschalten und für das Hochschalten ausgebildet, sodass insgesamt eine moderate strukturelle Schwächung durch Materialabnahme am Ritzel 22 realisiert ist und das Ritzel 22 insgesamt eine hohe Stabilität und Verschleißfestigkeit aufweist. Je größer ein Ritzel ist, desto geringer fallen die Ausbildungen von Vertiefungsformationen und dergleichen als strukturelle Schwächung der Festigkeit des Ritzels ins Gewicht.

Wenngleich aufgrund der unbekannten Umdrehungszahl des Ritzels 20 unbekannt ist, in welcher Relativlage bezüglich der Kettengliederabfolge die Fahrradkette vom Ritzel 20 beim Herunterschalten an das Ritzel 22 übergeben wird, wird derjenige Fangzahn 44, dem ein Außenlaschen-Kettenglied angenähert wird, die Kette durch Formschlusseingriff mit dem Kettenglied fangen und so für einen Herunterschaltvorgangs sorgen. Dies ist spätestens der zweite Fangzahn 44, der relativ zu dem den Schaltvorgang bewirkenden Umwerfer in einem relevanten Schaltbereich gelangt.

Ebenso wird die Kette pro Umfangsabschnitt des Ritzels 22 nur genau von einem einzigen Zahn, nämlich dem Abgabezahn 38 als dem letzten eingreifenden Zahn an das kleinere Ritzel 20 übergeben. Da dem Abgabezahn 38 am Ritzel 22 stets ein Außenlaschen-Kettenglied zugeordnet ist, erfolgt ein Hochschaltvorgang vom Ritzel 22 auf das Ritzel 20 am nächsten den Schaltbereich des Umwerfers passierenden Abgabezahn 38. Dies bedeutet eine sehr kurze Schaltlatenz von nur einer Drittelumdrehung und, wegen der Ausbildung nur eines Zahns als Abgabezahn 38 pro Umfangsabschnitt eine geringste mögliche Schwächung des Ritzels 22.

Der radial innere Grund des Zahnzwischenraums 43, welcher im Uhrzeigersinn dem Fangzahn 44 unmittelbar benachbart ist, befindet sich radial näher bei der Ritzelachse R als die Zahngründe der übrigen Zahnzwischenräume. Durch den so für eine Kettenrolle eingeräumten Bewegungsweg nach radial innen kann der Umlegeweg, den die Fahrradkette beim Umlegen vom kleineren Ritzel 20 auf das größere Ritzel 22 nimmt, so angepasst werden, dass seine Länge ein ganzzahliges Vielfaches der Kettenteilung ist. Dies ist Randbedingung für einen Schaltvorgang zwischen zwei Ritzeln.

An der Ritzelpaarung 19 ist auch eine Abstützung beider Innenlaschen eines Innenlaschen-Kettengliedes beim Hochschalten vom Ritzel 22 auf das Ritzel 20 möglich, nämlich für die axial weiter außen liegende Innenlasche auf der Kopffläche 20ci und für die axial weiter innen liegende Innenlasche auf der Rampe 22c2, welche die Abweisfläche 22i nach radial innen begrenzt. Die Kopffläche 20 ci ist zur möglichst flächigen Abstützung eines konkaven inneren Randes 54c einer Innenlasche konvex ausgebildet, wobei jedoch das in Antriebsdrehrichtung vorauseilende Ende der Kopffläche 20ci radial weiter außen angeordnet ist als das nachlaufende Ende der Kopffläche 20ci.

In Figur 8 ist beispielhaft dargestellt, wie eine Fahrradkette 50 aus einer Folge von Außenlaschen-Kettengliedern 52 und Innenlaschen-Kettengliedern 54 aus dem kämmenden Eingriff mit dem Ritzel 22 auf das kleinere Ritzel 20 hochgeschaltet wird. Zu erkennen ist, dass der Abgabezahn 38 der letzte mit der Fahrradkette 50 eingreifende Zahn des Ritzels 22 ist.

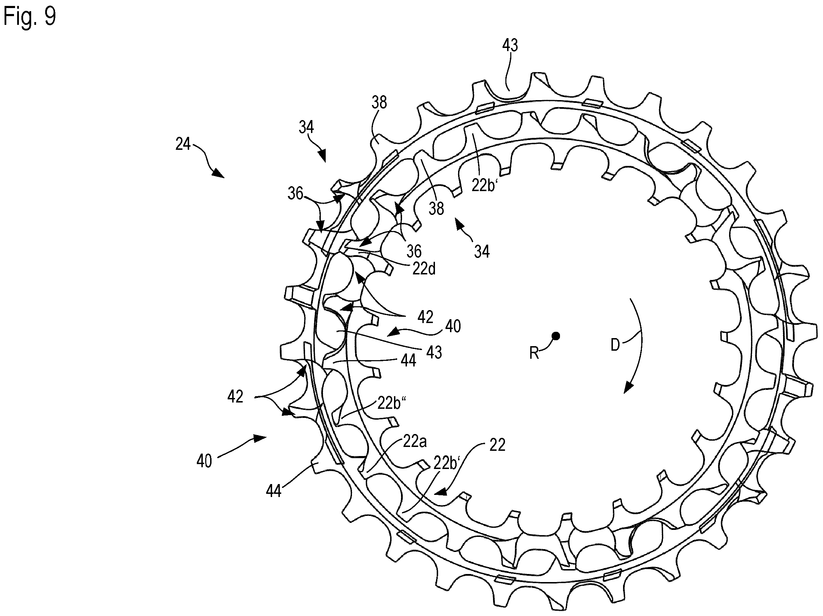

Lediglich beispielhaft ist in Figur 9 eine Ritzelpaarung aus dem 28-T-Ritzel 24 und dem zuvor diskutierten 24-T-Ritzel 22 dargestellt. Das Ritzel 22 wurde oben bereits diskutiert. Das Ritzel 24 weist im Prinzip längs seines Umfangs zwei Hochschaltbereiche 34 und zwei Herunterschaltbereiche 40 auf, wobei in gleiche Richtung schaltende Bereiche 34 bzw. 40 einander diametral am Ritzel 24 gegenüberliegen.

Gleiche Kleinbuchstaben hinter dem Bezugszeichen 24 des Ritzels 24 bezeichnen funktionsgleiche Bauteile oder Bauteilabschnitte der Ritzel 12, 14, 16, 18, 20 oder 22, die dort mit gleichen Kleinbuchstaben bezeichnet sind.

Auch das Ritzel 24 weist Zahnzwischenräume 43 mit nach radial innen zur Ritzelachse R hin versetztem Zahngrund auf. Diese Zahnzwischenräume 43 spielen jedoch keine Rolle für ein Umlegen der Kette zwischen den benachbarten Ritzeln 24 und 22, sondern für ein Umlegen der Fahrradkette zwischen dem Ritzel 24 und dem nächst größeren Ritzel 26.

In Figur 10 ist das größte Ritzel 32 losgelöst von den übrigen Ritzeln 10 bis 30 in Bezugsbetrachtung dargestellt. Das Ritzel 32 umfasst einen Zahnkranz 60, einen Zwischenkranz 62 und einen radial inneren Keilkranz 64 zur Übertragung von Drehmoment auf einen nicht dargestellten, aber Fachleuten ohne weiteres bekannten Antreiber oder auf einen zwischen dem Keilkranz 64 und dem Antreiber angeordneten Adapter. Das mit dem radial inneren Profil des Keilkranzes 64 wechselwirkende Keilprofil des Adapters oder Antreibers ist komplementär zum radial inneren Keilprofil des Keilkranzes 64 ausgebildet. Radial äußere Streben 66a und 66b verbinden den Zahnkranz 60 drehmomentübertragend mit dem Zwischenkranz 62. Radial innere Streben 68 verbinden den Zwischenkranz mit dem Keilkranz 64.

Zur Vermeidung von unerwünschter Biegeverformung der Streben 66b und 68 sind diese derart angeordnet, dass ihre radial inneren Strebenenden den radial äußeren in Antriebsdrehrichtung D vorauseilen. Die Streben 66a sind in Umfangsrichtung breiter ausgebildet als die Streben 66b.

Befestigungsöffnungen 70 zeigen an, wo der Ritzeldom aus den einstückig miteinander verbundenen Ritzeln 14 bis 30 und den an den Ritzeldom eingeschraubten kleineren Ritzeln 12 und 10 mit Verbindungsmitteln wie Stiften, Nieten, Schrauben und dergleichen drehmomentübertragend mit dem größten Ritzel 32 verbunden wird.

Die Befestigungslöcher 70 sind zum einen radial möglichst weit außen angeordnet, jedoch ohne den Eingriff von Ritzelzähnen mit der Fahrradkette zu stören, und sind zum anderen in möglichst stabilen Bereichen des Ritzels 32 ausgebildet. Daher sind die Befestigungslöcher 70 vornehmlich in den breiteren radial äußeren Streben 66a sowie nahe der Verbindungsstellen des Zwischenkranzes 62 mit den radial inneren Streben 68 ausgebildet.

In Figur 10A ist eine Ansicht des größten Ritzels 32 mit Blickrichtung orthogonal zur Ritzelachse R dargestellt. Dort ist erkennbar, dass das Ritzel 32 im radial näher bei der Ritzelachse R gelegenen Bereichen nach außen, also von der Längsmittelebene LME weg, gekröpft ausgebildet ist. Hierdurch wird an dem radial innerhalb des Keilkranzes 64 gelegenen Antreibers möglichst wenig axialer Bauraum zur Aufnahme der Zwölffach-Ritzelkassette 1 benötigt. Außerdem wird so das größere Ritzel 32 gegen Biegemomente versteift, welche durch den Kettenschräglauf auf das größte Ritzel 32 wirken. Das Ritzel 32 und der mit diesem verbundene Ritzeldom versteifen sich gegenseitig.

Die Ritzelkassette 1 ist derart ausgebildet, dass alle kleineren Ritzel 10 bis 30 ihr Drehmoment unmittelbar auf das Ritzel 32 übertragen, welches das vom Fahrer oder vom Elektromotor mittels der Fahrradkette 50 zur Ritzelkassette 1 übertragene Drehmoment über den zuvor genannten Antreiber auf die Hinterradnabe überträgt.

Wie auf der zur Längsmittelebene LME hinweisenden Seite des Ritzels 32, auf welche der Betrachter der Figur 10B blickt, zu erkennen ist, sind auch am größten Ritzel 32 dicke Zähne 32a und dünne Zähne 32b in Umfangsrichtung alternierend aufeinanderfolgend ausgebildet. Die Ausnehmungen an den in axialer Richtung weisenden Zahnflächen zur Ausbildung dünner Zähne 32b sind ausschließlich auf der vom nächstkleineren Ritzel 30 wegweisenden Seite des größeren Ritzel 32 ausgebildet.

Gleiche Kleinbuchstaben hinter dem Bezugszeichen 32 des Ritzels 32 bezeichnen funktionsgleiche Bauteile oder Bauteilabschnitte der Ritzel 12, 14, 16, 18, 20, 22 oder 24, die dort mit gleichen Kleinbuchstaben bezeichnet sind.

In Figur 10B ist außerdem eine Ausbildung von Rampen an manchen Abgabezähnen 38, an manchen Fangzähnen 44 sowie an den den rampenbildenden Abgabezähnen 38 und Fangzähnen 44 benachbarten Mobilisierungszähnen 32b' und 32b" gezeigt. Die Rampen sind mit dem Bezugszeichen des jeweiligen Zahns und dem Kleinbuchstaben g gekennzeichnet. An den Mobilisierungszähnen sind die Rampen durch gleiche Apostrophierung wie die zugehörigen Mobilisierungszähne gekennzeichnet.

Die Rampen 38g, 32g', 44g und 32g" bilden eine radiale und axiale Stufe der vom nächstkleineren Ritzel 30 wegweisenden Zahnfläche der zugehörigen Zähne 38, 32b', 44 und 32b". Die Rampen 38g, 32g', 44g und 32g" bilden eine nach radial außen, also von der Ritzelachse R weg, weisende Rampenfläche aus, auf welcher sich nach radial innen weisende Randflächen der Fahrradkette 50 abstützen können.

Durch diese Rampen 38g, 32g', 44g und 32g" wird die Kette 50 in besonderer Weise beim kämmenden Eingriff mit dem größten Ritzel 32 stabilisiert.

Beim Rückwärtstreten unter Ausnutzung des üblicherweise vorhandenen Freilaufs an der Hinterradnabe kann unter gewissen Umständen der Schräglauf der Kette die stabilisierend auf den kämmenden Eingriff des Ritzels 32 mit der Fahrradkette 50 wirken. Da besonders die Abgabezähne 38 und die ihnen benachbarten Mobilisierungszähne 32b' aufgrund ihrer Ausgestaltung ein Umlegen der Kette zum nächstkleineren Ritzel 30 hin, zu welchem der Schräglauf wirkt, unterstützen, ist vor allen Dingen dort eine Rampe ausgebildet. Auch an den schaltrelevanten Zähnen eines Herunterschaltbereichs, also am Fangzahn 44 und an dessen Mobilisierungszahn 32b" sind Rampen ausgebildet, um die Kette 50 zu stabilisieren.

Die genannten Rampen halten nicht nur die Kette selbst im Falle eines sehr ungünstigen Wirkens des Kettenschräglaufs zum vorderen Kettenblatt am Ritzel 32, sondern unterstützen auch das Schalten der Kette 50 herunter auf das größere Ritzel 32 bzw. hoch vom größeren Ritzel 32 auf das nächstkleinere Ritzel 30. Die Rampen bilden nämlich die Möglichkeit, dass die Kette stabil und mit körperlicher Führung auch in einer radial weiter außen gelegenen Position am Ritzel 32 in den schaltrelevanten Bereichen: Hochschaltbereich 34 und Herunterschaltbereich 40, gehalten werden kann, als dies bei einem herkömmlichen Zahneingriff der Fall wäre, bei welchem der Fangzahn 44, der Abgabezahn 38 oder die ihnen benachbarten Mobilisierungszähne 32b" bzw. 32b' radial vollständig in die Zwischenräume der Kettenglieder eingreifen.

Somit stabilisieren die Rampen die Kette 50 gegen den Kettenschräglauf zum vorderen Kettenblatt, wenn die Kettenführungsrolle des Umwerfers zum Halten der Kette auf dem größeren Ritzel 32 komplanar mit dem Ritzel 32 ausgerichtet ist und der Kettenschräglauf gegen ein Halten der Kette 50 am Ritzel 32 wirkt. Weiter unterstützen die Rampen ein Umlegen der Kette 50, wenn die Kettenführungsrolle des Umwerfers mit dem zukünftig kettenführenden Ritzel komplanar ausgerichtet ist, während die Kette 50 noch auf dem aktuell kettenführenden Ritzel in Eingriff ist.

Die gezeigten Rampen können auch an den Ritzeln 30, 28, 26 usw. ausgebildet sein, und zwar bevorzugt jeweils auf der vom nächstkleineren Ritzel wegweisenden Seite des jeweiligen Ritzels. Da jedoch der Kettenschräglauf zu den mittelgroßen Ritzeln der Ritzelkassette 1 hin betragsmäßig abnimmt, sind die Rampen besonders an den größeren Ritzeln 32, 30 und auch 28 von Bedeutung.

In Figur 11 ist ein mit einer erfindungsgemäßen Ritzelkassette 1 versehenes Fahrrad grobschematisch dargestellt und allgemein mit 70 bezeichnet. Ein Vorderrad 72 und ein Hinterrad 74 sind an einem Fahrradrahmen 76 um jeweilige zur Zeichenebene der Figur 11 orthogonale Radachsen drehbar befestigt. Das Vorderrad 72 kann über eine gefederte Gabel 78 mit dem Fahrradrahmen 76 verbunden sein. Auch das Hinterrad 74 kann über eine gefederte Aufhängung 80 mit dem Fahrradrahmen 76 verbunden sein.

Das Hinterrad 74 ist über eine Antriebsbaugruppe 82, umfassend ein einzelnes vorderes Kettenblatt 24 und die lediglich in Figur 1 grobschematisch dargestellte Fahrrad-Hinterradritzelkassette 1, antreibbar. Das Antriebsdrehmoment kann über Tretkurbeln 88 und eine mit diesen verbundene Tretkurbelwelle 88a auf das vordere Kettenblatt 84 und von diesem mittels der Fahrradkette 50 über die Ritzelkassette 1 26 auf das Hinterrad 74 übertragen werden. Zur Unterstützung eines die Tretkurbeln 88 mit Muskelkraft antreibenden Fahrradfahrers kann ein unterstützender Elektromotor 90 am Fahrradrahmen 76 derart angeordnet sein, dass auch dieser sein unterstützendes Antriebsdrehmoment über die Tretkurbelwelle 88a zum vorderen Kettenblatt 84 hin überträgt. Zwischen der Tretkurbelwelle 88a und dem Kettenblatt 84 kann ein Getriebe, insbesondere Planetengetriebe, vorgesehen sein. Das Übertragungsverhältnis des Getriebes ist bei der Berechnung der wirksamen Zähnezahl des Kettenblatts 84 zu berücksichtigen. Die tatsächliche Zähnezahl des Kettenblatts 84 ist dabei mit dem Faktor zu multiplizieren, mit welchem das Getriebe ein in es eingeleitetes Drehmoment zu seiner Abtriebsseite hin überträgt. Eine Erhöhung des Drehmoments durch das Getriebe führt somit zu einer gegenüber der tatsächlichen Zähnezahl erhöhten wirksamen Zähnezahl des Kettenblatts 84 und umgekehrt.

Eine Batterie 92 als Energiespeicher für den unterstützenden Elektromotor 90 kann im oder am Rahmen 76 vorgesehen sein.

Die Fahrradkette 50 kann in an sich bekannter Weise durch ein Schaltwerk bzw. einen Umwerfer 94 mit einem vom Fahrer auszuwählenden Ritzel aus der Mehrzahl von Ritzeln 10 bis 32 der Ritzelkassette 1 zur Drehmomentübertragung auf das Hinterrad 74 in kämmenden Eingriff gebracht werden. Der Umwerfer 94 weist eine der Ritzelkassette 1 nächstgelegene Kettenführungsrolle 96 und eine Spannrolle 98 auf.

Sowohl das Muskel-Drehmoment des Fahrradfahrers wie auch das unterstützende Drehmoment des Elektromotors 90 werden am Beispielfahrrad 70 über die Hinterradritzelkassette 1 zum Hinterrad 74 übertragen. Der Elektromotor 90 hat somit die Wirkung, als ob der Fahrradfahrer eine um die Unterstützungsleistung des Elektromotors 90 erhöhte Tretleistung abrufen könnte.

Da das beispielhaft gezeigte Fahrrad 70 über genau ein vorderes Kettenblatt 84 verfügt, ist der gesamte Gangbereich des Fahrrads 70 durch die Ritzelkassette 1 realisiert.

## Patentansprüche

1. Fahrrad-Hinterradritzelpaarung (11, 13, 15, 17) zum kraftübertragenden Eingriff mit einer Fahrrad-Rollenkette (50), wobei die Hinterradritzelpaarung (11, 13, 15, 17) um eine Ritzelachse (R) drehbar ist, wobei die Ritzelachse (R) eine längs der Ritzelachse (R) verlaufende axiale Richtung, eine orthogonal zur Ritzelachse (R) verlaufende radiale Richtung und eine um die Ritzelachse (R) umlaufende Umfangsrichtung definiert, wobei die Hinterradritzelpaarung (11, 13, 15, 17) ein größeres Ritzel (12, 14, 16, 18) und ein mit diesem zur gemeinsamen schlupffreien Rotation um die die Ritzelachse (R) verbundenes, koaxiales, dem größeren Ritzel (12, 14, 16, 18) axial unmittelbar benachbartes kleineres Ritzel (10, 12, 14, 16) umfasst, wobei das größere Ritzel (12, 14, 16, 18) eine gerade Zähnezahl gleich oder kleiner als 22 Zähne aufweist und wobei der Zähnezahlunterschied zwischen dem größeren und dem kleineren Ritzel (10, 12, 14, 16) genau zwei Zähne beträgt, wobei
i) das größere Ritzel (12, 14, 16, 18) in seiner zum kleineren Ritzel (10, 12, 14, 16) hinweisenden Stirnseite, längs eines Abschnitts seines Umfangs einen Hochschaltbereich (34) mit einer Hochschalt-Vertiefungsformation (36) aufweist, wobei der Hochschaltbereich (34) dazu ausgebildet und angeordnet ist, an der im Uhrzeigersinn - bei axialer Betrachtung der Hinterradritzelpaarung (11, 13, 15, 17) in einem Bezugszustand, in welchem das kleinere Ritzel (10, 12, 14, 16) dem Betrachter näher gelegen ist als das größere Ritzel (12, 14, 16, 18) - um die Ritzelachse (R) rotierenden Hinterradritzelpaarung (11, 13, 15, 17) einen Eingriffswechsel der Fahrrad-Rollenkette (50) vom größeren zum kleineren Ritzel (10, 12, 14, 16) zu gestatten, wobei am größeren Ritzel (12, 14, 16, 18) der Hochschalt-Vertiefungsformation (36) nur genau ein Abgabezahn (38) zugeordnet ist, welcher durch seine Gestalt und Orientierung dazu ausgebildet ist, im Zusammenwirken mit der stirnseitigen Hochschalt-Vertiefungsformation (36) während eines Hochschaltvorgangs vom größeren Ritzel (12, 14, 16, 18) auf das kleinere Ritzel (10, 12, 14, 16) der letzte Zahn zu sein, der zwischen ein Laschenpaar eines Kettengliedes (52) der Fahrrad-Rollenkette (50) eingreift,
und
ii) das größere Ritzel (12, 14, 16, 18) in seiner zum kleineren Ritzel (10, 12, 14, 16) hinweisenden Stirnseite, längs seines Umfangs einen Herunterschaltbereich (40) mit einer Herunterschalt-Vertiefungsformation (42) aufweist, wobei der Herunterschaltbereich (40) dazu ausgebildet ist, an der im Uhrzeigersinn - bei axialer Betrachtung der Hinterradritzelpaarung (11, 13, 15, 17) im Bezugszustand - um die Ritzelachse (R) rotierenden Hinterradritzelpaarung (11, 13, 15, 17) einen Eingriffswechsel der Fahrrad-Rollenkette (50) vom kleineren zum größeren Ritzel (12, 14, 16, 18) zu gestatten, wobei am größeren Ritzel (12, 14, 16, 18) der Herunterschalt-Vertiefungsformation (42) nur genau ein Fangzahn (44) zugeordnet ist, welcher durch seine Gestalt und Orientierung dazu ausgebildet ist, im Zusammenwirken mit der stirnseitigen Herunterschalt-Vertiefungsformation (42) während eines Herunterschaltvorgangs vom kleineren Ritzel (10, 12, 14, 16) auf das größere Ritzel (12, 14, 16, 18) der erste Zahn zu sein, der zwischen Laschen eines Kettengliedes der Fahrrad-Rollenkette (50) eingreift,
wobei der Fangzahn (44) eine derartige Ausgestaltung und Orientierung aufweist, so dass er nur dann in die auf das größere Ritzel (12, 14, 16, 18) umzulegende Fahrrad-Rollenkette (50) eingreift, wenn sich an der Umfangsposition des Fangzahns (44) ein Außenlaschen-Kettenglied (54) befindet, welches einen größeren Eingriffsraum bereitstellt als ein Innenlaschen-Kettenglied (52),
und die Fahrrad-Rollenkette (50) abgewiesen wird, wenn sich an der Umfangsposition des Fangzahns (44) ein Innenlaschen-Kettenglied (52) befindet.

2. Fahrrad-Hinterradritzelpaarung (11, 13, 15, 17) nach Anspruch 1,
**dadurch gekennzeichnet, dass** der Abgabezahn (38) im Uhrzeigersinn unmittelbar auf die Hochschalt-Vertiefungsformation (36) folgt.

3. Fahrrad-Hinterradritzelpaarung (11, 13, 15, 17) nach Anspruch 1 oder 2,
**dadurch gekennzeichnet, dass** das größere Ritzel (12, 14, 16, 18) längs seines gesamten Umfangs genau einen Hochschaltbereich (34) mit einer Hochschalt-Vertiefungsformation (36) und genau einen Abgabezahn (38) aufweist.

4. Fahrrad-Hinterradritzelpaarung (11, 13, 15, 17) nach einem der vorhergehenden Ansprüche,
**dadurch gekennzeichnet, dass** der Fangzahn (44) im Gegenuhrzeigersinn unmittelbar auf die Herunterschalt-Vertiefungsformation (42) folgt.

5. Fahrrad-Hinterradritzelpaarung (11, 13, 15, 17) nach einem der vorhergehenden Ansprüche,
**dadurch gekennzeichnet, dass** das größere Ritzel (12, 14, 16, 18) längs seines gesamten Umfangs genau einen Herunterschaltbereich (40) und genau einen Fangzahn (44) aufweist.

6. Fahrrad-Hinterradritzelpaarung (11, 13, 15, 17) nach einem der vorhergehenden Ansprüche,
**dadurch gekennzeichnet, dass** im Uhrzeigersinn - bei axialer Betrachtung der Hinterradritzelpaarung (11, 13, 15, 17) im Bezugszustand - zwischen dem Abgabezahn (38) und dem Fangzahn (44) k Zähne gelegen sind, wobei der Abgabezahn (38) und der Fangzahn (44) nicht mitzuzählen sind, und wobei k = T - d gilt, wobei T die Zähnezahl des größeren Ritzels (12, 14, 16, 18) ist und wobei d gleich 5 oder gleich 7 ist.

7. Fahrrad-Hinterradritzelpaarung (11, 13, 15, 17) nach Anspruch 6,
**dadurch gekennzeichnet, dass** dann, wenn T ohne Rest ganzzahlig durch 6 teilbar ist, d gleich 5 ist, und dann, wenn T nicht ohne Rest ganzzahlig durch 6 teilbar ist, d gleich 7 ist.

8. Fahrrad-Hinterradritzelpaarung (11, 13, 15, 17) nach einem der vorhergehenden Ansprüche,
**dadurch gekennzeichnet, dass** im Uhrzeigersinn - bei axialer Betrachtung der Hinterradritzelpaarung (11, 13, 15, 17) im Bezugszustand - zwischen dem Fangzahn (44) und dem Abgabezahn (38) n Zähne gelegen sind, wobei der Fangzahn (44) und der Abgabezahn (38) nicht mitzuzählen sind, wobei n gleich 3 oder gleich 5 ist.

9. Fahrrad-Hinterradritzelpaarung (11, 13, 15, 17) nach Anspruch 8,
**dadurch gekennzeichnet, dass** dann, wenn die Zähnezahl des größeren Ritzels (12, 14, 16, 18) ohne Rest ganzzahlig durch 6 teilbar ist, n gleich 3 ist, und dann, wenn die Zähnezahl des größeren Ritzels (12, 14, 16, 18) nicht ohne Rest ganzzahlig durch 6 teilbar ist, n gleich 5 ist.

10. Fahrrad-Hinterradritzelpaarung (11, 13, 15, 17) nach einem der vorhergehenden Ansprüche,
**dadurch gekennzeichnet, dass** eine vom kleineren Ritzel (10, 12, 14, 16) in axialer Richtung wegweisende Zahnfläche des im Uhrzeigersinn auf den Abgabezahn (38) folgenden Zahns (12b', 14b', 16b', 18b') näher beim kleineren Ritzel (10, 12, 14, 16) gelegen ist als die vom kleineren Ritzel (10, 12, 14, 16) in axialer Richtung wegweisende Zahnfläche des auf diesen Zahn (12b', 14b', 16b', 18b') im Uhrzeigersinn folgenden übernächsten Zahns,
oder/und
dass die vom kleineren Ritzel (10, 12, 14, 16) in axialer Richtung wegweisende Zahnfläche des im Gegenuhrzeigersinn auf den Fangzahn (44) folgenden Zahns (12b", 14b", 16b", 18b") näher beim kleineren Ritzel (10, 12, 14, 16) gelegen ist als die vom kleineren Ritzel (10, 12, 14, 16) in axialer Richtung wegweisende Zahnfläche des auf diesen Zahn (12b", 14b", 16b", 18b") im Gegenuhrzeigersinn folgenden übernächsten Zahns.

11. Fahrrad-Hinterradritzelpaarung (11, 13, 15, 17) nach einem der vorhergehenden Ansprüche,
**dadurch gekennzeichnet, dass** das größere Ritzel (12, 14, 16, 18) oder/und das kleinere Ritzel (10, 12, 14, 16) wenigstens längs eines Umfangsabschnitts in Umfangsrichtung aufeinander folgend alternierend je einen dünneren Zahn (10b, 12b, 14b, 16b, 18b) und einen dickeren Zahn (10a, 12a, 14a, 16a, 18a) aufweisen.

12. Fahrrad-Hinterradritzelkassette (1) mit einer Mehrzahl von zur gemeinsamen schlupffreien Drehung um die Ritzelachse (R) verbundenen Ritzeln (10, 12, 14, 16, 18, 20, 22, 24, 26, 28, 30, 32) jeweils unterschiedlicher Zähnezahl, wobei die Fahrrad-Hinterradritzelkassette (1) wenigstens eine Fahrrad-Hinterradritzelpaarung (11, 13, 15, 17) nach einem der vorhergehenden Ansprüche enthält.

13. Fahrrad-Hinterradritzelkassette (1) nach Anspruch 12,
**dadurch gekennzeichnet, dass** die Fahrrad-Hinterradritzelkassette (1) wenigstens drei Ritzel (12, 14, 16) jeweils unterschiedlicher Zähnezahl aufweist, welche zwei Fahrrad-Hinterradritzelpaarungen (11, 13, 15, 17) nach einem der Ansprüche 1 bis 11 angehören, wobei das Ritzel (12, 14, 16) mit der mittleren Zähnezahl das größere Ritzel (12, 14, 16) der einen Hinterradritzelpaarung (11, 13, 15) und das kleinere Ritzel (12, 14, 16) der anderen Hinterradritzelpaarung (13, 15, 17) ist.

14. Fahrrad-Hinterradritzelkassette (1) nach Anspruch 12 oder 13,
**dadurch gekennzeichnet, dass** alle Ritzel der Hinterradritzelkassette (1) mit Zähnezahlen von 20 oder kleiner Fahrrad-Hinterradritzelpaarungen (11, 13, 15, 17) nach einem der Ansprüche 1 bis 11 bilden.

15. Fahrrad-Hinterradritzelkassette (1) nach einem der Ansprüche 12 bis 14,
**dadurch gekennzeichnet, dass** die Hinterradritzelkassette (1) eine Übergangs-Ritzelgruppe (19) aufweist, umfassend ein 21-T-Ritzel (20) mit 21 Zähnen, welchem ein kleineres 18-T-Ritzel (18) mit 18 Zähnen unmittelbar benachbart ist.

16. Fahrrad-Hinterradritzelkassette (1) nach Anspruch 15,
**dadurch gekennzeichnet, dass**
i) das 21-T-Ritzel (20) in seiner zum 18-T-Ritzel (18) hinweisenden Stirnseite, längs eines Abschnitts seines Umfangs wenigstens zwei Hochschaltbereiche (34) mit je einer Hochschalt-Vertiefungsformation (36) aufweist, wobei jeder Hochschaltbereich (34) dazu ausgebildet und angeordnet ist, an der im Uhrzeigersinn - bei axialer Betrachtung der Übergangs-Ritzelgruppe (19) in einem Bezugszustand, in welchem das 18-T-Ritzel (18) dem Betrachter näher gelegen ist als das 21-T-Ritzel (20) (21) - um die Ritzelachse (R) rotierenden Übergangs-Ritzelgruppe (19) einen Eingriffswechsel der Fahrrad-Rollenkette (50) vom 21-T-Ritzel (20) zum 18-T-Ritzel (18) zu gestatten, wobei am 21-T-Ritzel (20) jeder Hochschalt-Vertiefungsformation (36) jeweils nur genau ein Abgabezahn (38) zugeordnet ist, welcher durch seine Gestalt und Orientierung dazu ausgebildet ist, im Zusammenwirken mit der ihm zugeordneten stirnseitigen Hochschalt-Vertiefungsformation (36) während eines Hochschaltvorgangs vom 21-T-Ritzel (20) auf das 18-T-Ritzel (18) der letzte Zahn zu sein, der zwischen ein Laschenpaar eines Kettengliedes (52) der Fahrrad-Rollenkette (50) eingreift, wobei zwischen den Abgabezähnen (38) von in Umfangsrichtung benachbarten Hochschalt-Vertiefungsformationen (36) eine gerade Anzahl an Zähnen gelegen ist, wobei die Abgabezähne (38) der benachbarten Hochschalt-Vertiefungsformationen (36) nicht mitzuzählen sind,
oder/und
ii) das 21-T-Ritzel (20) in seiner zum 18-T-Ritzel (18) hinweisenden Stirnseite, längs seines Umfangs wenigstens zwei Herunterschaltbereiche (40) mit je einer Herunterschalt-Vertiefungsformation (42) aufweist, wobei jeder Herunterschaltbereich (40) dazu ausgebildet ist, an der im Uhrzeigersinn - bei axialer Betrachtung der Übergangs-Ritzelgruppe (19) im Bezugszustand - um die Ritzelachse (R) rotierenden Übergangs-Ritzelgruppe (19) einen Eingriffswechsel der Fahrrad-Rollenkette (50) vom 18-T-Ritzel (18) zum 21-T-Ritzel (20) zu gestatten, wobei am 21-T-Ritzel (20) jeder Herunterschalt-Vertiefungsformation (42) jeweils nur genau ein Fangzahn (44) zugeordnet ist, welcher durch seine Gestalt und Orientierung dazu ausgebildet ist, im Zusammenwirken mit der ihm zugeordneten stirnseitigen Herunterschalt-Vertiefungsformation (42) während eines Herunterschaltvorgangs vom 18-T-Ritzel (18) auf das 21-T-Ritzel (20) der erste Zahn zu sein, der zwischen Laschen eines Kettengliedes (52) der Fahrrad-Rollenkette (50) eingreift, wobei zwischen den Fangzähnen (44) von in Umfangsrichtung benachbarten Herunterschalt-Vertiefungsformationen (42) eine gerade Anzahl an Zähnen gelegen ist, wobei die Fangzähne (44) der benachbarten Herunterschalt-Vertiefungsformationen (42) nicht mitzuzählen sind.

17. Fahrrad-Hinterradritzelkassette (1) nach Anspruch 16,
**dadurch gekennzeichnet, dass** das 21-T-Ritzel (20)
i) genau drei Hochschaltbereiche (34) mit je einer Hochschalt-Vertiefungsformation (36) und je genau einem Abgabezahn (38) aufweist, wobei zwischen den Abgabezähnen (38) von in Umfangsrichtung benachbarten Hochschalt-Vertiefungsformationen (36) jeweils sechs Zähne gelegen sind, wobei die Abgabezähne (38) der benachbarten Hochschalt-Vertiefungsformationen (36) nicht mitzuzählen sind,
oder/und
ii) genau drei Herunterschaltbereiche (40) mit je einer Herunterschalt-Vertiefungsformation (42) und je genau einem Fangzahn (44) aufweist, wobei zwischen den Fangzähnen (44) von in Umfangsrichtung benachbarten Herunterschalt-Vertiefungsformationen (42) jeweils sechs Zähne gelegen sind, wobei die Fangzähne (44) der benachbarten Herunterschalt-Vertiefungsformationen (42) nicht mitzuzählen sind.

18. Fahrrad-Hinterradritzelkassette (1) nach Anspruch 16 oder 17,
**dadurch gekennzeichnet, dass** die Übergangs-Ritzelgruppe (19) zusätzlich ein 24-T-Ritzel (22) mit 24 Zähnen aufweist, wobei das 21-T-Ritzel (20) axial zwischen dem 24-T-Ritzel und dem 18-T-Ritzel (18) angeordnet ist.

19. Fahrrad-Hinterradritzelkassette (1) nach Anspruch 15,
**dadurch gekennzeichnet, dass**
i) das 24-T-Ritzel (22) in seiner zum 21-T-Ritzel (20) hinweisenden Stirnseite, längs eines Abschnitts seines Umfangs wenigstens zwei Hochschaltbereiche (34) mit je einer Hochschalt-Vertiefungsformation (36) aufweist, wobei jeder Hochschaltbereich (34) dazu ausgebildet und angeordnet ist, an der im Uhrzeigersinn - bei axialer Betrachtung der Übergangs-Ritzelgruppe (19) in einem Bezugszustand, in welchem das 21-T-Ritzel (20) dem Betrachter näher gelegen ist als das 24-T-Ritzel (22) - um die Ritzelachse (R) rotierenden Übergangs-Ritzelgruppe (19) einen Eingriffswechsel der Fahrrad-Rollenkette (50) vom 24-T-Ritzel (22) zum 21-T-Ritzel (20) zu gestatten, wobei am 24-T-Ritzel (22) jeder Hochschalt-Vertiefungsformation (36) jeweils nur genau ein Abgabezahn (38) zugeordnet ist, welcher durch seine Gestalt und Orientierung dazu ausgebildet ist, im Zusammenwirken mit der ihm zugeordneten stirnseitigen Hochschalt-Vertiefungsformation (36) während eines Hochschaltvorgangs vom 24-T-Ritzel (22) auf das 21-T-Ritzel (20) der letzte Zahn zu sein, der zwischen ein Laschenpaar eines Kettengliedes (52) der Fahrrad-Rollenkette (50) eingreift, wobei zwischen den Abgabezähnen (38) von in Umfangsrichtung benachbarten Hochschalt-Vertiefungsformationen (36) eine ungerade Anzahl an Zähnen gelegen ist, wobei die Abgabezähne (38) der benachbarten Hochschalt-Vertiefungsformationen (36) nicht mitzuzählen sind,
oder/und
ii) das 24-Ritzel (24) in seiner zum 21-T-Ritzel (20) hinweisenden Stirnseite, längs seines Umfangs wenigstens zwei Herunterschaltbereiche (40) mit je einer Herunterschalt-Vertiefungsformation (42) aufweist, wobei jeder Herunterschaltbereich (40) dazu ausgebildet ist, an der im Uhrzeigersinn - bei axialer Betrachtung der Übergangs-Ritzelgruppe (19) im Bezugszustand - um die Ritzelachse (R) rotierenden Übergangs-Ritzelgruppe (19) einen Eingriffswechsel der Fahrrad-Rollenkette (50) vom 21-T-Ritzel (20) zum 24-T-Ritzel (24) zu gestatten, wobei am 24-T-Ritzel (24) jeder Herunterschalt-Vertiefungsformation (42) jeweils nur genau ein Fangzahn (44) zugeordnet ist, welcher durch seine Gestalt und Orientierung dazu ausgebildet ist, im Zusammenwirken mit der ihm zugeordneten stirnseitigen Herunterschalt-Vertiefungsformation (42) während eines Herunterschaltvorgangs vom 21-T-Ritzel (20) auf das 24-T-Ritzel (22) der erste Zahn zu sein, der zwischen Laschen eines Kettengliedes (52) der Fahrrad-Rollenkette (50) eingreift, wobei zwischen den Fangzähnen (44) von in Umfangsrichtung benachbarten Herunterschalt-Vertiefungsformationen (42) eine ungerade Anzahl an Zähnen gelegen ist, wobei die Fangzähne (44) der benachbarten Herunterschalt-Vertiefungsformationen (42) nicht mitzuzählen sind.

20. Fahrrad-Hinterradritzelkassette (1) nach Anspruch 19,
**dadurch gekennzeichnet, dass** das 24-T-Ritzel (22)
i) genau drei Hochschaltbereiche (34) mit je einer Hochschalt-Vertiefungsformation (36) und je genau einem Abgabezahn (38) aufweist, wobei zwischen den Abgabezähnen (38) von in Umfangsrichtung benachbarten Hochschalt-Vertiefungsformationen (36) jeweils sieben Zähne gelegen sind, wobei die Abgabezähne (38) der benachbarten Hochschalt-Vertiefungsformationen (36) nicht mitzuzählen sind,
oder/und
ii) genau drei Herunterschaltbereiche (40) mit je einer Herunterschalt-Vertiefungsformation (42) und je genau einem Fangzahn (44) aufweist, wobei zwischen den Fangzähnen (44) von in Umfangsrichtung benachbarten Herunterschalt-Vertiefungsformationen (42) jeweils sieben Zähne gelegen sind, wobei die Fangzähne (44) der benachbarten Herunterschalt-Vertiefungsformationen (42) nicht mitzuzählen sind.

21. Fahrrad-Hinterradritzelkassette (1) nach einem der Ansprüche 12 bis 20,
**dadurch gekennzeichnet, dass** die Fahrrad-Hinterradritzelkassette (1) eine Zwölffach-Ritzelkassette (1) ist mit folgender Zähnezahl-Abstufung: 10 - 12 - 14 - 16 - 18 - 21 - 24 - 28 - 32 - 38 - 44 - 52.

22. Fahrrad-Antriebsbaugruppe, umfassend eine Fahrrad-Hinterradritzelpaarung (11, 13, 15, 17) nach einem der Ansprüche 1 bis 11 oder eine Fahrrad-Hinterradritzelkassette (1) nach einem der Ansprüche 12 bis 21, mit einer zum kämmenden, kraftübertragenden Eingriff mit den Ritzeln (10, 12, 14, 16, 18, 20, 22, 24, 26, 28, 30, 32) der Fahrrad-Hinterradritzelpaarung (11, 13, 15, 17) bzw. der Fahrrad-Hinterradritzelkassette (1) ausgebildeten Fahrrad-Rollenkette (50), wobei die Fahrrad-Rollenkette (50) eine Mehrzahl von in einem Teilungsabstand aufeinander folgenden Kettenrollen aufweist, welche durch Paare paralleler Laschen miteinander verbunden sind, wobei die Fahrrad-Rollenkette (50) in Kettenumlaufrichtung alternierend Innenlaschenpaare mit kleinerem Laschenabstand und Außenlaschenpaare mit größerem Laschenabstand aufeinander folgend aufweist.

23. Fahrrad-Antriebsbaugruppe nach Anspruch 22,
**dadurch gekennzeichnet, dass** für wenigstens eine Fahrrad-Hinterradritzelpaarung (11, 13, 15, 17) gilt, dass bei einem Schaltvorgang, bei welchem die Fahrrad-Rollenkette (50) von einem Ritzel (10, 12, 14, 16, 18) auf ein diesem axial benachbartes Ritzel (10, 12, 14, 16, 18) umgelegt wird, zwischen dem letzten Kettenglied (52), das mit dem noch kettenführenden Ritzel (10, 12, 14, 16, 18) in Eingriff ist, und dem ersten Kettenglied (52), das mit dem zukünftig kettenführenden Ritzel (10, 12, 14, 16, 18) in Eingriff kommt oder ist, sich genau ein Innenlaschen-Kettenglied befindet.

## Claims

1. Bicycle rear-wheel sprocket pairing (11, 13, 15, 17) for engaging in a force-transmitting manner with a bicycle roller chain (50), wherein the rear-wheel sprocket pairing (11, 13, 15, 17) is rotatable about a sprocket axis (R), wherein the sprocket axis (R) defines an axial direction running along the sprocket axis (R), a radial direction running so as to be orthogonal to the sprocket axis (R), and a circumferential direction encircling the sprocket axis (R), wherein the rear-wheel sprocket pairing (11, 13, 15, 17) comprises a larger sprocket (12, 14, 16, 18) and a coaxial smaller sprocket (10, 12, 14, 16) which for rotating conjointly in a slip-free manner about the sprocket axis (R) is connected to said larger sprocket (12, 14, 16, 18) so as to be axially directly adjacent to the latter, wherein the larger sprocket (12, 14, 16, 18) has an even tooth count of equal to or less than 22 teeth, and wherein the difference in the tooth count between the larger and the smaller sprocket (10, 12, 14, 16) is exactly two teeth, wherein
i) the larger sprocket (12, 14, 16, 18) in the end side thereof that points towards the smaller sprocket (10, 12, 14, 16), along a portion of the circumference thereof has an upshift region (34) having an upshift depression formation (36), wherein the upshift region (34), when axially viewing the rear-wheel sprocket pairing (11, 13, 15, 17) in a reference state in which the smaller sprocket (10, 12, 14, 16) lies closer to the observer than the larger sprocket (12, 14, 16, 18), is configured and disposed so as to permit on the rear-wheel sprocket pairing (11, 13, 15, 17) rotating in the clockwise direction about the sprocket axis (R) a change of engagement of the bicycle roller chain (50) from the larger to the smaller sprocket (10, 12, 14, 16), wherein on the larger sprocket (12, 14, 16, 18) the upshift depression formation (36) is assigned only exactly one release tooth (38) which by way of the design and orientation thereof, when interacting with the end-side upshift depression formation (36) during an upshift procedure from the larger sprocket (12, 14, 16, 18) to the smaller sprocket (10, 12, 14, 16), is configured to be the last tooth that engages between a link plate pair of a chain link (52) of the bicycle roller chain (50); and
ii) the larger sprocket (12, 14, 16, 18) in the end side thereof that points towards the smaller sprocket (10, 12, 14, 16), along the circumference thereof has a downshift region (40) having a downshift depression formation (42), wherein the downshift region (40), when axially viewing the rear-wheel sprocket pairing (11, 13, 15, 17) in the reference state, is configured so as to permit on the rear-wheel sprocket pairing (11, 13, 15, 17) rotating in the clockwise direction about the sprocket axis (R) a change of engagement of the bicycle roller chain (50) from the smaller to the larger sprocket (12, 14, 16, 18), wherein on the larger sprocket (12, 14, 16, 18) the downshift depression formation (42) is assigned only exactly one catch tooth (44) which by way of the design and orientation thereof, when interacting with the end-side downshift depression formation (42) during a downshift procedure from the smaller sprocket (10, 12, 14, 16) to the larger sprocket (12, 14, 16, 18), is configured to be the first tooth that engages between link plates of a chain link of the bicycle roller chain (50), wherein the catch tooth (44) has such a configuration and orientation that it only engages in the bicycle roller chain (50) which is intended to be placed around the larger pinion (12, 14, 16, 18) when an outer link plate chain link (54) is located at the circumferential position of the catch tooth (44) which provides a greater engagement space than an inner link plate chain link (52), and the bicycle roller chain (50) is deflected when an inner link plate chain link (52) is located at the circumferential position of the catch tooth (44).

2. Bicycle rear-wheel sprocket pairing (11, 13, 15, 17) according to Claim 1,
**characterized in that** the release tooth (38) in the clockwise direction is directly contiguous to the upshift depression formation (36).

3. Bicycle rear-wheel sprocket pairing (11, 13, 15, 17) according to Claim 1 or 2,
**characterized in that** the larger sprocket (12, 14, 16, 18) along the entire circumference thereof has exactly one upshift region (34) having an upshift depression formation (36) and exactly one release tooth (38).

4. Bicycle rear-wheel sprocket pairing (11, 13, 15, 17) according to one of the preceding claims,
**characterized in that** the catch tooth (44) in the counterclockwise direction is directly contiguous to the downshift depression formation (42).

5. Bicycle rear-wheel sprocket pairing (11, 13, 15, 17) according to one of the preceding claims,
**characterized in that** the larger sprocket (12, 14, 16, 18) along the entire circumference thereof has exactly one downshift region (40) and exactly one catch tooth (44).

6. Bicycle rear-wheel sprocket pairing (11, 13, 15, 17) according to one of the preceding claims,
**characterized in that** in the clockwise direction, when axially viewing the rear-wheel sprocket pairing (11, 13, 15, 17) in the reference state, k teeth lie between the release tooth (38) and the catch tooth (44), wherein the release tooth (38) and the catch tooth (44) are not to be included in the count, and wherein k = T - d, where T is the tooth count of the larger sprocket (12, 14, 16, 18) and where d equals 5 or equals 7.

7. Bicycle rear-wheel sprocket pairing (11, 13, 15, 17) according to Claim 6,
**characterized in that,** when T is divisible by 6 into integer numbers without a remainder, d equals 5, and when T is not divisible by 6 into integer numbers without a remainder, d equals 7.

8. Bicycle rear-wheel sprocket pairing (11, 13, 15, 17) according to one of the preceding claims,
**characterized in that** in the clockwise direction, when axially viewing the rear-wheel sprocket pairing (11, 13, 15, 17) in the reference state, n teeth lie between the catch tooth (44) and the release tooth (38), wherein the catch tooth (44) and the release tooth (38) are not to be included in the count, wherein n equals 3 or equals 5.

9. Bicycle rear-wheel sprocket pairing (11, 13, 15, 17) according to Claim 8,
**characterized in that,** when the tooth count of the larger sprocket (12, 14, 16, 18) is divisible by 6 into integer numbers without a remainder, n equals 3, and when the tooth count of the larger sprocket (12, 14, 16, 18) is not divisible by 6 into integer numbers without a remainder, n equals 5.

10. Bicycle rear-wheel sprocket pairing (11, 13, 15, 17) according to one of the preceding claims,
**characterized in that** that a tooth face of the tooth (12b', 14b', 16b', 18b') contiguous to the release tooth (38) in the clockwise direction that points away from the smaller sprocket (10, 12, 14, 16) in an axial direction lies closer to the smaller sprocket (10, 12, 14, 16) than the tooth face of the next but one tooth that follows this tooth (12b', 14b', 16b', 18b') in the clockwise direction that points away from the smaller sprocket (10, 12, 14, 16) in an axial direction,
or/and
**in that** the tooth face of the tooth (12b", 14b", 16b", 18b") following the catch tooth (44) in the counterclockwise direction that points away from the smaller sprocket (10, 12, 14, 16) in an axial direction lies closer to the smaller sprocket (10, 12, 14, 16) than the tooth face of the next but one tooth that follows this tooth (12b", 14b", 16b", 18b") in the counterclockwise direction that points away from the smaller sprocket (10, 12, 14, 16) in an axial direction.

11. Bicycle rear-wheel sprocket pairing (11, 13, 15, 17) according to one of the preceding claims,
**characterized in that** the larger sprocket (12, 14, 16, 18) or/and the smaller sprocket (10, 12, 14, 16), alternating sequentially in the circumferential direction along at least one circumferential portion, have/has in each case one thinner tooth (10b, 12b, 14b, 16b, 18b) and one thicker tooth (10a, 12a, 14a, 16a, 18a).

12. Bicycle rear-wheel sprocket cassette (1) having a plurality of sprockets (10, 12, 14, 16, 18, 20, 22, 24, 26, 28, 30, 32) which are connected for conjointly rotating in a slip-free manner about the sprocket axis (R) and have in each case a different tooth count, wherein the bicycle rear-wheel sprocket cassette (1) contains at least one bicycle rear-wheel sprocket pairing (11, 13, 15, 17) according to one of the preceding claims.

13. Bicycle rear-wheel sprocket cassette (1) according to Claim 12,
**characterized in that** the bicycle rear-wheel sprocket cassette (1) has at least three sprockets (12, 14, 16) which have in each case a different tooth count and are associated with two bicycle rear-wheel sprocket pairings (11, 13, 15, 17) according to one of Claims 1 to 11, wherein the sprocket (12, 14, 16) having the medium tooth count is the larger sprocket (12, 14, 16) of the one rear-wheel sprocket pairing (11, 13, 15) and the smaller sprocket (12, 14, 16) of the other rear-wheel sprocket pairing (13, 15, 17).

14. Bicycle rear-wheel sprocket cassette (1) according to Claim 12 or 13,
**characterized in that** all the sprockets of the rear-wheel sprocket cassette (1) having tooth counts of 20 or less form bicycle rear-wheel sprocket pairings (11, 13, 15, 17) according to one of Claims 1 to 11.

15. Bicycle rear-wheel sprocket cassette (1) according to one of Claims 12 to 14,
**characterized in that** the rear-wheel sprocket cassette (1) has a transition sprocket group (19) comprising a 21-T sprocket (20) having 21 teeth, a smaller 18-T sprocket (18) having 18 teeth being directly adjacent thereto.

16. Bicycle rear-wheel sprocket cassette (1) according to Claim 15,
**characterized in that**
i) the 21-T sprocket (20) in the end side thereof that points towards the 18-T sprocket (18), along a portion of the circumference thereof has at least two upshift regions (34) having in each case one upshift depression formation (36), wherein each upshift region (34), when axially viewing the transition sprocket group (19) in a reference state in which the 18-T sprocket (18) lies closer to the observer than the 21-T sprocket (20) (21), is configured and disposed so as to permit on the transition sprocket group (19) rotating in the clockwise direction about the sprocket axis (R) a change of engagement of the bicycle roller chain (50) from the 21-T sprocket (20) to the 18-T sprocket (18), wherein on the 21-T sprocket (20) each upshift depression formation (36) is in each case assigned only exactly one release tooth (38) which by way of the design and orientation thereof, when interacting with the end-side upshift depression formation (36) assigned thereto during an upshift procedure from the 21-T sprocket (20) to the 18-T sprocket (18), is configured to be the last tooth that engages between a link plate pair of a chain link (52) of the bicycle roller chain (50) wherein an even number of teeth lie between the release teeth (38) of upshift depression formations (36) that are adjacent in the circumferential direction, wherein the release teeth (38) of the adjacent upshift depression formations (36) are not to be included in the count;
or/and
ii) the 21-T sprocket (20) in the end side thereof that points towards the 18-T sprocket (18), along the circumference thereof has at least two downshift regions (40) having in each case one downshift depression formation (42), wherein each downshift region (40), when axially viewing the transition sprocket group (19) in the reference state, is configured so as to permit on the transition sprocket group (19) rotating in the clockwise direction about the sprocket axis (R) a change of engagement of the bicycle roller chain (50) from the 18-T sprocket (18) to the 21-T sprocket (20), wherein on the 21-T sprocket (20) each downshift depression formation (42) is in each case assigned exactly only one catch tooth (44) which by way of the design and orientation thereof, when interacting with the end-side downshift depression formation (42) assigned thereto during a downshift procedure from the 18-T sprocket (18) to the 21-T sprocket (20) is configured to be the first tooth that engages between link plates of a chain link (52) of the bicycle roller chain (50), wherein an even number of teeth lie between the catch teeth (44) of downshift depression formations (42) that are adjacent in the circumferential direction, wherein the catch teeth (44) of the adjacent downshift depression formations (42) are not to be included in the count.

17. Bicycle rear-wheel sprocket cassette (1) according to Claim 16,
**characterized in that** the 21-T sprocket (20)
i) has exactly three upshift regions (34) having in each case one upshift depression formation (36) and in each case exactly one release tooth (38), wherein six teeth lie in each case between the release teeth (38) of upshift depression formations (36) that are adjacent in the circumferential direction, wherein the release teeth (38) of the adjacent upshift depression formations (36) are not to be included in the count,
or/and
ii) has exactly three downshift regions (40) having in each case one downshift depression formation (42) and in each case exactly one catch tooth (44), wherein six teeth lie in each case between the catch teeth (44) of downshift depression formations (42) that are adjacent in the circumferential direction, wherein the catch teeth (44) of the adjacent downshift depression formations (42) are not to be included in the count.

18. Bicycle rear-wheel sprocket cassette (1) according to Claim 16 or 17,
**characterized in that** the transition sprocket group (19) additionally has a 24-T sprocket (22) having 24 teeth, wherein the 21-T sprocket (20) is axially disposed between the 24-T sprocket and the 18-T sprocket (18).

19. Bicycle rear-wheel sprocket cassette (1) according to Claim 15,
**characterized in that**
i) the 24-T sprocket (22) in the end side thereof that points towards the 21-T sprocket (20), along a portion of the circumference thereof, has at least two upshift regions (34) having in each case one upshift depression formation (36), wherein each upshift region (34), when axially viewing the transition sprocket group (19) in a reference state in which the 21-T sprocket (20) lies closer to the observer than the 24-T sprocket (22), is configured and disposed so as to permit on the transition sprocket group (19) rotating in the clockwise direction about the sprocket axis (R) a change of engagement of the bicycle roller chain (50) from the 24-T sprocket (22) to the 21-T sprocket (20), wherein on the 24-T sprocket (22) each upshift depression formation (36) is assigned only exactly one release tooth (38) which by way of the design and orientation thereof, when interacting with the end-side upshift depression formation (36) assigned thereto during an upshift procedure from the 24-T sprocket (22) to the 21-T sprocket (20), is configured to be the last tooth that engages between a link plate pair of a chain link (52) of the bicycle roller chain (50), wherein an uneven number of teeth lie between the release teeth (38) of upshift depression formations (36) that are adjacent in the circumferential direction, wherein the release teeth (38) of the adjacent upshift depression formations (36) are not to be included in the count,
or/and
ii) the 24-T sprocket (24) in the end side thereof that points towards the 21-T sprocket (20), along the circumference thereof has at least two downshift regions (40) having in each case one downshift depression formation (42), wherein each downshift region (40), when axially viewing the transition sprocket group (19) in the reference state, is configured so as to permit on the transition sprocket group (19) rotating in the clockwise direction about the sprocket axis (R) a change of engagement of the bicycle roller chain (50) from the 21-T sprocket (20) to the 24-T sprocket (24), wherein the 24-T sprocket (24) of each downshift depression formation (42) is in each case assigned only exactly one catch tooth (44) which by way of the design and the orientation thereof, when interacting with the end-side downshift depression formation (42) assigned thereto during a downshift procedure from the 21-T sprocket (20) to the 24-T sprocket (22) is configured to be the first tooth that engages between link plates of a chain link (52) of the bicycle roller chain (50), wherein an uneven number of teeth lie between the catch teeth (44) of downshift depression formations (42) that are adjacent in the circumferential direction, wherein the catch teeth (44) of the adjacent downshift depression formations (42) are not to be included in the count.

20. Bicycle rear-wheel sprocket cassette (1) according to Claim 19,
**characterized in that** the 24-T sprocket (22)
i) has exactly three upshift regions (34) having in each case one upshift depression formation (36) and in each case exactly one release tooth (38), wherein seven teeth lie in each case between the release teeth (38) of upshift depression formations (36) that are adjacent in the circumferential direction, wherein the release teeth (38) of the adjacent upshift depression formations (36) are not to be included in the count,
or/and
ii) has exactly three downshift regions (40) having in each case one downshift depression formation (42) and exactly one catch tooth (44), wherein seven teeth lie in each case between the catch teeth (44) of downshift depression formations (42) that are adjacent in the circumferential direction, wherein the catch teeth (44) of the adjacent downshift depression formations (42) are not to be included in the count.

21. Bicycle rear-wheel sprocket cassette (1) according to one of Claims 12 to 20,
**characterized in that** the bicycle rear-wheel sprocket cassette (1) is a twelve-fold sprocket cassette (1) having the following tooth count increments: 10 - 12 - 14 - 16 - 18 - 21 - 24 - 28 - 32 - 38 - 44 - 52.

22. Bicycle drive assembly, comprising a bicycle rear-wheel sprocket pairing (11, 13, 15, 17) according to one of Claims 1 to 11 or a bicycle rear-wheel sprocket cassette (1) according to one of Claims 12 to 21, having a bicycle roller chain (50) which is configured for engaging in a meshing, force-transmitting manner with the sprockets (10, 12, 14, 16, 18, 20, 22, 24, 26, 28, 30, 32) of the bicycle rear-wheel sprocket pairing (11, 13, 15, 17) or the bicycle rear-wheel sprocket cassette (1), respectively, wherein the bicycle roller chain (50) has a plurality of chain rollers which are mutually successive at a pitch spacing and which are connected to one another by pairs of parallel link plates, wherein the bicycle roller chain (50) in the chain revolving direction has inner link plate pairs having a smaller link plate spacing alternating sequentially with outer link plate pairs having a larger link plate spacing.

23. Bicycle drive assembly according to Claim 22,
**characterized in that** it applies to at least one bicycle rear-wheel sprocket pairing (11, 13, 15, 17) that in a shift procedure in which the bicycle roller chain (50) is repositioned from one sprocket (10, 12, 14, 16, 18) to a sprocket (10, 12, 14, 16, 18) axially adjacent thereto, exactly one inner link-plate chain link is situated between the last chain link (52) which engages with the still chain-guiding sprocket (10, 12, 14, 16, 18) and the first chain link (52) which comes to engage, or engages, with the future chain-guiding sprocket (10, 12, 14, 16, 18).

## Revendications

1. Appariement de pignons de roue arrière de bicyclette (11, 13, 15, 17) pour l'engrènement avec transmission de force avec une chaîne à rouleaux pour bicyclette (50), dans lequel l'appariement de pignons de roue arrière (11, 13, 15, 17) peut tourner autour d'un axe de pignon (R), dans lequel l'axe de pignon (R) définit une direction axiale s'étendant le long de l'axe de pignon (R), une direction radiale s'étendant orthogonalement à l'axe de pignon (R) et une direction périphérique s'étendant autour de l'axe de pignon (R), dans lequel l'appariement de pignons de roue arrière (11, 13, 15, 17) comprend un plus grand pignon (12, 14, 16, 18) et un plus petit pignon (10, 12, 14, 16), immédiatement adjacent axialement au plus grand pignon (12, 14, 16, 18), coaxial, relié à celui-ci pour une rotation commune sans patinage autour de l'axe de pignon (R), dans lequel le plus grand pignon (12, 14, 16, 18) présente un nombre pair de dents inférieur ou égal à 22 dents et dans lequel la différence de nombres de dents entre le plus grand et le plus petit pignon (10, 12, 14, 16) vaut exactement deux dents, dans lequel
i) le plus grand pignon (12, 14, 16, 18) présente, dans son côté frontal tourné vers le plus petit pignon (10, 12, 14, 16), le long d'une partie de sa périphérie, une région de passage au rapport supérieur (34) comportant une formation de renfoncement de passage au rapport supérieur (36), dans lequel la formation de renfoncement de passage au rapport supérieur (34) est réalisée et disposée pour permettre à l'appariement de pignons de roue arrière (11, 13, 15, 17) tournant autour de l'axe de pignon (R) dans le sens des aiguilles d'une montre, lorsque l'appariement de pignons de roue arrière (11, 13, 15, 17) est observé axialement dans un état de référence dans lequel le plus petit pignon (10, 12, 14, 16) se situe plus près de l'observateur que le plus grand pignon (12, 14, 16, 18), de changer l'engrènement de la chaîne à rouleaux pour bicyclette (50) du plus grand au plus petit pignon (10, 12, 14, 16), dans lequel seulement une dent de sortie (38) exactement est associée à la formation de renfoncement de passage au rapport supérieur (36) sur le plus grand pignon (12, 14, 16, 18), laquelle dent, du fait de sa forme et de son orientation, en coopération avec la formation de renfoncement de passage au rapport supérieur (36) frontale pendant une opération de passage au rapport supérieur du plus grand pignon (12, 14, 16, 18) au plus petit pignon (10, 12, 14, 16), est réalisée pour être la dernière dent qui s'engrène entre une paire de plaques d'un maillon de chaîne (52) de la chaîne à rouleaux pour bicyclette (50),
et
ii) le plus grand pignon (12, 14, 16, 18) présente, dans son côté frontal tourné vers le plus petit pignon (10, 12, 14, 16), le long de sa périphérie, une région de passage au rapport inférieur (40) comportant une formation de renfoncement de passage au rapport inférieur (42), dans lequel la région de passage au rapport inférieur (40) est réalisée pour permettre à l'appariement de pignons de roue arrière (11, 13, 15, 17) tournant autour de l'axe de pignon (R) dans le sens des aiguilles d'une montre, lorsque l'appariement de pignons de roue arrière (11, 13, 15, 17) est observé axialement dans l'état de référence, de changer l'engrènement de la chaîne à rouleaux pour bicyclette (50) du plus petit au plus grand pignon (12, 14, 16, 18), dans lequel seulement une dent d'accrochage (44) exactement est associée à la formation de renfoncement de passage au rapport inférieur (42) sur le plus grand pignon (12, 14, 16, 18), laquelle dent, du fait de sa forme et de son orientation, en coopération avec la formation de renfoncement de passage au rapport inférieur (42) frontale pendant une opération de passage au rapport inférieur du plus petit pignon (10, 12, 14, 16) au plus grand pignon (12, 14, 16, 18), est réalisée pour être la première dent qui s'engrène entre des plaques d'un maillon de chaîne de la chaîne à rouleaux pour bicyclette (50),
dans lequel la dent d'accrochage (44) présente une configuration et une orientation telles qu'elle ne s'engrène dans la chaîne à rouleaux pour bicyclette (50) devant être déplacée sur le plus grand pignon (12, 14, 16, 18) que lorsqu'un maillon de chaîne à plaques extérieures (54) se trouve à la position périphérique de la dent d'accrochage (44), lequel maillon de chaîne à plaques extérieures fournit un plus grand espace d'engrènement qu'un maillon de chaîne à plaques intérieures (52),
et la chaîne à rouleaux pour bicyclette (50) est repoussée lorsqu'un maillon de chaîne à plaques intérieures (52) se trouve à la position périphérique de la dent d'accrochage (44).

2. Appariement de pignons de roue arrière de bicyclette (11, 13, 15, 17) selon la revendication 1,
**caractérisé en ce que** la dent de sortie (38) vient immédiatement après la formation de renfoncement de passage au rapport supérieur (36) dans le sens des aiguilles d'une montre.

3. Appariement de pignons de roue arrière de bicyclette (11, 13, 15, 17) selon la revendication 1 ou 2, **caractérisé en ce que** le plus grand pignon (12, 14, 16, 18) présente le long de toute sa périphérie exactement une région de passage au rapport supérieur (34) comportant une formation de renfoncement de passage au rapport supérieur (36) et exactement une dent de sortie (38).

4. Appariement de pignons de roue arrière de bicyclette (11, 13, 15, 17) selon l'une des revendications précédentes,
**caractérisé en ce que** la dent d'accrochage (44) vient immédiatement après la formation de renfoncement de passage au rapport inférieur (42) dans le sens contraire des aiguilles d'une montre.

5. Appariement de pignons de roue arrière de bicyclette (11, 13, 15, 17) selon l'une des revendications précédentes,
**caractérisé en ce que** le plus grand pignon (12, 14, 16, 18) présente le long de toute sa périphérie exactement une région de passage au rapport inférieur (40) et exactement une dent d'accrochage (44).

6. Appariement de pignons de roue arrière de bicyclette (11, 13, 15, 17) selon l'une des revendications précédentes,
**caractérisé en ce que**, dans le sens des aiguilles d'une montre, lorsque l'appariement de pignons de roue arrière (11, 13, 15, 17) est observé axialement dans l'état de référence, k dents sont placées entre la dent de sortie (38) et la dent d'accrochage (44), la dent de sortie (38) et la dent d'accrochage (44) ne devant pas être comptées, et avec k = T - d, T étant le nombre de dents du plus grand pignon (12, 14, 16, 18) et d étant égal à 5 ou égal à 7.

7. Appariement de pignons de roue arrière de bicyclette (11, 13, 15, 17) selon la revendication 6,
**caractérisé en ce que**, lorsque T est divisible par 6 en un nombre entier sans reste, d est égal à 5, et lorsque T n'est pas divisible par 6 en un nombre entier sans reste, d est égal à 7.

8. Appariement de pignons de roue arrière de bicyclette (11, 13, 15, 17) selon l'une des revendications précédentes,
**caractérisé en ce que**, dans le sens des aiguilles d'une montre, lorsque l'appariement de pignons de roue arrière (11, 13, 15, 17) est observé axialement dans l'état de référence, n dents sont placées entre la dent d'accrochage (44) et la dent de sortie (38), la dent d'accrochage (44) et la dent de sortie (38) ne devant pas être comptées, n étant égal à 3 ou égal à 5.

9. Appariement de pignons de roue arrière de bicyclette (11, 13, 15, 17) selon la revendication 8,
**caractérisé en ce que**, lorsque le nombre de dents du plus grand pignon (12, 14, 16, 18) est divisible par 6 en un nombre entier sans reste, n est égal à trois 3, et lorsque le nombre de dents du plus grand pignon (12, 14, 16, 18) n'est pas divisible par 6 en un nombre entier sans reste, n est égal à 5.

10. Appariement de pignons de roue arrière de bicyclette (11, 13, 15, 17) selon l'une des revendications précédentes,
**caractérisé en ce qu'**une surface de dent, détournée du plus petit pignon (10, 12, 14, 16) dans la direction axiale, de la dent (12b', 14b', 16b', 18b') venant après la dent de sortie (38) dans le sens des aiguilles d'une montre est située plus près du petit pignon (10, 12, 14, 16) que la surface de dent, détournée du plus petit pignon (10, 12, 14, 16) dans la direction axiale, de la deuxième dent venant après cette dent (12b', 14b', 16b', 18b') dans le sens des aiguilles d'une montre,
et/ou
**en ce que** la surface de dent, détournée du plus petit pignon (10, 12, 14, 16) dans la direction axiale, de la dent (12b'', 14b'', 16b'', 18b'') venant après la dent d'accrochage (44) dans le sens contraire des aiguilles d'une montre est située plus près du petit pignon (10, 12, 14, 16) que la surface de dent, détournée du plus petit pignon (10, 12, 14, 16) dans la direction axiale, de la deuxième dent venant après cette dent (12b'', 14b", 16b", 18b") dans le sens contraire des aiguilles d'une montre.

11. Appariement de pignons de roue arrière de bicyclette (11, 13, 15, 17) selon l'une des revendications précédentes,
**caractérisé en ce que** le plus grand pignon (12, 14, 16, 18) et/ou le plus petit pignon (10, 12, 14, 16) présente(nt) respectivement une dent plus mince (10b, 12b, 14b, 16b, 18b) et une dent plus épaisse (10a, 12a, 14a, 16a, 18a) en alternance successivement dans la direction périphérique au moins le long d'une partie périphérique.

12. Cassette de pignons de roue arrière de bicyclette (1) comportant une pluralité de pignons (10, 12, 14, 16, 18, 20, 22, 24, 26, 28, 30, 32) reliés pour la rotation commune sans patinage autour de l'axe de pignon (R), respectivement de différents nombres de dents, la cassette de pignons de roue arrière de bicyclette (1) comportant au moins un appariement de pignons de roue arrière de bicyclette (11, 13, 15, 17) selon l'une des revendications précédentes.

13. Cassette de pignons de roue arrière de bicyclette (1) selon la revendication 12,
**caractérisée en ce que** la cassette de pignons de roue arrière de bicyclette (1) présente au moins trois pignons (12, 14, 16) respectivement de différents nombres de dents, lesquels appartiennent à deux appariements de pignons de roue arrière de bicyclette (11, 13, 15, 17) selon l'une des revendications 1 à 11, le pignon (12, 14, 16) présentant le nombre de dents moyen étant le plus grand pignon (12, 14, 16) de l'un des appariements de pignons de roue arrière (11, 13, 15) et le plus petit pignon (12, 14, 16) de l'autre appariement de pignons de roue arrière (13, 15, 17).

14. Cassette de pignons de roue arrière de bicyclette (1) selon la revendication 12 ou 13,
**caractérisée en ce que** tous les pignons de la cassette de pignons de roue arrière (1) présentant des nombres de dents inférieurs ou égaux à 20 forment des appariements de pignons de roue arrière de bicyclette (11, 13, 15, 17) selon l'une des revendications 1 à 11.

15. Cassette de pignons de roue arrière de bicyclette (1) selon l'une des revendications 12 à 14,
**caractérisée en ce que** la cassette de pignons de roue arrière (1) présente un groupe de pignons de transition (19), comprenant un pignon 21-T (20) doté de 21 dents, auquel est directement adjacent un plus petit pignon 18-T (18) doté de 18 dents.

16. Cassette de pignons de roue arrière de bicyclette (1) selon la revendication 15,
**caractérisée en ce que**
i) le pignon 21-T (20) présente, dans son côté frontal tourné vers le pignon 18-T (18), le long d'une partie de sa périphérie, au moins deux régions de passage au rapport supérieur (34) comportant respectivement une formation de renfoncement de passage au rapport supérieur (36), chaque région de passage au rapport supérieur (34) étant réalisée et disposée pour permettre au groupe de pignons de transition (19) tournant autour de l'axe de pignon (R) dans le sens des aiguilles d'une montre, lorsque le groupe de pignons de transition (19) est observé axialement dans un état de référence dans lequel le pignon 18-T (18) se situe plus près de l'observateur que le pignon 21-T (20) (21), de changer l'engrènement de la chaîne à rouleaux pour bicyclette (50) du pignon 21-T (20) au pignon 18-T (18), seulement une dent de sortie (38) exactement étant associée respectivement à chaque formation de renfoncement de passage au rapport supérieur (36) sur le pignon 21-T (20), laquelle dent, du fait de sa forme et de son orientation, en coopération avec la formation de renfoncement de passage au rapport supérieur (36) frontale qui lui est associée pendant une opération de passage au rapport supérieur du pignon 21-T (20) au pignon 18-T (18), étant réalisée pour être la dernière dent qui s'engrène entre une paire de plaques d'un maillon de chaîne (52) de la chaîne à rouleaux pour bicyclette (50), un nombre pair de dents étant situé entre les dents de sortie (38) de formations de renfoncement de passage au rapport supérieur (36) adjacentes dans la direction périphérique, les dents de sortie (38) des formations de renfoncement de passage au rapport supérieur (36) adjacentes ne devant pas être comptées,
et/ou
ii) le pignon 21-T (20) présente, dans son côté frontal tourné vers le pignon 18-T (18), le long de sa périphérie, au moins deux régions de passage au rapport inférieur (40) comportant respectivement une formation de renfoncement de passage au rapport inférieur (42), chaque région de passage au rapport inférieur (40) étant réalisée pour permettre au groupe de pignons de transition (19) tournant autour de l'axe de pignon (R) dans le sens des aiguilles d'une montre, lorsque le groupe de pignons de transition (19) est observé axialement dans l'état de référence, de changer l'engrènement de la chaîne à rouleaux pour bicyclette (50) du pignon 18-T (18) au pignon 21-T (20), seulement une dent d'accrochage (44) exactement étant associée respectivement à chaque formation de renfoncement de passage au rapport inférieur (42) sur le pignon 21-T (20), laquelle dent, du fait de sa forme et de son orientation, en coopération avec la formation de renfoncement de passage au rapport inférieur (42) frontale qui lui est associée pendant une opération de passage au rapport inférieur du pignon 18-T (18) au pignon 21-T (20), étant réalisée pour être la première dent qui s'engrène entre des plaques d'un maillon de chaîne (52) de la chaîne à rouleaux pour bicyclette (50), un nombre pair de dents étant situé entre les dents d'accrochage (44) de formations de renfoncement de passage au rapport inférieur (42) adjacentes dans la direction périphérique, les dents d'accrochage (44) des formations de renfoncement de passage au rapport inférieur (42) adjacentes ne devant pas être comptées.

17. Cassette de pignons de roue arrière de bicyclette (1) selon la revendication 16,
**caractérisée en ce que** le pignon 21-T (20)
i) présente exactement trois régions de passage au rapport supérieur (34) comportant respectivement une formation de renfoncement de passage au rapport supérieur (36) et respectivement exactement une dent de sortie (38), six dents étant placées respectivement entre les dents de sortie (38) de formations de renfoncement de passage au rapport supérieur (36) adjacentes dans la direction périphérique, les dents de sortie (38) des formations de renfoncement de passage au rapport supérieur (36) adjacentes ne devant pas être comptées,
et/ou
ii) présente exactement trois régions de passage au rapport inférieur (40) comportant respectivement une formation de renfoncement de passage au rapport inférieur (42) et respectivement exactement une dent d'accrochage (44), six dents étant placées respectivement entre les dents d'accrochage (44) de formations de renfoncement de passage au rapport inférieur (42) adjacentes dans la direction périphérique, les dents d'accrochage (44) des formations de renfoncement de passage au rapport inférieur (42) adjacentes ne devant pas être comptées.

18. Cassette de pignons de roue arrière de bicyclette (1) selon la revendication 16 ou 17,
**caractérisée en ce que** le groupe de pignons de transition (19) présente en outre un pignon 24-T (22) doté de 24 dents, le pignon 21-T (20) étant disposé axialement entre le pignon 24-T et le pignon 18-T (18).

19. Cassette de pignons de roue arrière de bicyclette (1) selon la revendication 15,
**caractérisée en ce que**
i) le pignon 24-T (22) présente, dans son côté frontal tourné vers le pignon 21-T (20), le long d'une partie de sa périphérie, au moins deux régions de passage au rapport supérieur (34) comportant respectivement une formation de renfoncement de passage au rapport supérieur (36), chaque région de passage au rapport supérieur (34) étant réalisée et disposée pour permettre au groupe de pignons de transition (19) tournant autour de l'axe de pignon (R) dans le sens des aiguilles d'une montre, lorsque le groupe de pignons de transition (19) est observé axialement dans un état de référence dans lequel le pignon 21-T (20) se situe plus près de l'observateur que le pignon 24-T (22), de changer l'engrènement de la chaîne à rouleaux pour bicyclette (50) du pignon 24-T (22) au pignon 21-T (20), seulement une dent de sortie (38) exactement étant associée respectivement à chaque formation de renfoncement de passage au rapport supérieur (36) sur le pignon 24-T (22), laquelle dent, du fait de sa forme et de son orientation, en coopération avec la formation de renfoncement de passage au rapport supérieur (36) frontale qui lui est associée pendant une opération de passage au rapport supérieur du pignon 24-T (22) au pignon 21-T (20), étant réalisée pour être la dernière dent qui s'engrène entre une paire de plaques d'un maillon de chaîne (52) de la chaîne à rouleaux pour bicyclette (50), un nombre impair de dents étant situé entre les dents de sortie (38) de formations de renfoncement de passage au rapport supérieur (36) adjacentes dans la direction périphérique, les dents de sortie (38) des formations de renfoncement de passage au rapport supérieur (36) adjacentes ne devant pas être comptées,
et/ou
ii) le pignon 24 (24) présente, dans son côté frontal tourné vers le pignon 21-T (20), le long de sa périphérie, au moins deux régions de passage au rapport inférieur (40) comportant respectivement une formation de renfoncement de passage au rapport inférieur (42), chaque région de passage au rapport inférieur (40) étant réalisée pour permettre au groupe de pignons de transition (19) tournant autour de l'axe de pignon (R) dans le sens des aiguilles d'une montre, lorsque le groupe de pignons de transition (19) est observé axialement dans l'état de référence, de changer l'engrènement de la chaîne à rouleaux pour bicyclette (50) du pignon 21-T (20) au pignon 24-T (24), seulement une dent d'accrochage (44) exactement étant associée respectivement à chaque formation de renfoncement de passage au rapport inférieur (42) sur le pignon 24-T (24), laquelle dent, du fait de sa forme et de son orientation, en coopération avec la formation de renfoncement de passage au rapport inférieur (42) frontale qui lui est associée pendant une opération de passage au rapport inférieur du pignon 21-T (20) au pignon 24-T (22), étant réalisée pour être la première dent qui s'engrène entre des plaques d'un maillon de chaîne (52) de la chaîne à rouleaux pour bicyclette (50), un nombre impair de dents étant situé entre les dents d'accrochage (44) de formations de renfoncement de passage au rapport inférieur (42) adjacentes dans la direction périphérique, les dents d'accrochage (44) des formations de renfoncement de passage au rapport inférieur (42) adjacentes ne devant pas être comptées.

20. Cassette de pignons de roue arrière de bicyclette (1) selon la revendication 19,
**caractérisée en ce que** le pignon 24-T (22)
i) présente exactement trois régions de passage au rapport supérieur (34) comportant respectivement une formation de renfoncement de passage au rapport supérieur (36) et respectivement exactement une dent de sortie (38), sept dents étant placées respectivement entre les dents de sortie (38) de formations de renfoncement de passage au rapport supérieur (36) adjacentes dans la direction périphérique, les dents de sortie (38) des formations de renfoncement de passage au rapport supérieur (36) adjacentes ne devant pas être comptées, et/ou
ii) présente exactement trois régions de passage au rapport inférieur (40) comportant respectivement une formation de renfoncement de passage au rapport inférieur (42) et respectivement exactement une dent d'accrochage (44), sept dents étant placées respectivement entre les dents d'accrochage (44) de formations de renfoncement de passage au rapport inférieur (42) adjacentes dans la direction périphérique, les dents d'accrochage (44) des formations de renfoncement de passage au rapport inférieur (42) adjacentes ne devant pas être comptées.

21. Cassette de pignons de roue arrière de bicyclette (1) selon l'une des revendications 12 à 20, **caractérisée en ce que** la cassette de pignons de roue arrière de bicyclette (1) est une cassette à douze pignons (1) présentant l'échelonnement de nombres de dents suivant : 10-12-14-16-18-21-24-28-32-38-44-52.

22. Module d'entraînement de bicyclette, comprenant un appariement de pignons de roue arrière de bicyclette (11, 13, 15, 17) selon l'une des revendications 1 à 11 ou une cassette de pignons de roue arrière de bicyclette (1) selon l'une des revendications 12 à 21, comportant une chaîne à rouleaux pour bicyclette (50) réalisée pour l'engrènement avec transmission de force avec les pignons (10, 12, 14, 16, 18, 20, 22, 24, 26, 28, 30, 32) de l'appariement de pignons de roue arrière de bicyclette (11, 13, 15, 17) ou de la cassette de pignons de roue arrière de bicyclette (1), la chaîne à rouleaux pour bicyclette (50) présentant une pluralité de rouleaux de chaîne se suivant les uns les autres à une distance de pas, lesquels rouleaux sont reliés les uns aux autres par le biais de paires de plaques parallèles, la chaîne à rouleaux pour bicyclette (50) présentant de manière successive dans le sens de rotation de la chaîne en alternance des paires de plaques intérieures de plus petite distance entre plaques et des paires de plaques extérieures de plus grande distance entre plaques.

23. Module d'entraînement de bicyclette selon la revendication 22,
**caractérisé en ce que** pour au moins un appariement de pignons de roue arrière de bicyclette (11, 13, 15, 17), lors d'une opération de passage de rapport, lors de laquelle la chaîne à rouleaux pour bicyclette (50) est déplacée d'un pignon (10, 12, 14, 16, 18) à un pignon (10, 12, 14, 16, 18) adjacent axialement à celui-ci, exactement un maillon de chaîne à plaques intérieures se trouve entre le dernier maillon de chaîne (52) qui est en engrènement avec le pignon (10, 12, 14, 16, 18) encore guidant la chaîne et le premier maillon de chaîne (52) qui vient ou est en engrènement avec le pignon (10, 12, 14, 16, 18) qui va guider la chaîne ultérieurement.
